(19) Europäisches Patentamt
European Patent Office
Office européen des brevets

(11) EP 4 745 164 A1

(12) EUROPEAN PATENT APPLICATION
published in accordance with Art. 153(4) EPC

(43) Date of publication:
**20.05.2026 Bulletin 2026/21**

(21) Application number: **24839786.1**

(22) Date of filing: **10.07.2024**

(51) International Patent Classification (IPC):
***C08F 2/44*** *(2006.01)* ***C08L 101/02*** *(2006.01)*
***G02B 5/18*** *(2006.01)* ***G02B 5/30*** *(2006.01)*
***G02B 5/32*** *(2006.01)*

(52) Cooperative Patent Classification (CPC):
**C08F 2/44; C08L 101/02; G02B 5/18; G02B 5/30; G02B 5/32**

(86) International application number:
**PCT/JP2024/024960**

(87) International publication number:
**WO 2025/013896 (16.01.2025 Gazette 2025/03)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **11.07.2023 JP 2023113697**

(71) Applicant: **FUJIFILM Corporation**
**Tokyo 106-8620 (JP)**

(72) Inventors:
- **KODAMA Keisuke**
  **Minamiashigara-shi, Kanagawa 250-0193 (JP)**
- **MACHIDA Takashi**
  **Minamiashigara-shi, Kanagawa 250-0193 (JP)**
- **OKUBO Megumi**
  **Minamiashigara-shi, Kanagawa 250-0193 (JP)**
- **INADA Hiroshi**
  **Minamiashigara-shi, Kanagawa 250-0193 (JP)**

(74) Representative: **HGF**
**HGF Limited**
**4th Floor, 1 City Square**
**Leeds LS1 2ES (GB)**

# (54) COMPOSITION, OPTICALLY ANISOTROPIC LAYER, CURED FILM, AND DIFFRACTION ELEMENT

(57) A first object of the present invention is to provide a composition which forms a liquid crystal layer, in which aligning properties of the liquid crystal compound are excellent and laminatability of the liquid crystal layer after a surface treatment is excellent. In addition, a second object of the present invention is to provide an optically anisotropic layer, a cured film, and a diffraction element.

The composition of the present invention contains a polymerizable liquid crystal compound and a silicon-containing compound, in which the silicon-containing compound satisfies all of the following requirements 1 to 4.

Requirement 1: the silicon-containing compound has no polymerizable group

Requirement 2: the silicon-containing compound includes two or more ring structures in a molecule

Requirement 3: the silicon-containing compound includes a siloxane bond

Requirement 4: the silicon-containing compound has a molecular weight of less than 5,000

FIG. 1

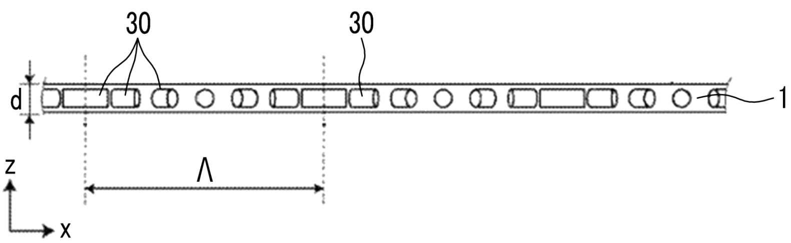




Processed by Luminess, 75001 PARIS (FR)

## Description

## BACKGROUND OF THE INVENTION

1. Field of the Invention

The present invention relates to a composition, an optically anisotropic layer, a cured film, and a diffraction element.

2. Description of the Related Art

An optically anisotropic layer formed by aligning a liquid crystal compound in a predetermined alignment state, using a composition containing a liquid crystal compound (hereinafter, also referred to as "liquid crystal composition"), is used for various applications such as a diffraction element. The liquid crystal composition may contain an aligning agent which can restrict aligning properties of the liquid crystal compound from the air interface side (hereinafter, also referred to as "air interface side aligning agent"), and as such an aligning agent, a fluorine-based aligning agent having a perfluoroalkyl chain, which has a low surface free energy and is likely to be surface-biased, has been widely used in the related art. However, in recent years, a PFAS-free alternative material has been required from the viewpoint of environmental pollution, and a silicon-based aligning agent has been expected as an alternative.

For example, JP6617529B discloses a liquid crystal aligning agent having a polyorganosiloxane structure.

## SUMMARY OF THE INVENTION

In general, as the aligning agent (air interface side aligning agent) which can restrict aligning properties of the liquid crystal compound from the air interface side, an aligning agent formed from the liquid crystal composition, which is likely to be biased to the air interface side in a liquid crystal layer, is used. As a result of studying a silicon-containing compound as an aligning agent which can suitably restrict the aligning properties of the liquid crystal compound, the present inventors have found that, in a case where another layer (adjacent layer) is further formed on a surface of the above-described liquid crystal layer on a side where the air interface side aligning agent is biased, problems such as occurrence of cissing and occurrence of an alignment defect in the adjacent layer may occur depending on a structure of the silicon-containing compound (hereinafter, also referred to as "deteriorated laminatability"). In a case where another layer (adjacent layer) is further formed on the liquid crystal layer, typically, a surface treatment (hereinafter, also simply referred to as "surface treatment") including a solvent washing treatment and a treatment such as a corona treatment, a plasma treatment, and a flame treatment (hereinafter, also referred to as "corona treatment and the like") is performed on a surface of the liquid crystal layer on a side where the adjacent layer is disposed, before the adjacent layer is disposed. By performing the above-described surface treatment, an amount of a component which may be a factor of the deteriorated laminatability, such as a surfactant (hereinafter, also referred to as "component such as a surfactant"), can be reduced. Specific examples of the solvent washing treatment include a treatment of removing the component such as a surfactant by rinsing, with a solvent, the surface of the liquid crystal layer on the side where the adjacent layer is disposed, and a treatment of removing the component such as a surfactant from the liquid crystal layer using a coating liquid containing a solvent by performing the disposition of the adjacent layer with a coating method. The present inventors have found that, depending on the structure of the silicon-containing compound, the laminatability of the liquid crystal layer on which the above-described surface treatment has been performed may be deteriorated, and it is necessary to improve the laminatability.

The present inventors have found that, based on the above-described findings, there is room for consideration of a composition which forms a liquid crystal layer, in which the aligning properties of the liquid crystal compound are excellent and the laminatability of the liquid crystal layer after the surface treatment is excellent (particularly, in a case where another layer (adjacent layer) is laminated on the surface of the liquid crystal layer after the surface treatment, cissing is unlikely to occur and an alignment defect in the adjacent layer is unlikely to occur).

Therefore, an object of the present invention is to provide a composition which forms a liquid crystal layer, in which aligning properties of the liquid crystal compound are excellent and laminatability of the liquid crystal layer after a surface treatment is excellent.

Another object of the present invention is to provide an optically anisotropic layer, a cured film, and a diffraction element.

The present inventors have found that the above-described objects can be achieved by the following configurations.

[1] A composition comprising:

a polymerizable liquid crystal compound; and
a silicon-containing compound,
in which the silicon-containing compound satisfies all of the following requirements 1 to 4,
the requirement 1: the silicon-containing compound has no polymerizable group,
the requirement 2: the silicon-containing compound includes two or more ring structures in a molecule,
the requirement 3: the silicon-containing compound includes a siloxane bond,
the requirement 4: the silicon-containing compound has a molecular weight of less than 5,000.

[2] The composition according to [1],
in which the silicon-containing compound has a linking group including the two or more ring structures and a plurality of structural moieties including the siloxane bond, and has a structure in which the plurality of structural moieties are bonded to each other through the linking group.
[3] The composition according to [1] or [2],
in which the silicon-containing compound has a group selected from the group consisting of groups represented by Formula (C-1) to Formula (C-3) described later.
[4] The composition according to any one of [1] to [3],
in which the silicon-containing compound is a compound represented by Formula (1) described later, provided that the compound represented by Formula (1) has no polymerizable group and has a molecular weight of less than 5,000.
[5] The composition according to any one of [1] to [4],
in which the silicon-containing compound is a compound represented by Formula (2) described later, provided that the compound represented by Formula (2) has no polymerizable group and has a molecular weight of less than 5,000.
[6] The composition according to [5],
in which the divalent linking groups represented by $Z^{21}$ and $Z^{22}$ each independently represent -O-, -S-, $-OCH_2-$, $-CH_2CH_2-$, -CO-, -CS-, -COO-, -CSO-, -CSS-, -CO-S-, -O-CO-O-, -CO-CO-, -CO-NH-, $-SCH_2-$, $-CF_2O-$, $-CF_2S-$, $-COO-CH_2CH_2-$, $-OCO-CH_2CH_2-$, $-COO-CH_2-$, $-OCO-CH_2-$, -COO-NH-, -OCO-NH-, -N=N-, -CH=N-N=CH-, -CH=N-, -CF=CF-, -C≡C-, -C=C-C=C-, $-OCH_2CH_2O-$, $-SCH_2CH_2S-$, -O-CO-CO-O-, or $-O-CH_2-O-$.
[7] The composition according to any one of [1] to [6],
in which the polymerizable liquid crystal compound includes a compound represented by Formula (3) described later.
[8] The composition according to [3],
in which k in Formula (C-1) represents an integer of 3 to 10.
[9] The composition according to [5],
in which k in Formula (C-1) represents an integer of 3 to 10.
[10] An optically anisotropic layer formed of the composition according to any one of [1] to [9].
[11] A cured film formed of the composition according to any one of [1] to [9].
[12] A diffraction element comprising:

an optically anisotropic layer formed of the composition according to any one of [1] to [9],
in which the optically anisotropic layer has a liquid crystal alignment pattern in which an orientation of an optical axis derived from a liquid crystal compound changes while continuously rotating in at least one in-plane direction.

According to the present invention, it is possible to provide a composition which forms a liquid crystal layer, in which aligning properties of the liquid crystal compound are excellent and laminatability of the liquid crystal layer after a surface treatment is excellent.
In addition, according to the present invention, it is possible to provide an optically anisotropic layer, a cured film, and a diffraction element.

## BRIEF DESCRIPTION OF THE DRAWINGS

FIG. 1 is a schematic view showing an embodiment of an optically anisotropic layer. FIG. 2 is a schematic plan view of the optically anisotropic layer shown in FIG. 1.
FIG. 3 is a conceptual view showing an action of the optically anisotropic layer shown in FIG. 2.
FIG. 4 is a conceptual view showing an action of the optically anisotropic layer shown in FIG. 2.
FIG. 5 is a schematic view showing another example of the optically anisotropic layer.
FIG. 6 is a schematic view showing another example of the optically anisotropic layer.

## DESCRIPTION OF THE PREFERRED EMBODIMENTS

Hereinafter, the present invention will be described in detail.

Although configuration requirements to be described below are described based on representative embodiments of the present invention, the present invention is not limited to the embodiments.

In the present specification, numerical ranges represented by "to" include numerical values before and after "to" as lower limit values and upper limit values.

In a notation for a group (atomic group) in the present specification, in a case where the group is denoted without specifying whether it is substituted or unsubstituted, the group includes both a group having no substituent and a group having a substituent. For example, an "alkyl group" includes not only an alkyl group having no substituent (unsubstituted alkyl group), but also an alkyl group having a substituent (substituted alkyl group).

In the present specification, for each component, one kind of substance corresponding to each component may be used alone, or two or more kinds thereof may be used in combination. Here, in a case where two or more kinds of substances are used in combination for each component, the content of the component indicates the total content of the substances used in combination, unless otherwise specified.

In the present specification, "(meth)acrylate" is used to mean "any one or both of acrylate and methacrylate", and "(meth)acryloyl" is used to mean "any one or both of acryloyl and methacryloyl".

In the present specification, a solid content of a composition means a component forming a composition layer (liquid crystal layer), which does not include a solvent. The component forming the composition layer (liquid crystal layer) herein may be a component which reacts (is polymerized) to change a chemical structure in a case of forming the composition layer (liquid crystal layer). In addition, even in a case where the component is liquid, the component is included in the solid content as long as the component forms the composition layer (liquid crystal layer).

A bonding direction of divalent groups cited in the present specification is not limited unless otherwise specified. For example, in a case where Y in a compound represented by Formula "X-Y-Z" is -COO-, Y may be -CO-O- or -O-CO-. In addition, the above-described compound may be "X-CO-O-Z" or "X-O-CO-Z".

In the present specification, unless otherwise specified, a molecular weight in a case of a molecular weight distribution is a weight-average molecular weight. In the present specification, a weight-average molecular weight (Mw) and a number-average molecular weight (Mn) are values in terms of polystyrene by gel permeation chromatography (GPC).

In the present specification, Re($\lambda$) represents an in-plane retardation at a wavelength $\lambda$. Unless otherwise specified, the wavelength $\lambda$ is 550 nm.

In addition, in the present specification, Re($\lambda$) is a value measured at the wavelength $\lambda$ using AxoScan (manufactured by Axometrics, Inc.). By inputting an average refractive index ((nx + ny + nz)/3) and a film thickness (d ($\mu$m)) in AxoScan,

a slow axis direction (°),
Re($\lambda$) = R0($\lambda$), and
are calculated.

Although R0(1) is displayed as a numerical value calculated by AxoScan, it means Re($\lambda$).

[Composition]

The composition according to the embodiment of the present invention contains a polymerizable liquid crystal compound and a silicon-containing compound (hereinafter, also referred to as "specific compound"), in which the silicon-containing compound satisfies all of the following requirements 1 to 4.

Requirement 1: the silicon-containing compound has no polymerizable group

Requirement 2: the silicon-containing compound includes two or more ring structures in a molecule

Requirement 3: the silicon-containing compound includes a siloxane bond

Requirement 4: the silicon-containing compound has a molecular weight of less than 5,000

In a case where the composition according to the embodiment of the present invention, in which the polymerizable liquid crystal compound and the specific compound described above are used in combination, forms a liquid crystal layer, aligning properties of the liquid crystal compound are excellent and laminatability of the liquid crystal layer after a surface treatment is excellent.

Although the action mechanism of the composition according to the embodiment of the present invention is not necessarily clear, it is presumed that the specific compound exhibits a high alignment restriction force on the liquid crystal compound due to the fact that the specific compound has a structure including two or more ring structures in the molecule (requirement 2) and thus is compatible with the liquid crystal compound, and the fact that the specific compound includes a

siloxane bond (requirement 3) and thus is likely to be biased to a surface of the liquid crystal layer.

In addition, the specific compound has no polymerizable group in the structure (requirement 1) and has a molecular weight of less than 5,000 (requirement 4). Due to the structure, the specific compound is likely to be removed from the liquid crystal layer in a case where a surface treatment is performed on the liquid crystal layer after the liquid crystal layer is formed. Specifically, in a case where the liquid crystal layer is subjected to a solvent washing treatment after the liquid crystal layer is formed, the specific compound is likely to be dissolved in the solvent due to the fact that the specific compound is a relatively low-molecular-weight compound. In addition, in a case where the liquid crystal layer is subjected to a corona treatment and the like after the liquid crystal layer is formed, the specific compound is likely to be etched due to the fact that the specific compound is a relatively low-molecular-weight compound. As a result, it is presumed that, in a case where another layer (adjacent layer) is formed on the surface of the liquid crystal layer formed of the composition, cissing is unlikely to occur, and an alignment defect is unlikely to occur in the adjacent layer (that is, laminatability is excellent).

Hereinafter, in the liquid crystal layer formed of the composition, the aligning properties of the liquid crystal compound are more excellent and/or the laminatability of the liquid crystal layer after a surface treatment is more excellent is also referred to as "effect of the present invention is more excellent".

In addition, hereinafter, the liquid crystal layer formed of the liquid crystal composition is also referred to as "optically anisotropic layer".

Hereinafter, each component contained in the composition will be described in detail.

[Specific compound]

The composition contains the specific compound.

The specific compound is a compound satisfying all of the requirements 1 to 4.

Requirement 1: the specific compound has no polymerizable group.

Requirement 2: the specific compound includes two or more ring structures in a molecule.

Requirement 3: the specific compound includes a siloxane bond (-Si-O-Si-).

Requirement 4: the specific compound has a molecular weight of less than 5,000.

<Requirement 1>

The specific compound has no polymerizable group.

The "polymerizable group" in the requirement 1 means a group capable of chain polymerization.

Since the specific compound has no group capable of chain polymerization, polymerization during the formation of the liquid crystal layer (in other words, formation of a polymer with a homopolymer and a polymerizable component which can be contained in the composition, such as the polymerizable liquid crystal compound) is suppressed, and as a result, the specific compound is likely to be removed from the liquid crystal layer in a case where the surface treatment is performed on the liquid crystal layer.

The "polymerizable group" in the requirement 1 is typically a chain-polymerizable group such as an addition polymerizable group and a ring-opening polymerizable group, and a group which can be polymerized under normal use conditions corresponds to the "polymerizable group".

Here, for example, even in a case of an ethylene unsaturated group known as the addition polymerizable group, in a case where polymerizability is deteriorated under normal use conditions due to a factor such as steric hindrance, it does not correspond to the "polymerizable group" in the requirement 1 (specifically, an alkenylene group or the like, present at a site linking a ring structure in the mesogenic moiety, corresponds to this; in addition, an alkynylene group present at a site linking a ring structure in the mesogenic moiety does not correspond to the polymerizable group under normal use conditions).

Specific examples of the polymerizable group in the requirement 1 include a vinyl group, an ethynyl group, a maleimide group, a cyclic alkenyl group such as a norbornene ring group, and a monovalent group such as an epoxy group. Groups (monovalent groups) represented by Formulae (P-1) to (P-22) exemplified as a polymerizable group which can be included in the polymerizable liquid crystal compound described later also correspond to the polymerizable group in the requirement 1.

<Requirement 2>

The specific compound includes two or more ring structures in the molecule.

The ring structure may be an aromatic ring structure or an alicyclic ring structure.

The alicyclic ring structure is preferably a saturated alicyclic ring structure (a saturated aliphatic hydrocarbon ring structure or a saturated aliphatic heterocyclic ring structure).

Examples of an aromatic ring constituting the aromatic ring structure include an aromatic hydrocarbon ring and

an aromatic heterocyclic ring. In addition, the aromatic ring may be a monocyclic ring or a polycyclic ring.

The number of carbon atoms in the aromatic hydrocarbon ring is preferably 6 to 30, more preferably 6 to 20, and still more preferably 6 to 10. Specific examples of the aromatic hydrocarbon ring include a benzene ring, a naphthalene ring, an anthracene ring, a phenanthrene ring, a triphenylene ring, a fluorene ring, and a triptycene ring.

The number of ring members in the aromatic heterocyclic ring is preferably 5 to 15, more preferably 5 to 10, and still more preferably 5 or 6. Examples of a heteroatom included in the aromatic heterocyclic ring include a nitrogen atom, an oxygen atom, and a sulfur atom. The number of heteroatoms included in the aromatic heterocyclic ring is not particularly limited, but for example, it is preferably 1 to 4 and more preferably 1 or 2.

Specific examples of the aromatic heterocyclic ring include a pyridine ring, a pyridazine ring, a pyrimidine ring, a pyrazine ring, a triazine ring, a thiophene ring, a furan ring, a thiazole ring, and an imidazole ring.

In addition, the aromatic ring may be fused with an alicyclic ring.

Examples of an alicyclic ring constituting the alicyclic ring structure include an aliphatic hydrocarbon ring and an aliphatic heterocyclic ring. The alicyclic ring may be a monocyclic ring or a polycyclic ring.

The number of ring members in the aliphatic hydrocarbon ring is preferably 5 to 15, more preferably 5 to 10, and still more preferably 5 or 6.

The aliphatic hydrocarbon ring is preferably a saturated aliphatic hydrocarbon ring.

Specific examples of the aliphatic hydrocarbon ring include a cyclopentane ring, a cyclohexane ring, a cycloheptane ring, a cyclooctane ring, a norbornene ring, and an adamantane ring. Among these, a cyclopentane ring or a cyclohexane ring is preferable.

Examples of a heteroatom included in the aliphatic heterocyclic ring include a nitrogen atom, an oxygen atom, and a sulfur atom. In addition, the number of ring members in the aliphatic heterocyclic ring is not particularly limited, but is preferably 5 to 15, more preferably 5 to 10, and still more preferably 5 or 6.

The aliphatic heterocyclic ring is preferably a saturated aliphatic heterocyclic ring.

Specific examples of the aliphatic heterocyclic ring include an oxolane ring, an oxane ring, a piperidine ring, and a piperazine ring. In the aliphatic heterocyclic ring, $-CH_2-$constituting the ring may be replaced with -CO-, and examples thereof include a phthalimide ring.

In addition, a hydrogen atom in the above-described aromatic ring and alicyclic ring may be substituted with another substituent (preferably, a substituent S1 described later), such as an alkyl group, an alkoxy group, a cyano group, a nitro group, and a halogen atom.

From the viewpoint that the effect of the present invention is more excellent, the lower limit value of the number of ring structures included in the molecule of the specific compound is preferably 3 or more. The upper limit value thereof is not particularly limited, but for example, it is preferably 14 or less, more preferably 10 or less, and still more preferably 6 or less.

<Requirement 3>

The specific compound includes a siloxane bond (-Si-O-Si-).

The number of siloxane bonds in the molecule is not limited, and examples thereof include 1 to 20. The number of siloxane bonds in the specific compound is preferably adjusted to a number within a numerical range of a silicon atom content, which will be described later.

From the viewpoint that the effect of the present invention is more excellent (particularly, the aligning properties of the liquid crystal compound are more excellent in a case of forming the liquid crystal layer), the lower limit value of the silicon atom content of the specific compound is preferably 17.5% or more, more preferably 18.5% or more, and still more preferably 20.0% or more. In addition, from the viewpoint that the effect of the present invention is more excellent (particularly, cissing and an alignment defect are more likely to be suppressed in a case of forming the adjacent layer), the upper limit value thereof is preferably 40.0% or less, more preferably 30.0% or less, and still more preferably 28.0% or less. The silicon atom content (%) of the specific compound is obtained by (Molecular weight of silicon atom in molecule/-Molecular weight of specific compound) $\times$ 100.

<Requirement 4>

The molecular weight of the specific compound is less than 5,000.

The lower limit value of the molecular weight of the specific compound is preferably 400 or more, more preferably 700 or more, and still more preferably 1,000 or more. In addition, the upper limit value thereof is less than 5,000, preferably 4,000 or less, more preferably 3,000 or less, and still more preferably 2,000 or less.

<Suitable example of structure of specific compound>

As the specific compound, it is preferable to have a linking group including two or more ring structures

(hereinafter, also simply referred to as "linking group T"), a plurality of structural moieties including a siloxane bond (hereinafter, also simply referred to as "structural moiety XS"), and have a structure in which the plurality of structural moieties XS are bonded to each other through the linking group T.

(Structural moiety XS)

As the above-described structural moiety XS, a structural moiety including a group selected from the group consisting of groups represented by Formula (C-1) to Formula (C-3) is preferable. That is, the specific compound preferably has a group selected from the group consisting of groups represented by Formula (C-1) to Formula (C-3); and from the viewpoint that the effect of the present invention is more excellent, it is more preferable to have a group represented by Formula (C-2) or Formula (C-3), and it is still more preferable to have a group represented by Formula (C-3).

The groups represented by Formula (C-1) to Formula (C-3) will be described.

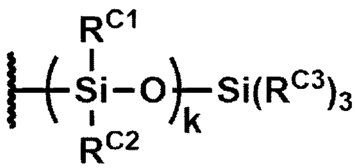

(C-1)

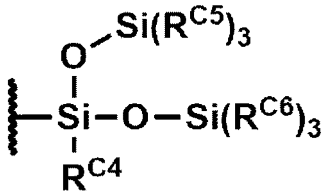

(C-2)

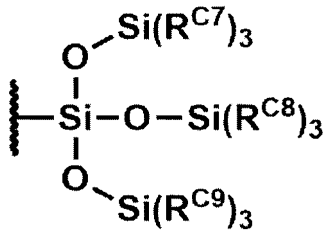

(C-3)

In Formula (C-1), $R^{C1}$ to $R^{C3}$ each independently represent an alkyl group having 1 to 10 carbon atoms. In Formula (C-1), a plurality of $R^{C1}$'s, a plurality of $R^{C2}$'s, and a plurality of $R^{C3}$'s may be the same or different from each other.

In Formula (C-2), $R^{C4}$ represents an alkyl group having 1 to 10 carbon atoms, and $R^{c5}$ and $R^{C6}$ each independently represent an alkyl group having 1 to 10 carbon atoms or a group represented by Formula (C-1X). In Formula (C-2), a plurality of $R^{C5}$'s and a plurality of $R^{C6}$'s may be the same or different from each other.

In Formula (C-3), $R^{C7}$ to $R^{C9}$ each independently represent an alkyl group having 1 to 10 carbon atoms or a group represented by Formula (C-1X). In Formula (C-3), a plurality of $R^{C7}$'s, a plurality of $R^{C8}$'s, and a plurality of $R^{C9}$'s may be the same or different from each other.

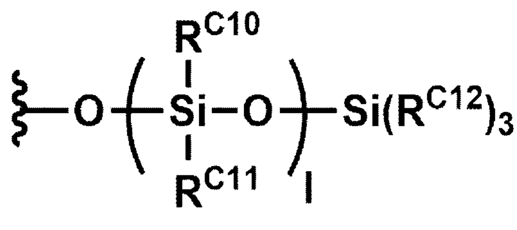

(C-1X)

In Formula (C-1X), $R^{C10}$ to $R^{C12}$ each independently represent an alkyl group having 1 to 10 carbon atoms, and 1 represents an integer of 0 to 20. In Formula (C-1X), a plurality of $R^{C10}$'s, a plurality of $R^{C11}$'s, and a plurality of $R^{C12}$'s may be the same or different from each other.

In Formula (C-1) to Formula (C-3), and Formula (C-1X), the alkyl group having 1 to 10 carbon atoms represented by $R^{C1}$ to $R^{C12}$ is preferably a chain-like (linear or branched) alkyl group having 1 to 10 carbon atoms, and more preferably a linear alkyl group having 1 to 10 carbon atoms.

In particular, the number of carbon atoms in the alkyl group having 1 to 10 carbon atoms, represented by $R^{C1}$ to $R^{C12}$, is preferably 1 to 6 and more preferably 1 to 3.

The alkyl group having 1 to 10 carbon atoms, represented by $R^{C1}$ to $R^{C12}$, may have a substituent (preferably, the substituent S1 described later), but preferably does not have a substituent.

Among these, as $R^{C1}$ to $R^{C4}$ and $R^{C10}$ to $R^{C12}$, a methyl group is preferable.

Among these, as $R^{C5}$ to $R^{C9}$, a methyl group or the group represented by Formula (C-1X) is preferable.

In Formula (C-1), k represents an integer of 2 to 20.

From the viewpoint that the effect of the present invention is more excellent, k preferably represents an integer of 3 to 10, and more preferably represents an integer of 3 to 6.

In Formula (C-1X), 1 represents an integer of 0 to 20.

From the viewpoint that the effect of the present invention is more excellent, 1 preferably represents an integer of 0 to 10, and more preferably represents an integer of 0 to 6.

In Formula (C-1) to Formula (C-3), and Formula (C-1X), a site represented by a wavy line represents a bonding position.

As the structural moiety XS, a chain-like structure including a siloxane bond is also preferable.

In particular, as the chain-like structure including a siloxane bond, a monovalent group represented by Formula (YS) is preferable.

Formula (YS) $*\text{-}L^{YS}\text{-}(X^{YS})_y$

In the formula, $X^{YS}$ represents a group selected from the group consisting of the groups represented by Formula (C-1) to Formula (C-3) described above. From the viewpoint that the effect of the present invention is more excellent, $X^{YS}$ preferably represents the group represented by Formula (C-2) or Formula (C-3), and more preferably represents the group represented by Formula (C-3).

$L^{YS}$ represents a single bond or a chain-like (linear or branched) (y+1)-valent hydrocarbon group. Here, in the above-described hydrocarbon group, at least one $-CH_2-$ may be replaced with -NH-, -O-, -S-, -CO-, -CS-, -SO-, or $-SO_2-$, at least one $-CH_2CH_2-$ may be replaced with -N=N-, -CH=N-, -CF=CF-, or -C≡C-, at least one -CH< may be replaced with -N< or -SiH<, and at least one >C< may be replaced with >Si<.

The number of atoms in the chain-like (y+1)-valent hydrocarbon group represented by $L^{YS}$, other than hydrogen atoms, is, for example, preferably 1 to 30, more preferably 1 to 20, still more preferably 1 to 15, particularly preferably 1 to 10, and most preferably 1 to 6.

Specific examples of the chain-like (y+1)-valent hydrocarbon group represented by $L^{YS}$ include a chain-like (y+1)-valent aliphatic hydrocarbon group.

In addition, the chain-like (y+1)-valent hydrocarbon group represented by $L^{YS}$ may further have a substituent (preferably, the substituent S1 described later), but preferably does not have a substituent.

From the viewpoint that the effect of the present invention is more excellent, $L^{YS}$ preferably represents a chain-like (preferably linear) alkylene group having 1 to 10 carbon atoms in total, in which at least one $-CH_2-$ may be replaced with -NH-, -O-, -S-, -CO-, -CS-, -SO-, or $-SO_2-$; more preferably represents a chain-like (preferably linear) alkylene group having 1 to 6 carbon atoms in total, in which at least one $-CH_2-$ may be replaced with -NH-, -O-, -S-, -CO-, -CS-, -SO-, or $-SO_2-$; and still more preferably represents a chain-like (preferably linear) alkylene group having 1 to 4 carbon atoms in total, in which at least one $-CH_2-$ may be replaced with -NH-, -O-, -S-, -CO-, -CS-, -SO-, or $-SO_2-$.

y represents an integer of 1 to 10.

y is preferably an integer of 1 to 4, more preferably 1 or 2, and still more preferably 1.

The number of structural moieties XS in the specific compound is preferably 2 or more, more preferably 2 to 20, still more preferably 2 to 10, particularly preferably 2 to 6, and most preferably 2 to 4.

(Linking group T)

The linking group T in the specific compound is not particularly limited as long as it is a linking group including two or more ring structures. From the viewpoint that the effect of the present invention is more excellent, the linking group T is preferably a mesogenic structural moiety including two or more ring structures.

The ring structure has the same meaning as the ring structure described in the requirement 2 above, and a suitable aspect thereof is also the same.

The number of ring structures included in the linking group T is, for example, preferably 2 to 12, more preferably 2 to 10, and still more preferably 2 to 6.

It is preferable that the above-described structural moiety XS is bonded to each of at least one ring structure positioned at one terminal of the linking group Tand at least one ring structure positioned at the other terminal of the linking group T.

As the above-described specific compound having the structure in which the plurality of structural moieties XS are bonded to each other through the linking group T, a compound represented by Formula (1) is preferable, and a compound represented by Formula (2) is more preferable.

Hereinafter, the compounds represented by Formula (1) and Formula (2) will be described.

(Compound represented by Formula (1))

$$\left(X^{11}\right)_m Y \left(X^{12}\right)_n \qquad (1)$$

In Formula (1), $X^{11}$ and $X^{12}$ each independently represent a chain-like structure including a siloxane bond.
As the chain-like structure including a siloxane bond, represented by $X^{11}$ and $X^{12}$, the monovalent group represented by Formula (YS) described above is preferable.
In Formula (1), Y represents an (m+n)-valent linking group including two or more ring structures.
From the viewpoint that the effect of the present invention is more excellent, the (m+n)-valent linking group represented by Y is preferably a mesogenic structural moiety including two or more ring structures.
The ring structure included in Y has the same meaning as the ring structure described in the requirement 2 above, and a suitable aspect thereof is also the same.
The number of ring structures included in the (m+n)-valent linking group represented by Y is, for example, preferably 2 to 12, more preferably 2 to 10, and still more preferably 2 to 6.
Among these, as the (m+n)-valent linking group represented by Y, a group represented by Formula (TS) is preferable.

$$\left(*\right)_m T^1-Z\left(T^3-Z\right)_{p_{TS}} T^2\left(*\right)_n \qquad (TS)$$

In Formula (TS), * represents a bonding position.
In Formula (TS), $T^1$ represents an (m+1)-valent aromatic ring group or an (m+1)-valent alicyclic ring group, which may have a substituent.
Examples of an aromatic ring constituting the (m+1)-valent aromatic ring group represented by $T^1$ include an aromatic hydrocarbon ring and an aromatic heterocyclic ring. The aromatic hydrocarbon ring and the aromatic heterocyclic ring have the same meaning as the aromatic hydrocarbon ring and the aromatic heterocyclic ring described in the requirement 2 in the upper part.
Examples of an alicyclic ring constituting the (m+1)-valent alicyclic ring group represented by $T^1$ include an aliphatic hydrocarbon ring and an aliphatic heterocyclic ring. The aliphatic hydrocarbon ring and the aliphatic heterocyclic ring have the same meaning as the aliphatic hydrocarbon ring and the aliphatic heterocyclic ring described in the requirement 2 in the upper part.
As the substituent which may be included in the (m+1)-valent aromatic ring group and the (m+1)-valent alicyclic ring group represented by $T^1$, the substituent S1 described later is preferable.
Examples of the (m+1)-valent aromatic ring group represented by $T^1$, which may have a substituent, include a group selected from the groups consisting of groups represented by Formula (B-1) to Formula (B-5). In the formulae, a site represented by a wavy line represents a bonding position to Z.
The groups represented by Formula (B-1) to Formula (B-3) preferably represent a di-to hexavalent (preferably di- to tetravalent) aromatic ring group, for example. The groups represented by Formula (B-4) and Formula (B-5) represent a divalent aromatic ring group.

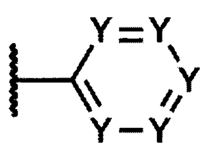

(B-1)

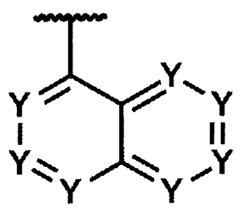

(B-2)

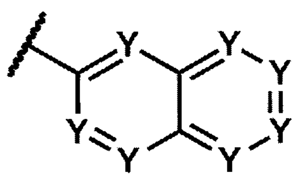

(B-3)

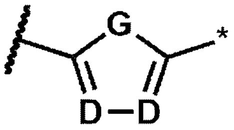

(B-4)

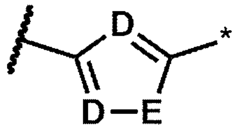

(B-5)

In Formula (B-1) to Formula (B-3), Y's each independently represent $CR^{B1}$ or a nitrogen atom.

$R^{B1}$'s each independently represent a hydrogen atom, a substituent (preferably, the substituent S1 described later), or a bonding position (*).

However, at least one of Y's represents $CR^{B1}$, and $R^{B1}$ represents a bonding position (in other words, at least one of Y's represents C(-*)).

In Formula (B-1) to Formula (B-3), one to five of Y's represent $CR^{B1}$, and $R^{B1}$ represents a bonding position (in other words, one to five of Y's represent C(-*)). It is preferable that the remaining Y's represent $CR^{B1}$ (where $R^{B1}$'s each independently represent a hydrogen atom or a substituent (preferably, the substituent S1 described later)) or a nitrogen atom, provided that one to three of Y's represent $CR^{B1}$, and $R^{B1}$ represents a bonding position (in other words, one to three of Y's represent C(-*)). It is more preferable that the remaining Y's represent $CR^{B1}$ (where $R^{B1}$'s each independently represent a hydrogen atom or a substituent (preferably, the substituent S1 described later)) or a nitrogen atom; and it is more preferable that one or two of Y's represent $CR^{B1}$, and $R^{B1}$ represents a bonding position (in other words, one or two of Y's represent C(-*)). It is still more preferable that the remaining Y's represent $CR^{B1}$ (where $R^{B1}$'s each independently represent a hydrogen atom or a substituent (preferably, the substituent S1 described later)) or a nitrogen atom.

Among the groups represented by Formula (B-1) to Formula (B-5), from the viewpoint that the effect of the present invention is more excellent, the group represented by Formula (B-1) is preferable, and a group selected from the group consisting of groups represented by Formula (B-1-1) to Formula (B-1-5) is more preferable.

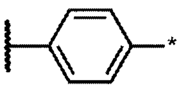

(B-1-1)

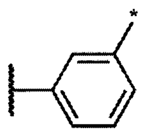

(B-1-2)

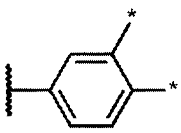

(B-1-3)

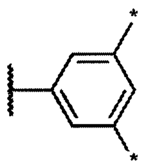

(B-1-4)

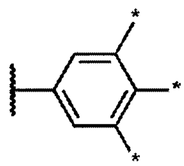

(B-1-5)

In Formula (B-1-1) to Formula (B-1-5), * represents a bonding position. In the formulae, a site represented by a wavy line represents a bonding position to Z.

In Formula (B-4) and Formula (B-5), D's each independently represent $CR^{A1}$ or a nitrogen atom.

Among these, as D, $CR^{A1}$ is preferable.

$R^{A1}$'s each independently represent a hydrogen atom or a substituent (preferably, the substituent S1 described later).

Among these, as $R^{A1}$, a hydrogen atom, an alkyl group, an alkoxy group, or an alkoxycarbonyl group is preferable.

E's each independently represent $CR^{A2}R^{A3}$, $NR^{A4}$, an oxygen atom, or a sulfur atom. Among these, as E, $CR^{A2}R^{A3}$, $NR^{A4}$, or an oxygen atom is preferable.

G represents $CR^{A5}R^{A6}$, $NR^{A7}$, or an oxygen atom.

$R^{A2}$ to $R^{A7}$ each independently represent a hydrogen atom or a substituent (preferably, the substituent S1 described later).

Among these, as $R^{A2}$ to $R^{A7}$, a hydrogen atom, an alkyl group, an alkoxy group, or an alkoxycarbonyl group is preferable.

**[0132]** * represents a bonding position.

In Formula (TS), $T^2$ represents an (n+1)-valent aromatic ring group or an (n+1)-valent alicyclic ring group, which may have a substituent.

Examples of an aromatic ring constituting the (n+1)-valent aromatic ring group represented by $T^2$ include an aromatic hydrocarbon ring and an aromatic heterocyclic ring. The aromatic hydrocarbon ring and the aromatic heterocyclic ring have the same meaning as the aromatic hydrocarbon ring and the aromatic heterocyclic ring described in the requirement 2 in the upper part.

Examples of an alicyclic ring constituting the (n+1)-valent alicyclic ring group represented by $T^2$ include an aliphatic hydrocarbon ring and an aliphatic heterocyclic ring. The aliphatic hydrocarbon ring and the aliphatic heterocyclic ring have the same meaning as the aliphatic hydrocarbon ring and the aliphatic heterocyclic ring described in the requirement 2 in the upper part.

As the substituent which may be included in the (n+1)-valent aromatic ring group and the (n+1)-valent alicyclic ring group represented by $T^2$, the substituent S1 described later is preferable.

Among these, as the (n+1)-valent aromatic ring group or the (n+1)-valent alicyclic ring group represented by $T^2$, which may have a substituent, a group selected from the group consisting of the groups represented by Formula (B-1) to Formula (B-5) described above is preferable, the group represented by Formula (B-1) is more preferable, and a group selected from the group consisting of the groups represented by Formula (B-1-1) to Formula (B-1-5) is still more preferable.

In Formula (TS), $T^3$ represents a divalent aromatic ring group or a divalent alicyclic ring group, which may have a substituent.

Examples of an aromatic ring constituting the divalent aromatic ring group represented by $T^3$ include an aromatic hydrocarbon ring and an aromatic heterocyclic ring. The aromatic hydrocarbon ring and the aromatic heterocyclic ring have the same meaning as the aromatic hydrocarbon ring and the aromatic heterocyclic ring described in the requirement 2 in the upper part.

Examples of an alicyclic ring constituting the divalent alicyclic ring group represented by $T^3$ include an aliphatic hydrocarbon ring and an aliphatic heterocyclic ring. The aliphatic hydrocarbon ring and the aliphatic heterocyclic ring have the same meaning as the aliphatic hydrocarbon ring and the aliphatic heterocyclic ring described in the requirement 2 in the upper part.

As the substituent which may be included in the divalent aromatic ring group and the divalent alicyclic ring group represented by $T^3$, the substituent S1 described later is preferable.

Specific examples of the divalent aromatic ring group and the divalent alicyclic ring group represented by $T^3$, which may have a substituent, include a ring group T.

In a case where a plurality of $T^3$'s are present in the formula, the plurality of $T^3$'s may be the same or different from each other, and

<<Ring group T>>

The ring group T is a group selected from the following structural formulae. In each structural formula, a site represented by a wavy line represents a bonding position to Z. In addition, any hydrogen atom which can be substituted in each structural formula may be substituted with a substituent (preferably, the substituent S1 described later).

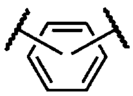 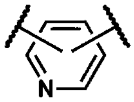 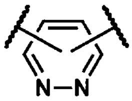 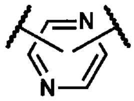 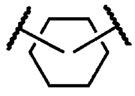 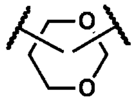

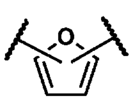 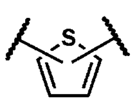 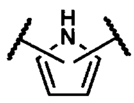 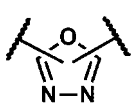 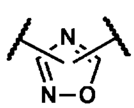 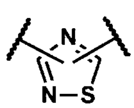

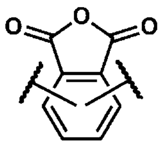 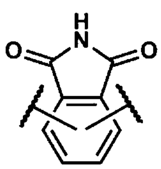 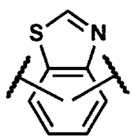 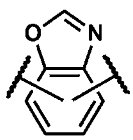 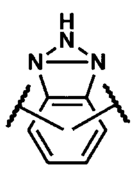 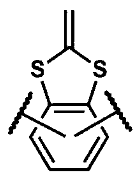

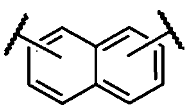 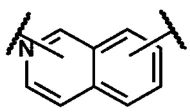 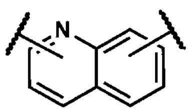 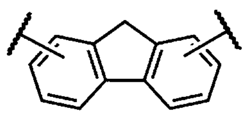

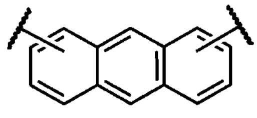
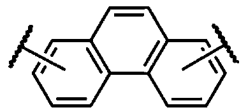
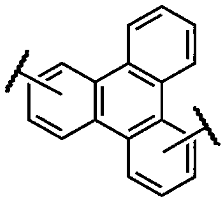
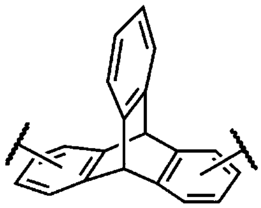

In Formula (TS), $P_{TS}$ represents a repetition number.

The repetition number represented by $p_{TS}$ is preferably an integer of 1 to 20, more preferably an integer of 1 to 15, still more preferably an integer of 1 to 10, particularly preferably an integer of 1 to 6, and most preferably an integer of 1 to 3.

In Formula (TS), Z's each independently represent a single bond or a divalent linking group.

The divalent linking group represented by Z represents a group obtained by combining one or two or more kinds of groups selected from the group consisting of $-CH_2-$, -O-, -NH-, -S-, -CO-, -CS-, -CH=N-, -N=N-, and -C≡C-. Here, any hydrogen atom which can be substituted in these groups may be substituted with a halogen atom (a fluorine atom, a chlorine atom, a bromine atom, an iodine atom, or the like).

Specific examples of the divalent linking group represented by Z include -O-, -S-, $-OCH_2-$, $-CH_2CH_2-$, -CO-, -CS-, -COO-, -CSO-, -CSS-, -CO-S-, -O-CO-O-, -CO-CO-, -CO-NH-, $-SCH_2-$, $-CF_2O-$, $-CF_2S-$, $-COO-CH_2CH_2-$, $-OCO-CH_2CH_2-$, $-COO-CH_2-$, $-OCO-CH_2-$, -COO-NH-, -OCO-NH-, -N=N-, -CH=N-N=CH-, -CH=N-, -CF=CF-, -C≡C-, -C=C-C=C-, $-OCH_2CH_2O-$, $-SCH_2CH_2S-$, -O-CO-CO-O-, and $-O-CH_2-O-$.

Among these, Z is preferably a single bond, $-OCH_2-$, $-CH_2CH_2-$, -COO-, -CSO-, -CSS-, -CO-S-, -CO-CO-, -CO-NH-, $-SCH_2-$, $-CF_2O-$, $-CF_2S-$, or -CH=N-; and more preferably a single bond or -COO-.

In Formula (1) and Formula (TS), m and n each independently represent an integer of 1 or more.

m and n each independently represent preferably an integer of 1 to 10, more preferably an integer of 1 to 5, still more preferably an integer of 1 to 3, and particularly preferably 1 or 2. From the viewpoint that the effect of the present invention is more excellent, it is preferable that m and n are the same number.

Here, the compound represented by Formula (1) has no polymerizable group (requirement 1) and has a molecular weight of less than 5,000 (requirement 4).

In Formula (1), suitable examples of the structural moiety represented by Y include $-T^1-Z^1-T^3-Z^2-T^2-$ and $-T^1-Z^1-T^3-Z^3-T^3-Z^2-T^2-$. $T^1$, $T^2$, and $T^3$ have the same meaning as $T^1$, $T^2$, and $T^3$ in Formula (TS). In addition, $Z^1$ to $Z^3$ have the same meaning as the group represented by Z in Formula (TS) described above.

Among these, $Z^1$, $Z^2$, and $Z^3$ are each independently preferably a single bond, $-OCH_2-$, $-CH_2CH_2-$, -COO-, -CSO-, -CSS-, -CO-S-, -CO-CO-, -CO-NH-, $-SCH_2-$, $-CF_2O-$, $-CF_2S-$, or -CH=N-.

(Compound represented by Formula (2))

$$\left[\left(X^{21}\right)_{m21}L^{21}\right]_{m}Y^{21}-Z^{21}\left(Y^{22}-Z^{22}\right)_{p}Y^{23}\left[L^{22}\left(X^{22}\right)_{n21}\right]_{n} \quad (2)$$

In the formula, $X^{21}$ and $X^{22}$ each independently represent a group selected from the group consisting of the groups represented by Formula (C-1) to Formula (C-3) described above.

$L^{21}$ represents a single bond or a chain-like (m21+1)-valent hydrocarbon group. Here, in the above-described hydrocarbon group, at least one $-CH_2-$ may be replaced with -NH-, -O-, -S-, -CO-, -CS-, -SO-, or $-SO_2-$, at least one $-CH_2CH_2-$ may be replaced with -N=N-, -CH=N-, -CF=CF-, or -C=C-, at least one -CH< may be replaced with -N< or -SiH<, and at least one >C< may be replaced with >Si<.

$L^{22}$ represents a single bond or a chain-like (n21+1)-valent hydrocarbon group. Here, in the above-described hydrocarbon group, at least one $-CH_2-$ may be replaced with -NH-, -O-, -S-, -CO-, -CS-, -SO-, or $-SO_2-$, at least one $-CH_2CH_2-$ may be replaced with -N=N-, -CH=N-, -CF=CF-, or -C=C-, at least one -CH< may be replaced with -N< or -SiH<, and at least one >C< may be replaced with >Si<.

m21 and n21 each independently represent an integer of 1 to 10.

The chain-like (m21+1)-valent hydrocarbon group represented by $L^{21}$ and the chain-like (n21+1)-valent hydrocarbon group represented by $L^{22}$ may further have a substituent (preferably, the substituent S1 described later), but preferably do not have a substituent.

In Formula (2), the structural moieties represented by $-L^{21}-(X^{21})_{m21}$ and $-L^{22}-(X^{22})_{n21}$ have the same meaning as the monovalent group represented by Formula (YS), and suitable aspects thereof are also the same. In other words, $L^{21}$ and $L^{22}$ in Formula (2) have the same meaning as $L^{YS}$ in Formula (YS); $X^{21}$ and $X^{22}$ in Formula (2) have the same meaning as $X^{YS}$ in Formula (YS); m21 and n21 in Formula (2) have the same meaning as y in Formula (YS); and suitable aspects thereof are also the same.

In Formula (2), m and n each independently represent an integer of 1 to 10.

m and n each independently represent preferably an integer of 1 to 5, more preferably an integer of 1 to 3, and still more preferably 1 or 2. From the viewpoint that the effect of the present invention is more excellent, it is preferable that m and n are the same number.

In Formula (2), $Y^{21}$, $Y^{23}$, and $Y^{22}$ have the same meaning as $T^1$, $T^2$, and $T^3$ in Formula (TS), and suitable aspects thereof are also the same.

In Formula (2), $Z^{21}$ and $Z^{22}$ have the same meaning as Z in Formula (TS), and suitable aspects thereof are also the same.

In Formula (2), p represents an integer of 1 to 10.

p is preferably an integer of 1 to 6 and more preferably an integer of 1 to 3.

Hereinafter, the substituent S1 will be described.

(Substituent S1)

The substituent S1 is a group selected from the group consisting of a halogen atom, an alkyl group, a cycloalkyl group, an aryl group, a heterocyclic group, a cyano group, a hydroxy group, a nitro group, a carboxyl group, an alkoxy group, an aryloxy group, a silyloxy group, a heterocyclic oxy group, an acyloxy group, a carbamoyloxy group, an amino group, an acylamino group, an aminocarbonylamino group, an alkoxycarbonylamino group, an aryloxycarbonylamino group, a sulfamoylamino group, an alkylsulfonylamino group, an arylsulfonylamino group, a mercapto group, an alkylthio group, an arylthio group, a heterocyclic thio group, a sulfamoyl group, a sulfo group, an alkylsulfinyl group, an arylsulfinyl group, an alkylsulfonyl group, an arylsulfonyl group, an acyl group, an aryloxycarbonyl group, an alkoxycarbonyl group, a carbamoyl group, an arylazo or heterocyclic azo group, an imide group, a phosphino group, a phosphinyl group, a phosphinyloxy group, a phosphinylamino group, and a silyl group.

In addition, each of the above-described groups may further have a substituent (for example, one or more groups of each of the above-described groups), as possible. For example, an alkyl group which may have a substituent is also included as the form of the substituent S1.

In addition, in a case where the substituent S1 has a carbon atom, the number of carbon atoms in the substituent S1 is, for example, 1 to 20.

In addition, the number of atoms in the substituent S1, other than hydrogen atoms, is, for example, 1 to 30.

In the substituent S1, examples of the halogen atom include a fluorine atom, a chlorine atom, a bromine atom, and an iodine atom.

In the substituent S1, the number of carbon atoms in the (linear or branched) alkyl group is preferably 1 to 20, more preferably 1 to 10, and still more preferably 1 to 6. Examples of the alkyl group include a methyl group, an ethyl group, a n-propyl group, an i-propyl group, a n-butyl group, a tert-butyl group, and a n-hexyl group.

In the substituent S1, the cycloalkyl group may be monocyclic or polycyclic. Examples of an aspect in which the cycloalkyl group is polycyclic include a bicycloalkyl group. The number of carbon atoms in the cycloalkyl group is preferably 3 to 20, more preferably 3 to 10, still more preferably 6 to 10, and particularly preferably 6.

In the substituent S1, an alkyl moiety in each of the alkoxy group, the alkylthio group, the alkoxycarbonylamino group, the alkylsulfonylamino group, the alkylsulfinyl group, the alkylsulfonyl group, and the alkoxycarbonyl group preferably has the same aspect as the above-described (linear or branched) alkyl group.

In the substituent S1, a hydrocarbon ring constituting the aryl group may be a monocyclic ring or a polycyclic ring (for example, a 2- to 6-membered ring or the like). The number of ring member atoms in the aryl group is preferably 5 to 15, more preferably 6 to 10, and still more preferably 6.

In the substituent S1, an aryl moiety in each of the aryloxy group, the aryloxycarbonylamino group, the arylsulfonylamino group, the arylthio group, the arylsulfinyl group, the arylsulfonyl group, the aryloxycarbonyl group, and the arylazo group preferably has the same aspect as the above-described aryl group.

In the substituent S1, a hydrocarbon ring constituting the heterocyclic group (heteroaryl group) may be a monocyclic ring or a polycyclic ring (for example, a 2- to 6-membered ring or the like). The number of ring member atoms in the heterocyclic group is preferably 5 to 15, and more preferably 5 or 6. In the heterocyclic group, the number of

heteroatoms as the ring member atoms is, for example, 1 to 10, preferably 1 to 3, and more preferably 1 or 2. Examples of the above-described heteroatom include a nitrogen atom, a sulfur atom, and an oxygen atom.

In the substituent S1, a heterocyclic group moiety in each of the heterocyclic oxy group (heteroaryloxy group), the heterocyclic thio group (heteroarylthio group), and the heterocyclic azo group (heteroarylozo group) preferably has the same aspect as the above-described heterocyclic group (heteroaryl group).

In the substituent S1, the acyl group may be an alkylcarbonyl group or an arylcarbonyl group. An alkyl moiety in the alkylcarbonyl group preferably has the same aspect as the above-described (linear or branched) alkyl group. In addition, an aryl group moiety in the arylcarbonyl group preferably has the same aspect as the above-described aryl group.

In the substituent S1, an acyl group moiety in each of the acyloxy group and the acylamino group preferably has the same aspect as the above-described acyl group. Specifically, the acyloxy group may be an alkylcarbonyloxy group or an arylcarbonyloxy group, and the acylamino group may be an alkylcarbonylamino group or an arylcarbonylamino group.

In the substituent S1, the amino group may be an unsubstituted amino group ($-NH_2$) or a substituted amino group (-NHR or $-N(R)_2$).

The substituent (R) in the substituted amino group is preferably an alkyl group or the like.

The above-described alkyl group is preferably linear or branched. In addition, the number of carbon atoms is preferably 1 to 20, more preferably 1 to 10, and still more preferably 1 to 6. Examples of the alkyl group include a methyl group, an ethyl group, a n-propyl group, an i-propyl group, a n-butyl group, a tert-butyl group, and a n-hexyl group.

In the substituent S1, an amino group moiety in each of the acylamino group, the aminocarbonylamino group, the alkoxycarbonylamino group, the aryloxycarbonylamino group, the sulfamoylamino group, the alkylsulfonylamino or arylsulfonylamino group, and the phosphinylamino group may be an unsubstituted amino group (-NH-) or a substituted amino group (-NR-).

The substituent (R) in the substituted amino group is preferably an alkyl group or the like.

The above-described alkyl group is preferably linear or branched. In addition, the number of carbon atoms is preferably 1 to 20, more preferably 1 to 10, and still more preferably 1 to 6. Examples of the alkyl group include a methyl group, an ethyl group, a n-propyl group, an i-propyl group, a n-butyl group, a tert-butyl group, and a n-hexyl group.

In the substituent S1, the silyl group is preferably a group represented by $-Si(R)_3$.

R's in the silyl group each independently represent a substituent.

The substituent represented by R is preferably an alkyl group, an aryl group, or the like.

The above-described alkyl group is preferably linear or branched. In addition, the number of carbon atoms is preferably 1 to 20, more preferably 1 to 10, and still more preferably 1 to 6.

The above-described aryl group preferably has the same aspect as the above-described aryl group, and a phenyl group is more preferable.

In the substituent S1, a silyl group moiety in the silyloxy group preferably has the same aspect as the above-described silyl group.

In the substituent S1, the imide group is preferably a group represented by -CO-NR-CO-R or $-N(-CO-R)_2$.

R's in the imide group each independently represent a hydrogen atom or a substituent.

The substituent represented by R is preferably an alkyl group or an aryl group.

The above-described alkyl group is preferably linear or branched. In addition, the number of carbon atoms is preferably 1 to 20, more preferably 1 to 10, and still more preferably 1 to 6.

The above-described aryl group preferably has the same aspect as the above-described aryl group, and a phenyl group is more preferable.

Specific examples of the specific compound will be shown below, but the specific compound is not limited thereto. In the specific examples shown below, a site represented by a wavy line and * each represent a bonding position. In addition, in the site represented by L, the wavy line is preferably a bonding position to the site represented by M, and * is preferably a bonding position to the site represented by X.

[Table 1]

| Table A1 | **X-L-M-L-X** | | |
|---|---|---|---|
| Compound number | M = | L= | X = |
| Compound A1 | 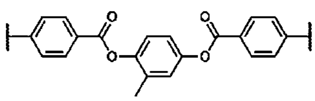 | 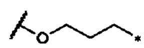 | 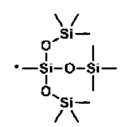 |
| Compound A2 | 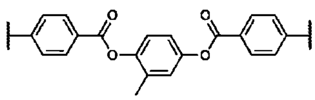 | 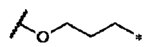 | 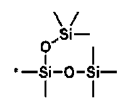 |

(continued)

| Table A1 | X-L-M-L-X | | |
|---|---|---|---|
| Compound number | M = | L= | X = |
| Compound A3 | 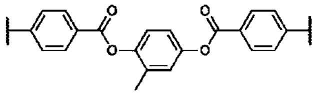 | 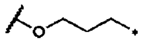 | 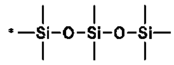 |
| Compound A4 | 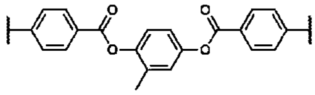 | 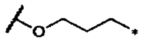 | 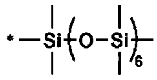 |
| Compound A5 | 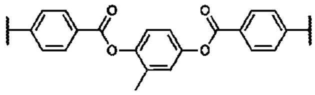 | 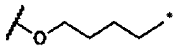 | 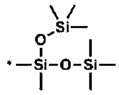 |
| Compound A6 | 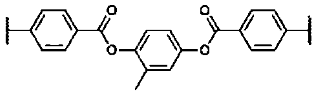 | 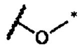 | 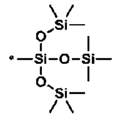 |
| Compound A7 | 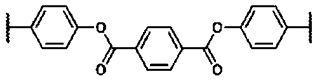 | 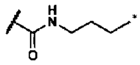 | 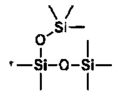 |
| Compound A8 | 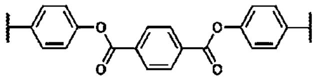 | 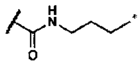 | 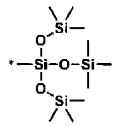 |
| Compound A9 | 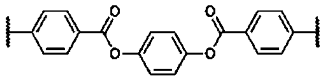 | 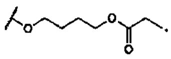 | 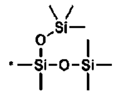 |
| Compound A10 | 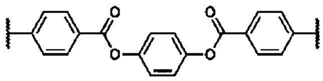 | 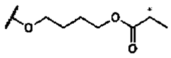 | 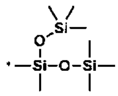 |

[Table 2]

| Table A2 | X-L-M-L-X | | |
|---|---|---|---|
| Compound number | M = | L= | X = |
| Compound A11 | 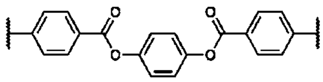 | 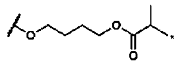 | 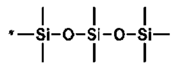 |
| Compound A12 | 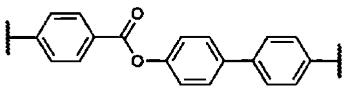 | 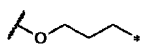 | 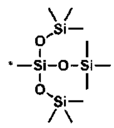 |
| Compound A13 | 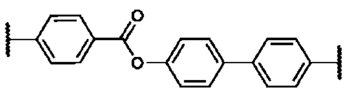 | 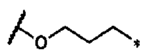 | 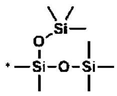 |
| Compound A14 | 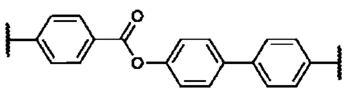 | 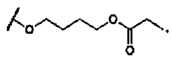 | 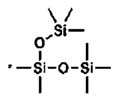 |

(continued)

| Table A2 | X-L-M-L-X | | |
|---|---|---|---|
| Compound number | M = | L= | X = |
| Compound A15 | 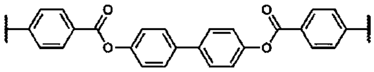 | 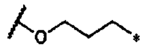 | 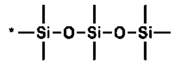 |
| Compound A16 | 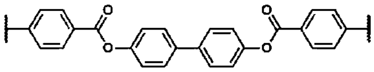 | 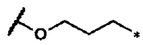 | 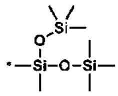 |
| Compound A17 | 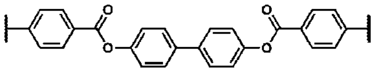 | 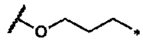 | 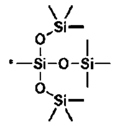 |
| Compound A18 | 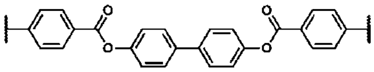 | 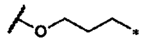 | 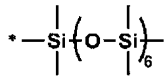 |
| Compound A19 | 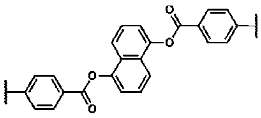 | 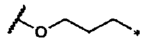 | 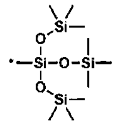 |
| Compound A20 | 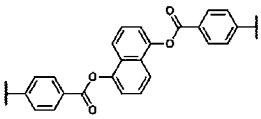 | 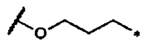 | 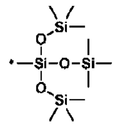 |

[Table 3]

| Table A3 | X-L-M-L-X | | |
|---|---|---|---|
| Compound number | M = | L= | X = |
| Compound A21 | 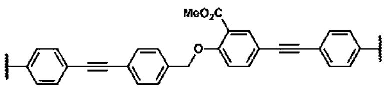 | 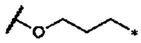 | 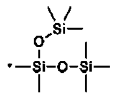 |
| Compound A22 | 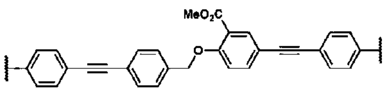 | 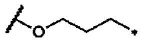 | 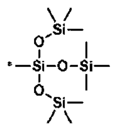 |
| Compound A23 | 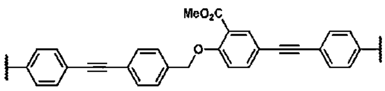 | 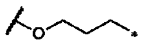 | 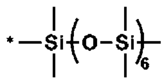 |
| Compound A24 | 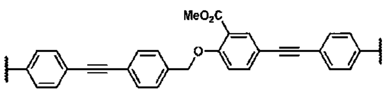 | 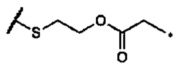 | 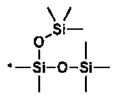 |
| Compound A25 | 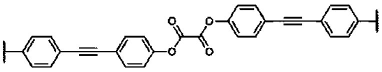 | 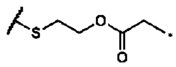 | 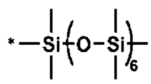 |
| Compound A26 | 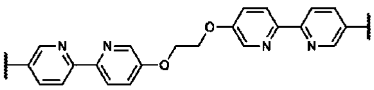 | 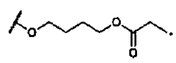 | 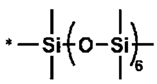 |

(continued)

| Table A3 | X-L-M-L-X | | |
|---|---|---|---|
| Compound number | M = | L= | X = |
| Compound A27 | 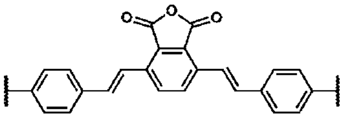 | 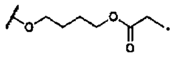 | 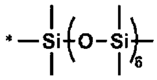 |
| Compound A28 | 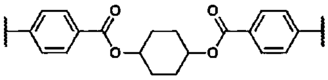 | 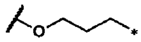 | 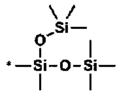 |
| Compound A29 | 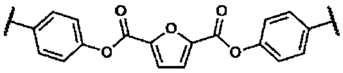 | 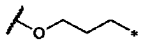 | 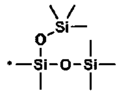 |
| Compound A30 | 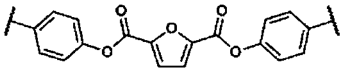 | 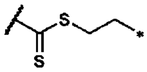 | 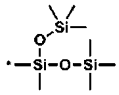 |

[Table 4]

| Table A4 | X-L-M-L-X | | |
|---|---|---|---|
| Compound number | M = | L= | X = |
| Compound A31 | 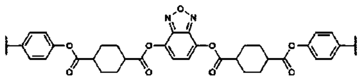 | 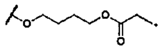 | 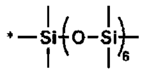 |
| Compound A32 | 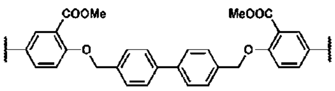 | 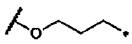 | 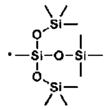 |
| Compound A33 | 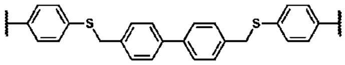 | 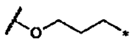 | 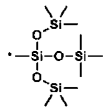 |
| Compound A34 | 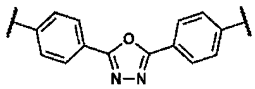 | 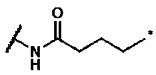 | 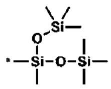 |
| Compound A35 | 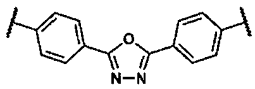 | 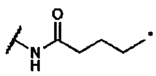 | 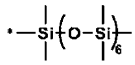 |
| Compound A36 | 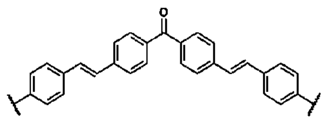 | 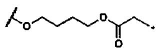 | 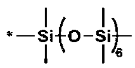 |
| Compound A37 | 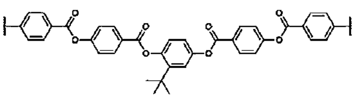 | 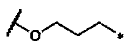 | 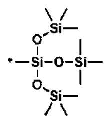 |
| Compound A38 | 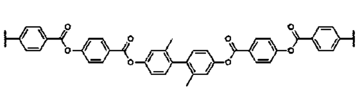 | 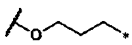 | 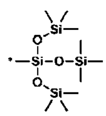 |

(continued)

| Table A4 | X-L-M-L-X | | |
|---|---|---|---|
| Compound number | M = | L= | X = |
| Compound A39 | 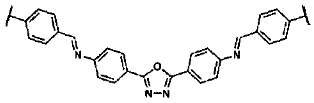 | 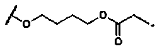 | 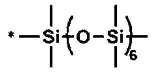 |
| Compound A40 | 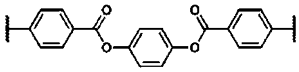 | 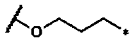 | 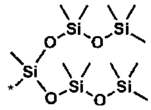 |
| Compound A41 | 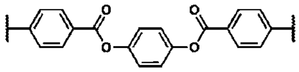 | 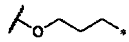 | 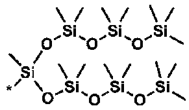 |

[Table 5]

| Table B1 | 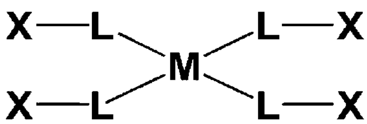 | | |
|---|---|---|---|
| Compound number | M = | L= | X = |
| Compound B1 | 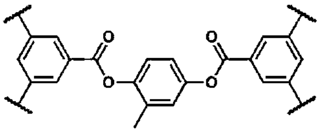 | 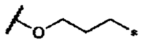 | 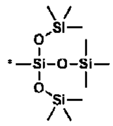 |
| Compound B2 | 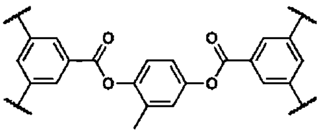 | 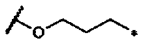 | 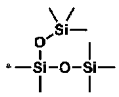 |
| Compound B3 | 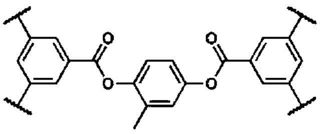 | 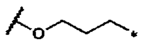 | 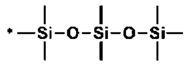 |
| Compound B4 | 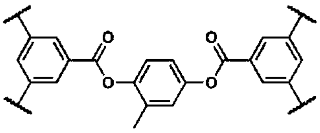 | 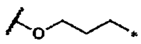 | 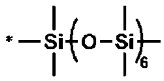 |
| Compound B5 | 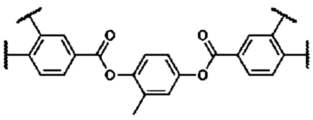 | 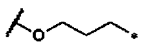 | 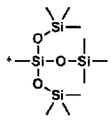 |
| Compound B6 | 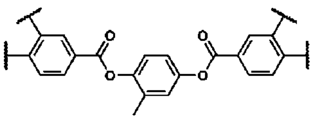 | 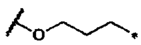 | 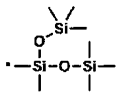 |

(continued)

| Table B1 | 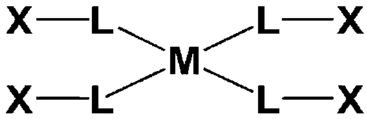 | | |
|---|---|---|---|
| Compound number | M = | L= | X = |
| Compound B7 | 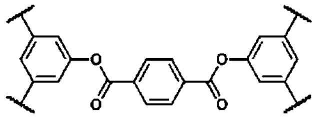 | 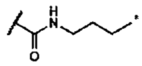 | 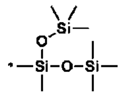 |
| Compound B8 | 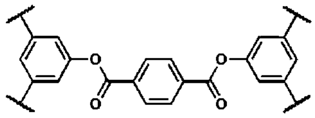 | 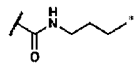 | 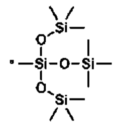 |

[Table 6]

| Table B2 | 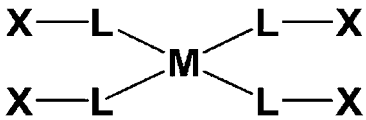 | | |
|---|---|---|---|
| Name | M = | L= | X = |
| Compound B9 | 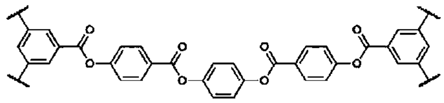 | 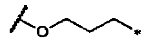 | 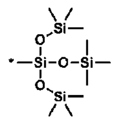 |
| Compound B10 | 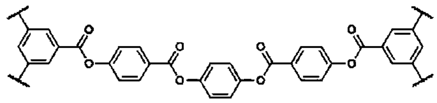 | 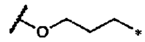 | 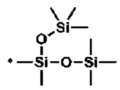 |
| Compound B11 | 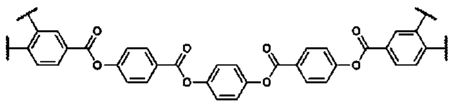 | 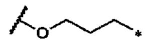 | 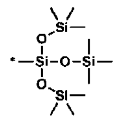 |
| Compound B12 | 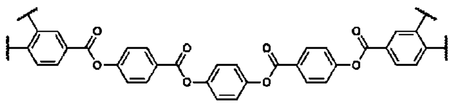 | 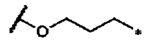 | 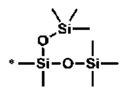 |
| Compound B13 | 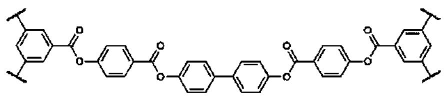 | 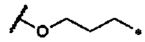 | 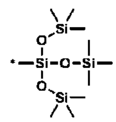 |
| Compound B14 | 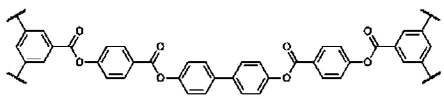 | 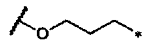 | 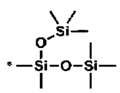 |
| Compound B15 | 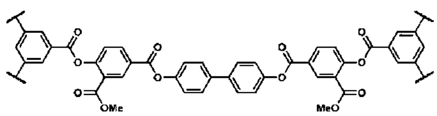 | 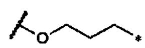 | 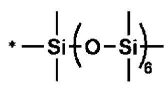 |

(continued)

| Table B2 | 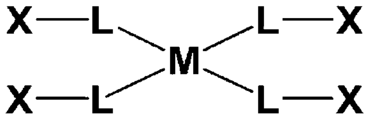 | | |
|---|---|---|---|
| Name | M = | L= | X = |
| Compound B16 | 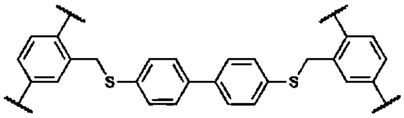 | 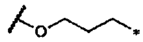 | 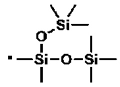 |

[Table 7]

| Table B3 | 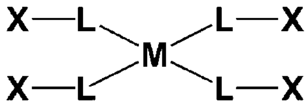 | | |
|---|---|---|---|
| Name | M = | L= | X = |
| Compound B17 | 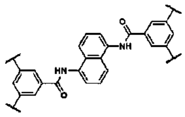 | 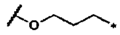 | 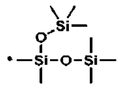 |
| Compound B18 | 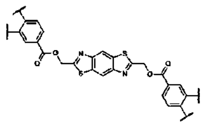 | 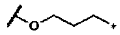 | 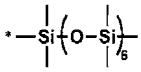 |
| Compound B19 | 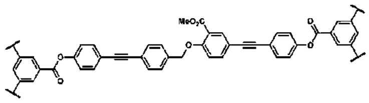 | 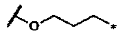 | 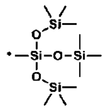 |
| Compound B20 | 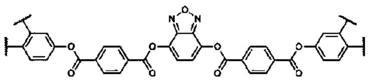 | 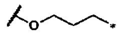 | 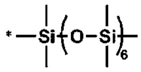 |
| Compound B21 | 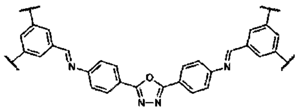 | 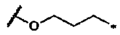 | 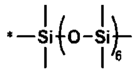 |
| Compound B22 | 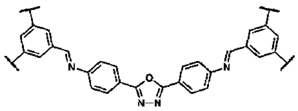 | 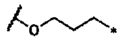 | 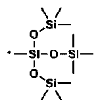 |
| Compound B23 | 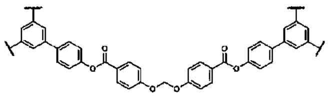 | 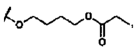 | 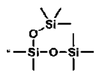 |
| Compound B24 | 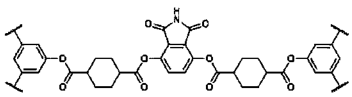 | 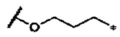 | 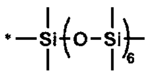 |
| Compound B25 | 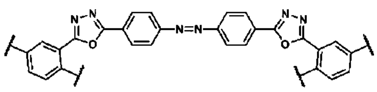 | 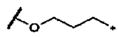 | 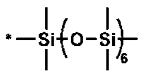 |

(continued)

| Table B3 | 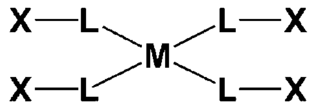 | | |
|---|---|---|---|
| Name | M = | L= | X = |
| Compound B26 | 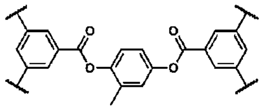 | 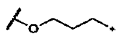 | 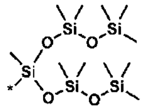 |

[Table 8]

| Table C1 | 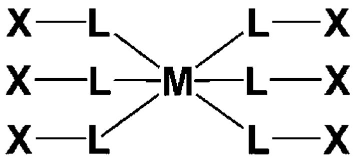 | | |
|---|---|---|---|
| Compound number | M = | L= | X = |
| Compound C1 | 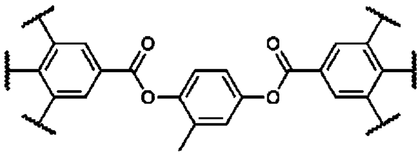 | 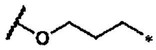 | 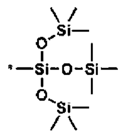 |
| Compound C2 | 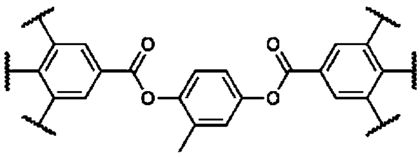 | 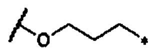 | 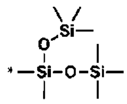 |
| Compound C3 | 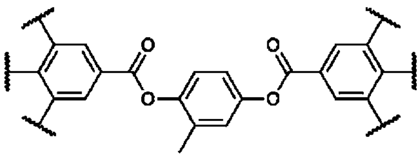 | 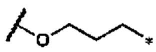 | 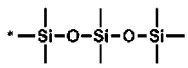 |
| Compound C4 | 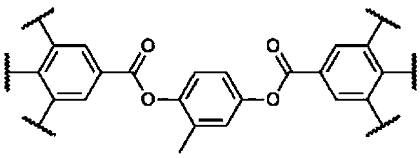 | 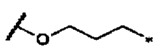 | 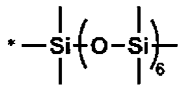 |
| Compound C5 | 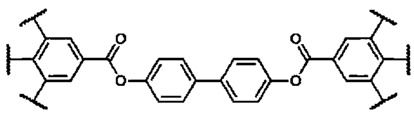 | 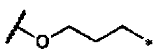 | 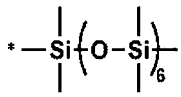 |
| Compound C6 | 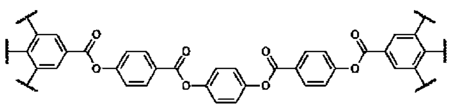 | 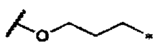 | 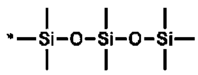 |

[Table 9]

| Table C2 | 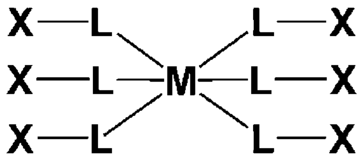 | | |
|---|---|---|---|
| Compound number | M = | L= | X = |
| Compound C7 | 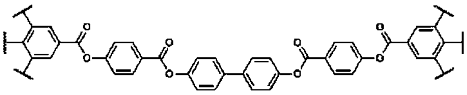 | 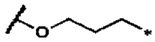 | 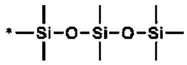 |
| Compound C8 | 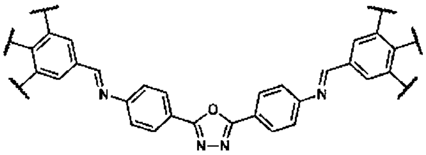 | 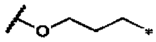 | 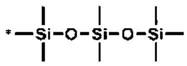 |
| Compound C9 | 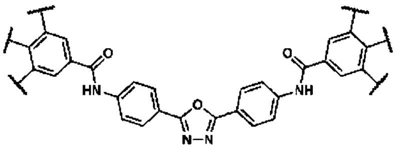 | 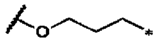 | 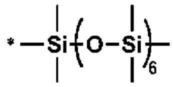 |
| Compound C10 | 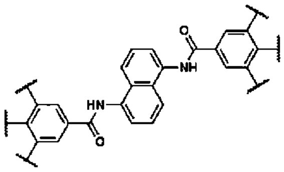 | 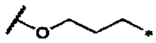 | 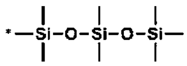 |

[Table 10]

| Table D1 | 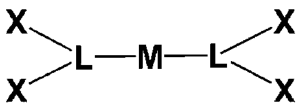 | | |
|---|---|---|---|
| Compound number | M = | L= | X = |
| Compound D 1 | 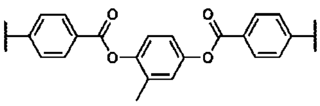 | 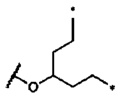 | 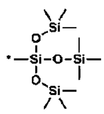 |
| Compound D2 | 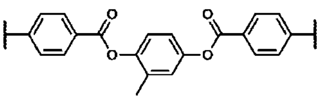 | 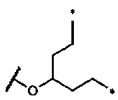 | 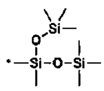 |
| Compound D3 | 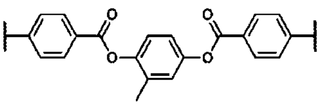 | 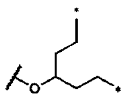 | 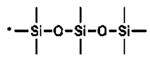 |
| Compound D4 | 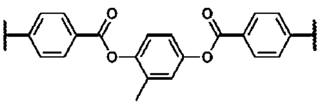 | 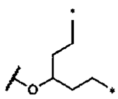 | 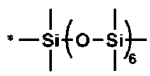 |

(continued)

| Table D1 | 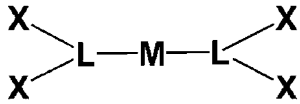 | | |
|---|---|---|---|
| Compound number | M = | L= | X = |
| Compound D5 | 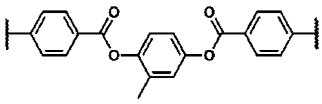 | 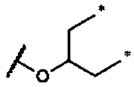 | 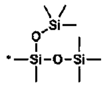 |
| Compound D6 | 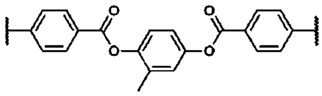 | 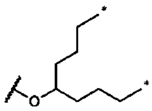 | 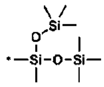 |
| Compound D7 | 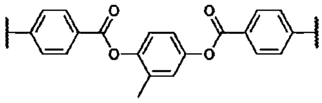 | 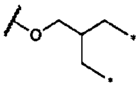 | 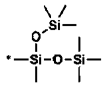 |
| Compound D8 | 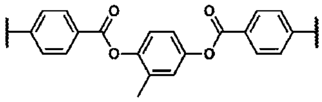 | 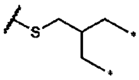 | 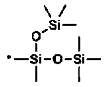 |

[Table 11]

| Table D2 | 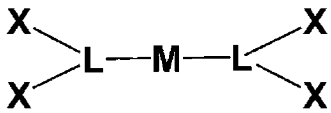 | | |
|---|---|---|---|
| Compound number | M = | L= | X = |
| Compound D9 | 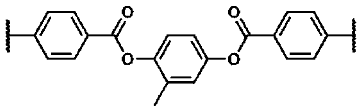 | 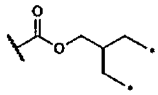 | 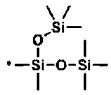 |
| Compound D10 | 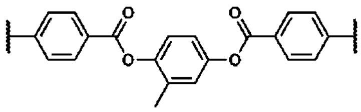 | 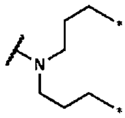 | 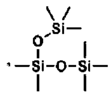 |
| Compound D11 | 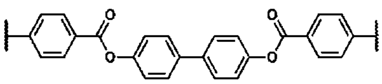 | 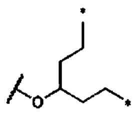 | 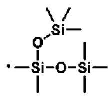 |
| Compound D12 | 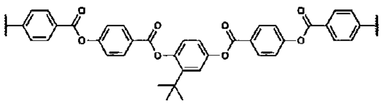 | 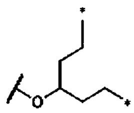 | 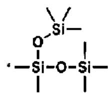 |
| Compound D13 | 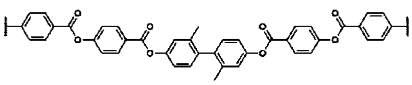 | 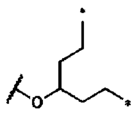 | 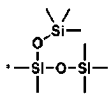 |
| Compound D14 | 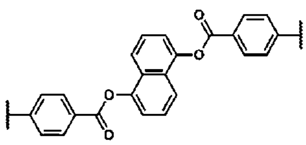 | 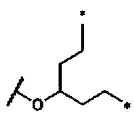 | 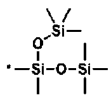 |

(continued)

| Table D2 | 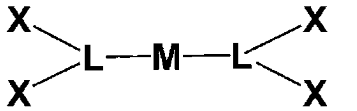 | | |
|---|---|---|---|
| Compound number | M = | L= | X = |
| Compound D15 | 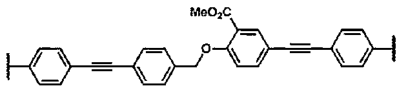 | 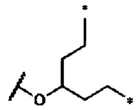 | 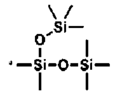 |

[Table 12]

| Table E1 | |
|---|---|
| Compound E1 | 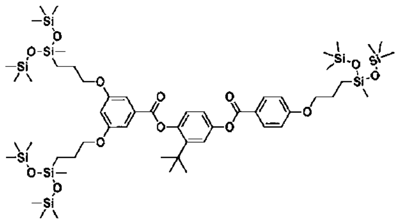 |
| Compound E2 | 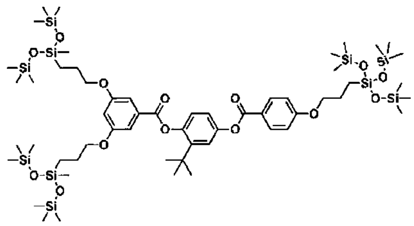 |
| Compound E3 | 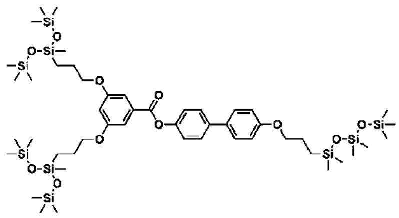 |
| Compound E4 | 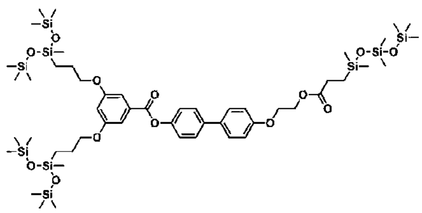 |
| Compound E5 | 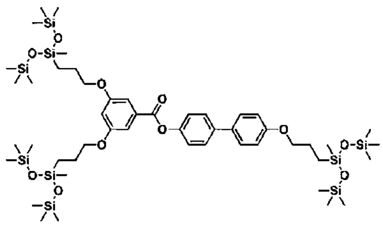 |

(continued)

| Table E1 | |
|---|---|
| Compound E6 | 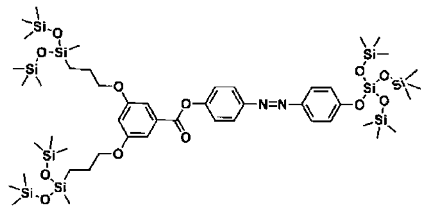 |

A content of the specific compound in the composition is preferably 0.01% to 5.00% by mass, more preferably 0.03% to 3.00% by mass, and still more preferably 0.05% to 1.00% by mass with respect to the total mass of solid contents of the composition.
The specific compound may be used alone, or in combination of two or more kinds thereof.
In a case where two or more kinds of the specific compounds are used in combination, the total content thereof is preferably within the above-described numerical range.
Regarding the specific compound, in an air interface of layers, a tilt angle of the molecules of the liquid crystal compound can be reduced, or the liquid crystal compound can be substantially horizontally aligned.
In the present specification, "horizontal alignment" means that the molecular axis of the liquid crystal compound (in a case where the liquid crystal compound is a rod-like liquid crystal compound, corresponding to a major axis of the liquid crystal compound) and the film surface are parallel to each other, but it is not required to be strictly parallel. In the present specification, "horizontal alignment" means an alignment in which the tilt angle formed with the film surface is less than 20 degrees. In a case where the liquid crystal compound is horizontally aligned in a vicinity of the air interface, orientation defect hardly occurs, and as a result, transparency in the visible light region is high. On the other hand, in a case where the molecules of the liquid crystal compound are aligned at a large tilt angle, for example, in a case of cholesteric phase, since a spiral axis thereof deviates from a normal line of the film surface, reflectivity may decrease, fingerprint patterns may occur, or haze may increase or diffractivity may be exhibited, which are not preferable.

[Polymerizable liquid crystal compound]

The composition contains a polymerizable liquid crystal compound.
The polymerizable liquid crystal compound means a compound having a polymerizable group and exhibiting liquid crystallinity.
For the compound exhibiting liquid crystallinity, it is intended that the compound has properties of expressing a mesophase between a crystalline phase (low temperature side) and an isotropic phase (high temperature side) in a case of changing a temperature. As a specific observation method, optical anisotropy and fluidity derived from a liquid crystalline phase can be confirmed by performing an observation using a polarizing microscope while heating the compound or lowering a temperature of the compound with a hot stage system FP90, manufactured by METTLER TOLEDO, or the like.
The polymerizable liquid crystal compound may be a rod-like liquid crystal compound or a disk-like liquid crystal compound, and examples thereof include a rod-like nematic liquid crystal compound having a polymerizable group. Examples of the rod-like nematic liquid crystal compound include azomethines, azoxys, cyanobiphenyls, cyanophenyl esters, benzoic acid esters, cyclohexanecarboxylic acid phenyl esters, cyanophenylcyclohexanes, cyano-substituted phenylpyrimidines, alkoxy-substituted phenylpyrimidines, phenyldioxanes, tolans, and alkenylcyclohexylbenzonitriles. High-molecular-weight liquid crystal compounds can also be used as well as low-molecular-weight liquid crystal compounds.
It is sufficient that the number of polymerizable groups in the polymerizable liquid crystal compound is 1 or more, and it is preferably 1 to 6, more preferably 1 to 3, and still more preferably 2.
The polymerizable liquid crystal compound is obtained by introducing a polymerizable group into the liquid crystal compound.
Examples of the polymerizable group include known polymerizable groups capable of chain polymerization (chain-polymerizable groups); and among these, an unsaturated bond group (for example, an ethylenically unsaturated group) is more preferable.
Specific examples of the chain-polymerizable group include groups represented by Formulae (P-1) to (P-22). In Formulae (P-1) to (P-22), * represents a bonding position. In addition, Ra represents a hydrogen atom or a methyl group. In addition, Me represents a methyl group, and Et represents an ethyl group. In addition, the hydrogen atom in Formulae (P-1) to (P-22) may be substituted with the group exemplified as the above-described substituent S1.

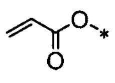 (P-1) 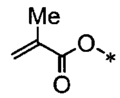 (P-2) 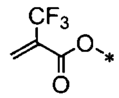 (P-3) 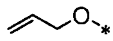 (P-4) 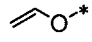 (P-5) 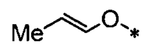 (P-6) 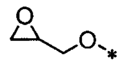 (P-7)

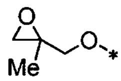 (P-8) 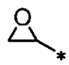 (P-9) 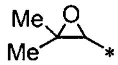 (P-10) 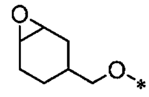 (P-11) 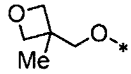 (P-12) 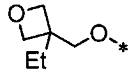 (P-13) 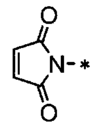 (P-14)

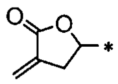 (P-15) 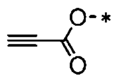 (P-16) 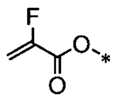 (P-17) 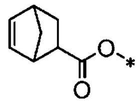 (P-18) 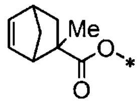 (P-19) 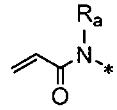 (P-20) 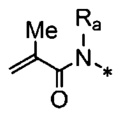 (P-21)

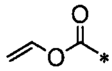 (P-22)

Among these, as the polymerizable group, from the viewpoint that the effect of the present invention is more excellent, it is preferable to represent an acryloyloxy group (corresponding to Formula (P-1)), a methacryloyloxy group (corresponding to Formula (P-2)), an epoxy group (corresponding to Formula (P-9)), a vinyl ether group (corresponding to Formula (P-5)), or a vinyl ester group (corresponding to Formula (P-22)); and it is more preferable to represent an acryloyloxy group or a methacryloyloxy group.

As the polymerizable group liquid crystal compound, a compound represented by Formula (3) is preferable.

$$P^{31}-L^{31}\left(A^{31}-Z^{31}\right)_{n31}A^{32}-L^{32}-P^{32} \qquad (3)$$

In Formula (3), $P^{31}$ and $P^{32}$ each independently represent a hydrogen atom or a substituent. Here, at least one of $P^{31}$ or $P^{32}$ represents a polymerizable group. The polymerizable group is as described above.

As the substituent represented by $P^{31}$ and $P^{32}$, for example, the above-described substituent S1 is preferable.

n31 represents an integer of 1 to 10.

n31 represents preferably an integer of 2 to 8, and more preferably an integer of 2 to 6.

$L^{31}$ and $L^{32}$ each independently represent a single bond or an alkylene group in which at least one $-CH_2-$ may be replaced with -NH-, -O-, -S-, -CO-, -SO-, or $-SO_2-$.

The above-described alkylene group is preferably linear or branched.

The total number of carbon atoms in the alkylene group represented by $L^{31}$ and $L^{32}$ is preferably 1 to 12, more preferably 1 to 10, and still more preferably 1 to 6.

Among these, as $L^{31}$ and $L^{32}$, it is preferable to represent an alkylene group having 1 to 10 carbon atoms in total, in which at least one $-CH_2-$ may be replaced with -O- or -CO-; and it is more preferable to represent an alkylene group having 1 to 6 carbon atoms in total, in which at least one $-CH_2-$ may be replaced with -O- or -CO-.

The above-described alkylene group represented by $L^{31}$ and $L^{32}$ may have a substituent (preferably, the above-described substituent S1), but preferably does not have a substituent.

$Z^{31}$ represents a single bond or a divalent linking group.

The divalent linking group represented by $Z^{31}$ represents a group obtained by combining one or two or more kinds of groups selected from the group consisting of $-CH_2-$, -O-, -NH-, -S-, -C=C-, -CO-, -CS-, -CH=N-, -N=N-, and -C=C-. Here, any hydrogen atom which can be substituted in these groups may be substituted with a halogen atom (a fluorine atom, a chlorine atom, a bromine atom, an iodine atom, or the like).

Specific examples of the divalent linking group represented by $Z^{31}$ include -O-, -S-, $-OCH_2-$, $-CH_2CH_2-$, -CO-, -CS-, -COO-, -CSO-, -CSS-, -CO-S-, -O-CO-O-, -CO-CO-, -CO-NH-, $-SCH_2-$, $-CF_2O-$, $-CF_2S-$, -CH=CH-COO-, -CH=CH-

OCO-, -COO-$CH_2CH_2$-, -OCO-$CH_2CH_2$-, -COO-$CH_2$-, -OCO-$CH_2$-, -COO-NH-, -OCO-NH-, -CH=CH-, -N=N-, -CH=N-N=CH-, -CH=N-, -CF=CF-, -C=C-, -C=C-C=C-, -$OCH_2CH_2O$-, and -$SCH_2CH_2S$-.

Among these, $Z^{31}$ is preferably a single bond, -$OCH_2$-, -$CH_2CH_2$-, -COO-, -CSO-, -CSS-, -CO-S-, -CO-CO-, -CO-NH-, -$SCH_2$-, -$CF_2O$-, -$CF_2S$-, -CH=N-, -C≡C-, or -C=C-C=C-; and more preferably a single bond, -$OCH_2$-, -C=C-, or -COO-.

From the viewpoint that anisotropy is excellent in a case of being used as the optically anisotropic layer, it is preferable that at least one of $Z^{31}$'s is -C≡C-.

$A^{31}$ and $A^{32}$ each independently represent a divalent aromatic ring or a divalent aliphatic ring, which may have a substituent.

The divalent aromatic ring group may be a divalent aromatic hydrocarbon ring group or a divalent aromatic heterocyclic group. In addition, the divalent aromatic ring group may be monocyclic or polycyclic.

The number of carbon atoms in an aromatic hydrocarbon ring constituting the divalent aromatic hydrocarbon ring group is preferably 6 to 10. Specific examples of the aromatic hydrocarbon ring include a benzene ring and a naphthalene ring; a benzene ring is more preferable.

The number of ring members in an aromatic heterocyclic ring constituting the divalent aromatic heterocyclic group is preferably 5 to 10 and more preferably 5 or 6. Examples of a heteroatom included in the aromatic heterocyclic ring include a nitrogen atom, an oxygen atom, and a sulfur atom. The number of heteroatoms included in the aromatic heterocyclic ring is not particularly limited, but for example, it is preferably 1 to 4 and more preferably 1 or 2. Specific examples of the aromatic heterocyclic ring include a pyridine ring, a pyridazine ring, a pyrimidine ring, a pyrazine ring, a triazine ring, a thiophene ring, a thiazole ring, and an imidazole ring.

The divalent alicyclic ring group may be a divalent aliphatic hydrocarbon ring group or a divalent aliphatic heterocyclic group. In addition, the divalent alicyclic group may be monocyclic or polycyclic.

The number of ring members in an aliphatic hydrocarbon ring constituting the divalent aliphatic hydrocarbon ring group is preferably 5 to 12, more preferably 5 to 10, and still more preferably 5 or 6. Specific examples of the aliphatic hydrocarbon ring include a cyclopentane ring, a cyclohexane ring, a cycloheptane ring, a cyclooctane ring, a norbornene ring, and an adamantane ring. Among these, a cyclopentane ring or a cyclohexane ring is preferable.

Examples of a heteroatom included in an aliphatic heterocyclic ring constituting the divalent aliphatic heterocyclic group include a nitrogen atom, an oxygen atom, and a sulfur atom. The number of ring members in the aliphatic heterocyclic ring is not particularly limited, but is preferably 5 to 10. Specific examples of the aliphatic heterocyclic ring include an oxolane ring, an oxane ring, a piperidine ring, and a piperazine ring. In the aliphatic heterocyclic ring, -$CH_2$- constituting the ring may be replaced with -CO-, and examples thereof include a phthalimide ring.

The hydrogen atom in the divalent aromatic ring group and the divalent alicyclic ring group described above may be substituted with another substituent. Examples of other substituents include the above-described substituent S1 and a group represented by Formula (PA), and the above-described substituent S1 is preferable.

Formula (PA) $*-L^A-P^A$

In Formula (PA), $L^A$ represents a single bond or a divalent linking group.

The above-described divalent linking group represented by $L^A$ is not particularly limited, and for example, represents an alkylene group having 1 to 10 carbon atoms in total, in which at least one -$CH_2$- may be replaced with -NH-, -O-, -S-, -CO-, -SO-, or -$SO_2$-.

The above-described alkylene group is preferably linear or branched.

As the divalent linking group represented by $L^A$, a linear or branched alkylene group having 1 to 10 carbon atoms in total, in which at least one -$CH_2$- is replaced with -O-, is preferable.

$P^A$ represents a polymerizable group. The polymerizable group is as described above.

In Formula (3), as $A^{31}$ and $A^{32}$, a divalent aromatic hydrocarbon ring group which may have a substituent is preferable.

Examples of one aspect of $A^{31}$ and $A^{32}$ include a phenylene group having bonds at the 1-position and the 4-position.

In addition, examples of another aspect of $A^{31}$ and $A^{32}$ also include an aspect in which one of n31 pieces of $A^{31}$'s and $A^{32}$ is any aromatic ring group selected from the group consisting of groups represented by Formulae (Ar-1) to (Ar-5).

In a case where $A^{31}$ and $A^{32}$ include any aromatic ring group selected from the group consisting of the groups represented by Formulae (Ar-1) to (Ar-5), an aspect in which n31 represents 2 and a second $A^{31}$ from the $P^{31}$ side represents any aromatic ring selected from the group consisting of the groups represented by Formulae (Ar-1) to (Ar-5) or an aspect in which n31 represents 4 and a third $A^{31}$ from the $P^{31}$ side represents any aromatic ring selected from the group consisting of the groups represented by Formulae (Ar-1) to (Ar-5) is preferable.

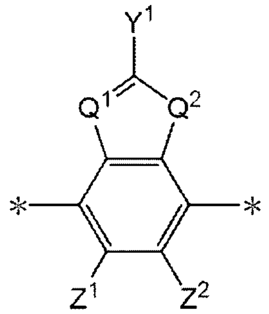

(Ar-1)

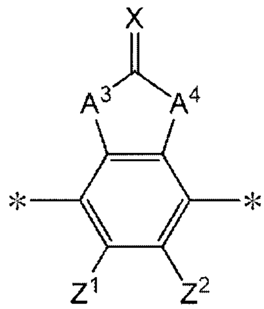

(Ar-2)

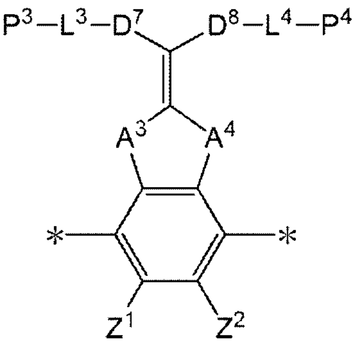

(Ar-3)

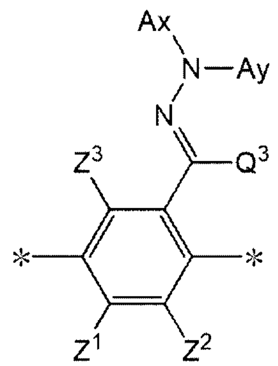

(Ar-4)

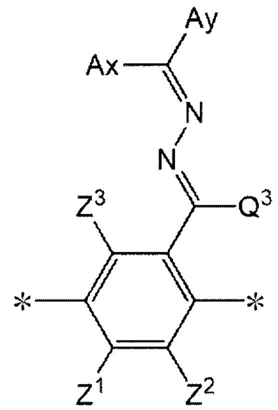

(Ar-5)

In Formula (Ar-1), $Q^1$ represents N or CH.

$Q^2$ represents -S-, -O-, or -N($R^6$)-.

$R^6$ represents a hydrogen atom or an alkyl group having 1 to 6 carbon atoms.

Examples of the alkyl group having 1 to 6 carbon atoms, represented by $R^6$, include a methyl group, an ethyl group, a propyl group, an isopropyl group, a n-butyl group, an isobutyl group, an sec-butyl group, a tert-butyl group, a n-pentyl group, and a n-hexyl group.

$Y^1$ represents an aromatic hydrocarbon group having 6 to 12 carbon atoms, which may have a substituent, an aromatic heterocyclic group having 3 to 12 carbon atoms, which may have a substituent, or an alicyclic hydrocarbon group having 6 to 20 carbon atoms, which may have a substituent, where one or more of $-CH_2-$'s constituting the alicyclic hydrocarbon group may be replaced with -O-, -S-, or NH-.

Examples of the aromatic hydrocarbon group having 6 to 12 carbon atoms, represented by $Y^1$, include a phenyl group, a 2,6-diethylphenyl group, and a naphthyl group.

Examples of the aromatic heterocyclic group having 3 to 12 carbon atoms, represented by $Y^1$, include a thienyl group, a thiazolyl group, a benzothiazolyl group, a benzofuryl group, a furyl group, and a pyridyl group.

Examples of the alicyclic hydrocarbon group having 6 to 20 carbon atoms, represented by $Y^1$, include a cyclohexylene group, a cyclopentylene group, a norbornylene group, and an adamantylene group.

In addition, examples of the substituent which may be included in $Y^1$ include the above-described substituent S1.

In addition, in Formulae (Ar-1) to (Ar-5), $Z^1$, $Z^2$, and $Z^3$ each independently represent a hydrogen atom, a monovalent aliphatic hydrocarbon group having 1 to 20 carbon atoms, a monovalent alicyclic hydrocarbon group having 3 to 20 carbon atoms, a monovalent aromatic hydrocarbon group having 6 to 20 carbon atoms, a monovalent aromatic heterocyclic group having 6 to 20 carbon atoms, a halogen atom, a cyano group, a nitro group, $-OR^7$, $-NR^8R^9$, $-SR^{10}$, $-COOR^{11}$, or $-COR^{12}$.

$R^7$ to $R^{12}$ each independently represent a hydrogen atom or an alkyl group having 1 to 6 carbon atoms.

In addition, $Z^1$ and $Z^2$ may be bonded to each other to form an aromatic ring.

As the monovalent aliphatic hydrocarbon group having 1 to 20 carbon atoms, represented by $Z^1$, $Z^2$, and $Z^3$, an alkyl group having 1 to 15 carbon atoms is preferable, and an alkyl group having 1 to 8 carbon atoms is more preferable.

Examples of the monovalent aliphatic hydrocarbon group having 1 to 20 carbon atoms, represented by $Z^1$, $Z^2$, and $Z^3$, include a methyl group, an ethyl group, an isopropyl group, a tert-pentyl group (1,1-dimethylpropyl group), a tert-butyl group, and a 1,1-dimethyl-3,3-dimethyl-butyl group.

Examples of the monovalent alicyclic hydrocarbon group having 3 to 20 carbon atoms, represented by $Z^1$, $Z^2$, and $Z^3$, include monocyclic saturated hydrocarbon groups such as a cyclopropyl group, a cyclobutyl group, a cyclopentyl group, a cyclohexyl group, a cycloheptyl group, a cyclooctyl group, a cyclodecyl group, a methylcyclohexyl group, and an ethylcyclohexyl group; monocyclic unsaturated hydrocarbon groups such as a cyclobutenyl group, a cyclopentenyl group, a cyclohexenyl group, a cycloheptenyl group, a cyclooctenyl group, a cyclodecenyl group, a cyclopentadienyl group, a cyclohexadienyl group, a cyclooctadienyl group, and a cyclodecadiene group; and polycyclic saturated hydrocarbon groups such as a bicyclo[2.2.1]heptyl group, a bicyclo[2.2.2]octyl group, a tricyclo[5.2.1.$0^{2,6}$]decyl group, a tricyclo [3.3.1.$1^{3,7}$]decyl group, a tetracyclo[6.2.1.$1^{3,6}$.$0^{2,7}$]dodecyl group, and an adamantyl group.

As the monovalent aromatic hydrocarbon group having 6 to 20 carbon atoms, represented by $Z^1$, $Z^2$, and $Z^3$, an aryl group having 6 to 12 carbon atoms (particularly, a phenyl group) is preferable. Examples of the monovalent aromatic hydrocarbon group having 6 to 20 carbon atoms, represented by $Z^1$, $Z^2$, and $Z^3$, include a phenyl group, a 2,6-diethylphenyl group, a naphthyl group, and a biphenyl group.

Examples of the monovalent aromatic heterocyclic group having 6 to 20 carbon atoms, represented by $Z^1$, $Z^2$, and $Z^3$, include a 4-pyridyl group, a 2-furyl group, a 2-thienyl group, a 2-pyrimidinyl group, and a 2-benzothiazolyl group.

Examples of the halogen atom represented by $Z^1$, $Z^2$, and $Z^3$ include a fluorine atom, a chlorine atom, a bromine atom, and an iodine atom.

Examples of the alkyl group having 1 to 6 carbon atoms, represented by $R^7$ to $R^{12}$, include a methyl group, an ethyl group, a propyl group, an isopropyl group, a n-butyl group, an isobutyl group, an sec-butyl group, a tert-butyl group, a n-pentyl group, and a n-hexyl group.

In Formulae (Ar-2) and (Ar-3), $A^3$ and $A^4$ each independently represent a group selected from the group consisting of -O-, -N($R^{13}$)-, -S-, and -CO-.

$R^{13}$ represents a hydrogen atom or a substituent.

Examples of the substituent represented by $R^{13}$ include the above-described substituent S1.

In Formula (Ar-2), X represents a hydrogen atom or a non-metal atom of Groups 14 to 16 to which a substituent may be bonded.

Examples of the non-metal atom of Groups 14 to 16, represented by X, include an oxygen atom, a sulfur atom, a nitrogen atom to which a hydrogen atom or a substituent is bonded [=N-$R^{N1}$, $R^{N1}$ represents a hydrogen atom or a substituent], and a carbon atom to which a hydrogen atom or a substituent is bonded [=C-$(R^{C1})_2$, $R^{C1}$ represents a hydrogen atom or a substituent].

Specific examples of the substituent include an alkyl group, an alkoxy group, an alkyl-substituted alkoxy group, a cyclic alkyl group, an aryl group (for example, a phenyl group, a naphthyl group, and the like), a cyano group, an amino group, a nitro group, an alkylcarbonyl group, a sulfo group, and a hydroxyl group.

In Formula (Ar-3), $D^7$ and $D^8$ each independently represent a single bond, -CO-, -O-, -S-, -C(=S)-, -$CR^1R^2$-, -$CR^3$=$CR^4$-, -$NR^5$-, or a divalent linking group consisting of a combination of two or more of these groups.

$R^1$ to $R^5$ each independently represent a hydrogen atom, a fluorine atom, or an alkyl group having 1 to 12 carbon atoms.

Examples of the divalent linking groups represented by $D^7$ and $D^8$ include -CO-, -O-, -CO-O-, -CSO-, -$CR^1R^2$-, -$CR^1R^2$-$CR^1R^2$-, -O-$CR^1R^2$-, -$CR^1R^2$-O-$CR^1R^2$-, -CO-O-$CR^1R^2$-, -O-CO-$CR^1R^2$-, -$CR^1R^2$-O-CO-$CR^1R^2$-, -$CR^1R^2$-CO-O-$CR^1R^2$-, -$NR^5$-$CR^1R^2$-, and -CO-$NR^5$-; and -CO-, -O-, or -CO-O- is preferable.

In Formula (Ar-3), $L^3$ and $L^4$ each independently represent a single bond, a chain-like (linear or branched) alkylene group having 1 to 14 carbon atoms, or a divalent linking group in which one or more of -$CH_2$-'s constituting the chain-like (linear or branched) alkylene group having 1 to 14 carbon atoms is replaced with -O-, -S-, -NH-, -N(Q)-, or -CO-.

Q represents a substituent. Examples of the substituent include the above-described substituent S1.

In Formula (Ar-3), $P^3$ and $P^4$ each independently represent a monovalent organic group. However, at least one of $P^3$ or $P^4$ represents a polymerizable group.

Examples of the monovalent organic group represented by $P^3$ and $P^4$ include a group corresponding to the organic group exemplified as the substituent S1 (preferably, an alkyl group, an aryl group, or a heteroaryl group) and a polymerizable group (preferably, the monovalent group represented by Formulae (P-1) to (P-22) described above).

In Formulae (Ar-4) and (Ar-5), Ax represents an organic group having 2 to 30 carbon atoms, which has at least one aromatic ring selected from the group consisting of an aromatic hydrocarbon ring and an aromatic heterocyclic ring.

In addition, Ay represents a hydrogen atom, an alkyl group having 1 to 12 carbon atoms, which may have a substituent, or an organic group having 2 to 30 carbon atoms which has at least one aromatic ring selected from the group consisting of an aromatic hydrocarbon ring and an aromatic heterocyclic ring. At least one -$CH_2$- in the alkyl group of Ay may be replaced with -O-, -S-, -CO-, -SO-, -$SO_2$-, or -NH-.

Here, the aromatic rings in Ax and Ay may have a substituent, and Ax and Ay may be bonded to each other to form a ring.

In addition, $Q^3$ represents a hydrogen atom or an alkyl group having 1 to 6 carbon atoms, which may have a substituent.

Examples of Ax and Ay include those described in paragraphs [0039] to [0095] of WO2014/010325A.

In addition, examples of the alkyl group having 1 to 20 carbon atoms, represented by $Q^3$, include a methyl group, an ethyl group, a propyl group, an isopropyl group, a n-butyl group, an isobutyl group, an sec-butyl group, a tert-butyl group, a n-pentyl group, and a n-hexyl group. Examples of the substituent include the above-described substituent S1.

In a case where a plurality of $A^{31}$'s are present in Formula (3), the plurality of $A^{31}$'s may be the same or different from each other. In a case where a plurality of $Z^{31}$'s are present in the formula, the plurality of $Z^{31}$'s may be the same or different from each other.

It is also preferable that the polymerizable liquid crystal compound includes a tolan structural moiety in the molecule. The tolan structural moiety refers to a structural moiety represented by *-Ph-C=C-Ph-* (here, Ph represents a benzene ring group which may have a substituent, and * represents a bonding position).

In a case where the polymerizable liquid crystal compound includes the tolan structural moiety in the molecule, diffracted light with a large diffraction angle and a high diffraction efficiency is likely obtained by the optically anisotropic layer formed of the composition.

In addition, in the related art, the optically anisotropic layer formed of the composition containing the liquid crystal compound including the tolan structural moiety may have deteriorated laminatability. As a result of the studies of the present inventors, it has been found that, by using the specific compound in combination with the polymerizable liquid crystal compound including the tolan structural moiety (in other words, in a case where the composition contains the polymerizable liquid crystal compound including the tolan structural moiety and the specific compound), an optically anisotropic layer having excellent anisotropy and excellent laminatability can be formed.

In addition, it is also preferable that the polymerizable liquid crystal compound is a polymerizable liquid crystal compound having reverse wavelength dispersibility.

In the present specification, the "polymerizable liquid crystal compound having reverse wavelength dispersibility" means a property that, in a case where an in-plane retardation (Re) value in a visible light region is measured for an optically anisotropic layer produced using such a liquid crystal compound, the Re value increases as a measurement wavelength increases.

As the polymerizable liquid crystal compound, compounds described in "Makromol. Chem., vol. 190, p. 2255 (1989), Advanced Materials, vol. 5, p. 107 (1993)", US4683327A, US5622648A, US5770107A, WO95/022586A, WO95/024455A, WO97/000600A, WO98/023580A, WO98/052905A, JP1989-272551A (JP-H1-272551A), JP1994-016616A (JP-H6-016616A), JP1995-110469A (JP-H7-110469A), JP1999-080081A (JP-H11-080081A), JP2001-328973A, and the like can also be preferably used.

In addition, as the polymerizable rod-like liquid crystal compound, for example, compounds described in JP1999-513019A (JP-H11-513019A) and JP2007-279688A can also be preferably used.

Two or more kinds of polymerizable liquid crystal compounds may be used in combination. In a case where two or more kinds of polymerizable liquid crystal compounds are used in combination, an alignment temperature can be decreased.

In addition, as a polymerizable liquid crystal compound other than the above, a cyclic organopolysiloxane compound having a cholesteric phase, as described in JP1982-165480A (JP-S57-165480A), or the like can also be used.

In addition, the polymerizable liquid crystal compound may be a polymer liquid crystal compound. As the polymer liquid crystal compound, a polymer in which a mesogen group exhibiting liquid crystal are introduced into the main chain, the side chain, or both main chain and side chain, a polymeric cholesteric liquid crystal in which a cholesteryl group is introduced into the side chain, a liquid crystalline polymer as described in JP1997-133810A (JP-H9-133810A), a liquid crystalline polymer as described in JP1999-293252A (JP-H11-293252A), and the like can be used.

As the polymerizable disk-like liquid crystal compound, for example, compounds described in JP2007-108732A and JP2010-244038A can also be preferably used.

From the viewpoint that anisotropy is excellent in a case of being used as the optically anisotropic layer and the viewpoint that diffracted light with a large diffraction angle and a high diffraction efficiency can be obtained in a case of being used as the diffraction element, a birefringence index $\Delta n$ of the liquid crystal compound is preferably 0.15 or more, more preferably 0.20 or more, and still more preferably 0.25 or more. The upper limit thereof is not particularly limited, but is usually 0.50 or less.

In addition, specific examples of the polymerizable liquid crystal compound having a large refractive index anisotropy include compounds described in JP2009-102245A, JP4655348B, JP4524827B, JP4720200B, JP2004-091380A, JP3972430B, JP4517416B, JP2002-128742A, JP4810750B, JP5888544B, JP2014-019654A, JP6241654B, JP6372060B, JP6323144B, JP2005-015406A, JP2007-230968A, JP6761484B, JP6681992B, WO19/182129A, CN01134217A, KR101069555B, KR101690767B, CN20120229730A, JP4053782B, JP2009-249406A, JP4121075B, JP2005-528416A, US6514578B, WO06/006819A, JP2011-184417A, JP2013-095685A, JP2013-103897A, JP2002-088008A, JP2002-226412A, JP2012-167214A, JP2012-167068A, JP2018-084511A, JP2003-055317A, JP2001-329264A, JP2002-030016A, JP2003-055664A, JP2018-070889A, CN102557896B, US2015369982A, JP2020-105264A, JP2014-224237A, JP2012-051862A, JP2010-106274A,

JP2005-179557A, JP2005-035985A, JP2002-012579A, JP2002-003845A, JP2001-233837A, JP2019-532167A, JP2016-509247A, JP2010-503733A, JP2003-533557A, WO19/098115A, WO18/034216A, WO18/221236A, WO18/123396A, WO18/003482A, WO17/086143A, WO14/192655A, WO13/161669A, and WO09/104468A.

A content of the polymerizable liquid crystal compound in the composition is not particularly limited, but is preferably 5% to 99% by mass, more preferably 25% to 98% by mass, and still more preferably 75% to 98% by mass with respect to the total mass of solid contents of the composition.

In the composition, the polymerizable liquid crystal compound may be used alone or in combination of two or more kinds thereof. In a case where two or more kinds thereof are used in combination, the total content thereof is preferably within the above-described range.

From the viewpoint that the alignment temperature is likely to be decreased, the composition preferably contains two or more kinds of the polymerizable liquid crystal compounds.

Specific examples of the polymerizable liquid crystal compound are shown below, but polymerizable liquid crystal compound is not limited thereto.

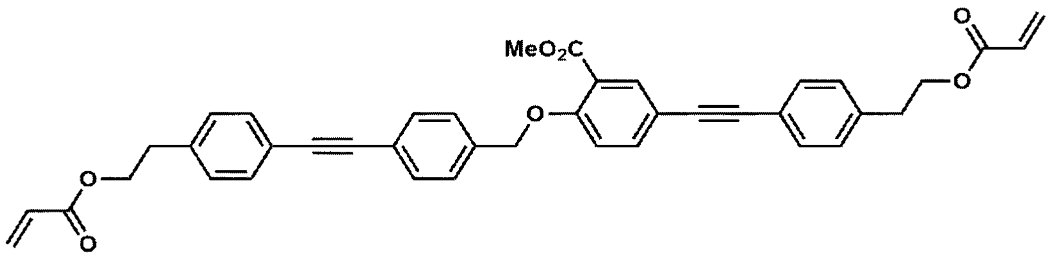

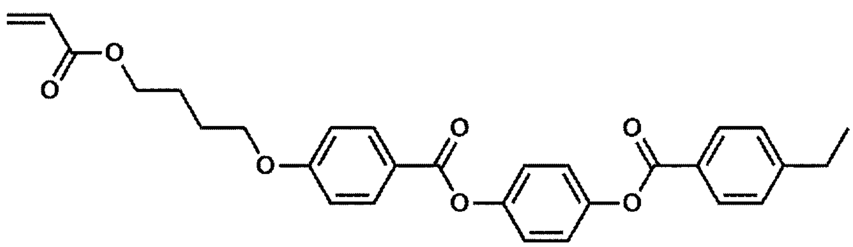

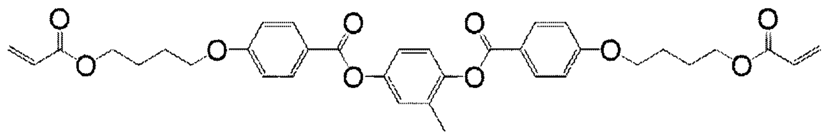

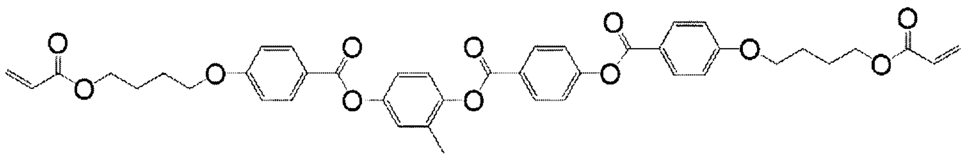

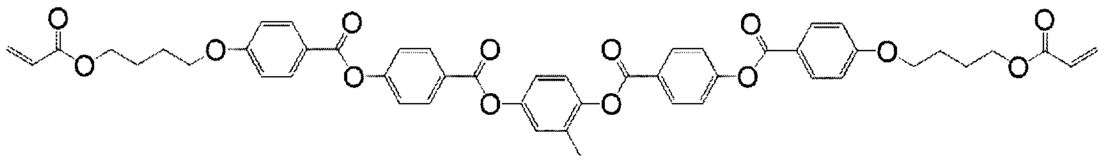

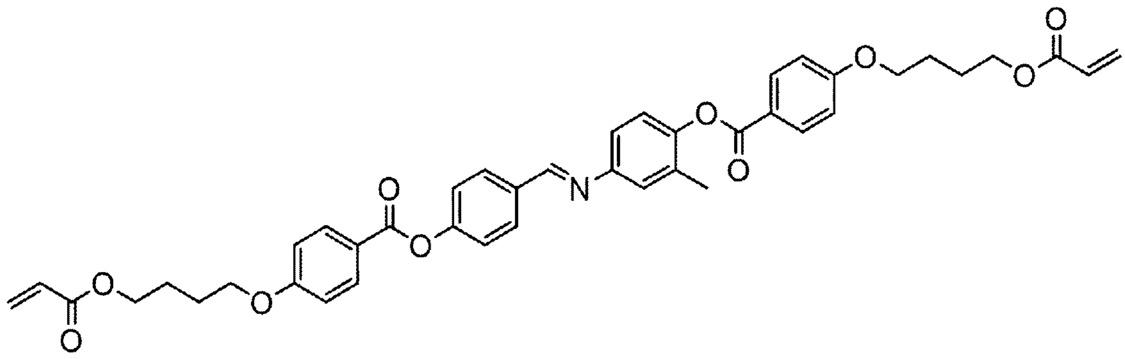

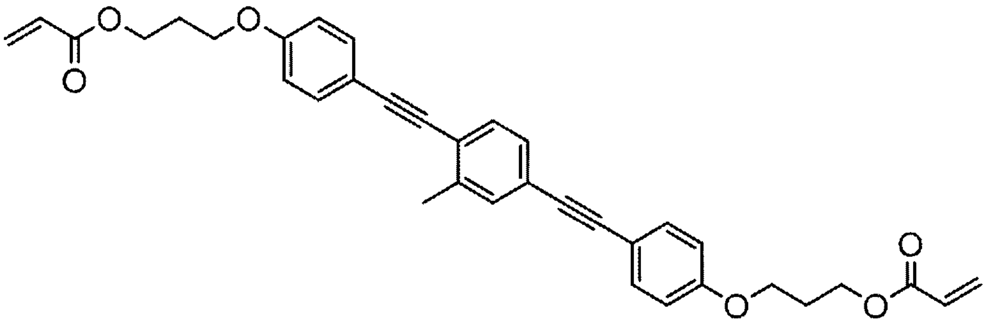

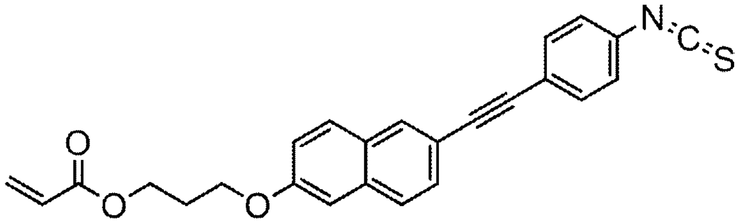

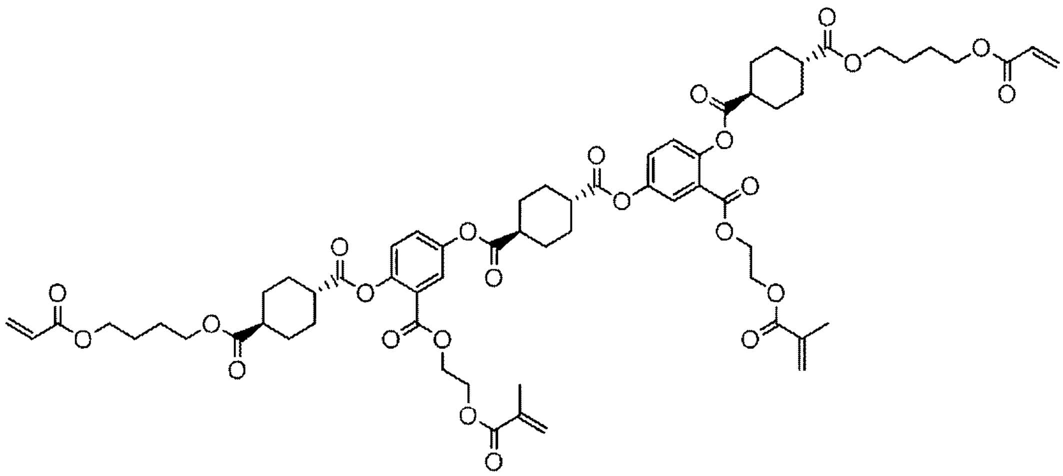

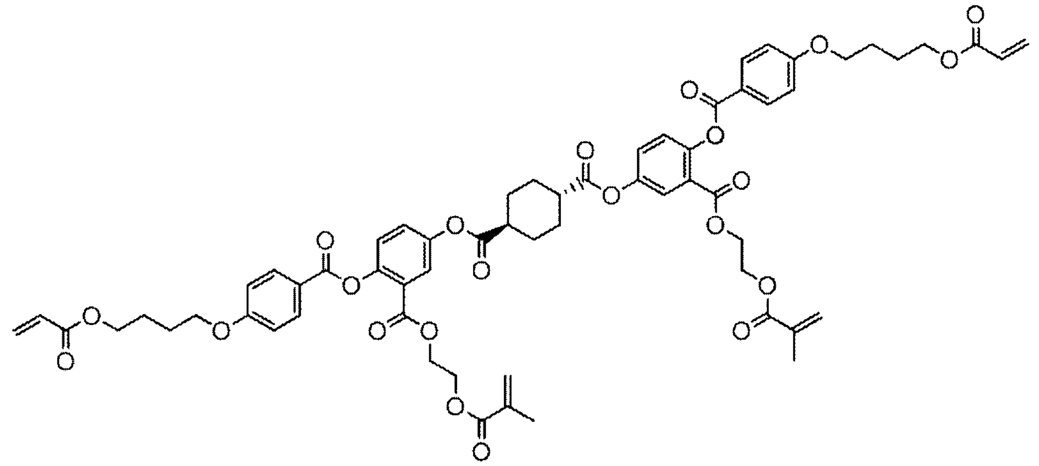

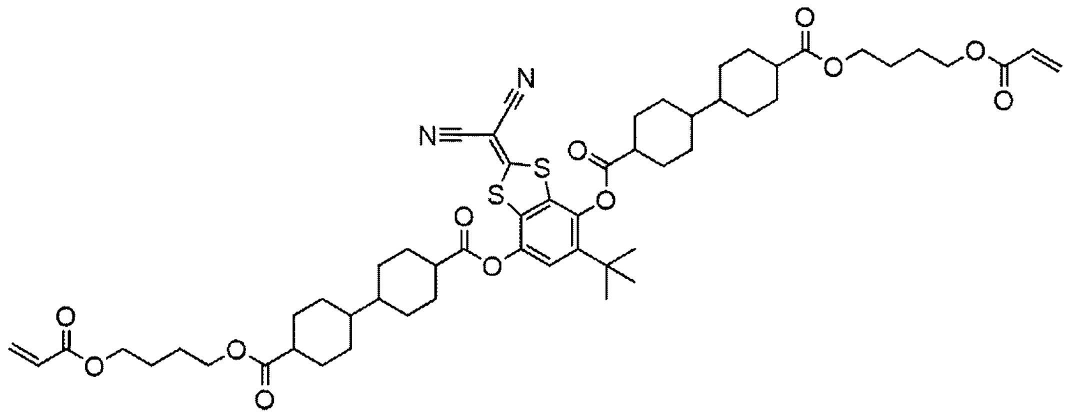

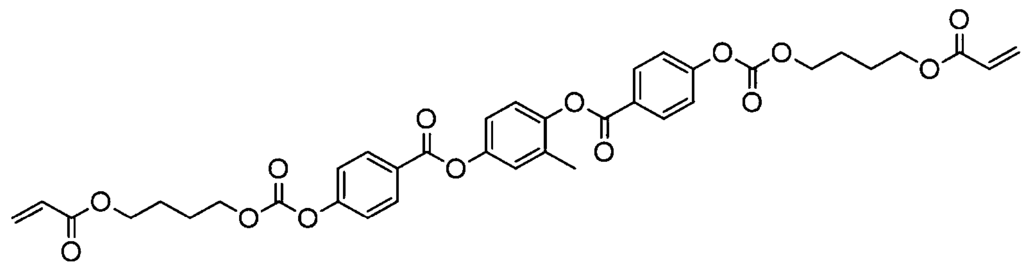

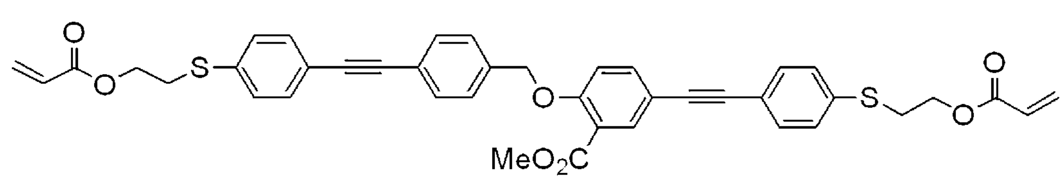

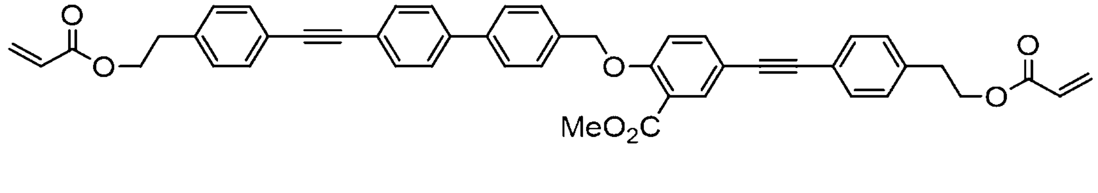

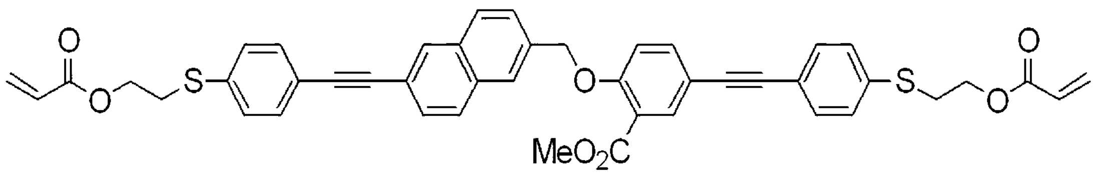

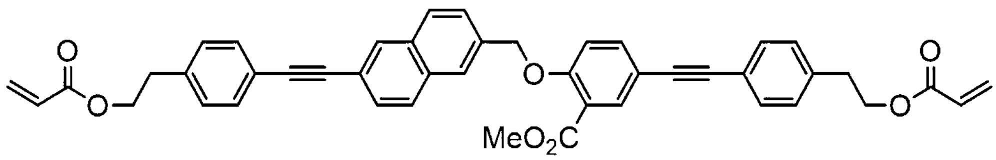

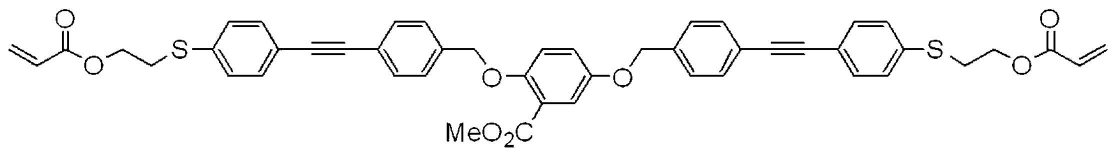

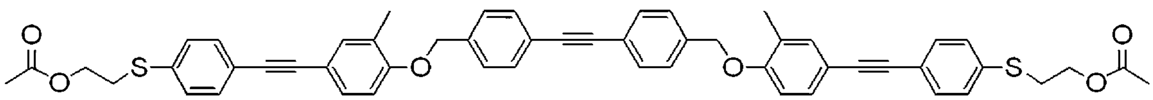

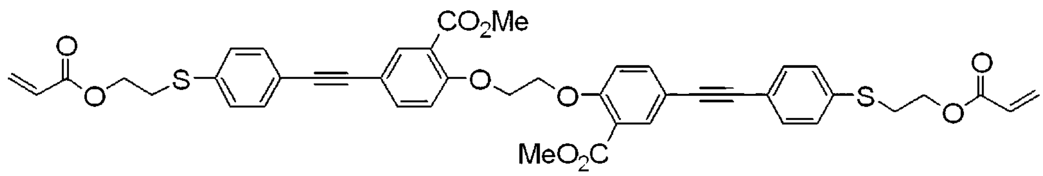

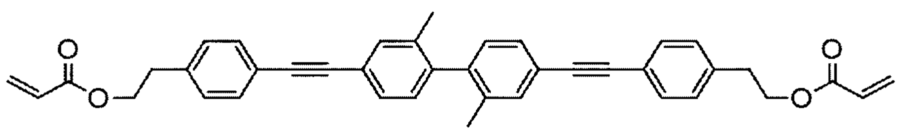

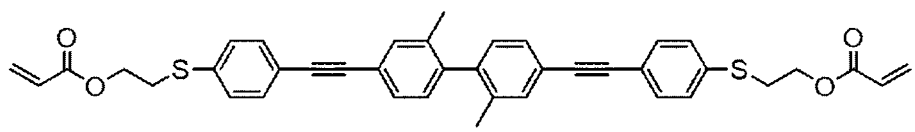

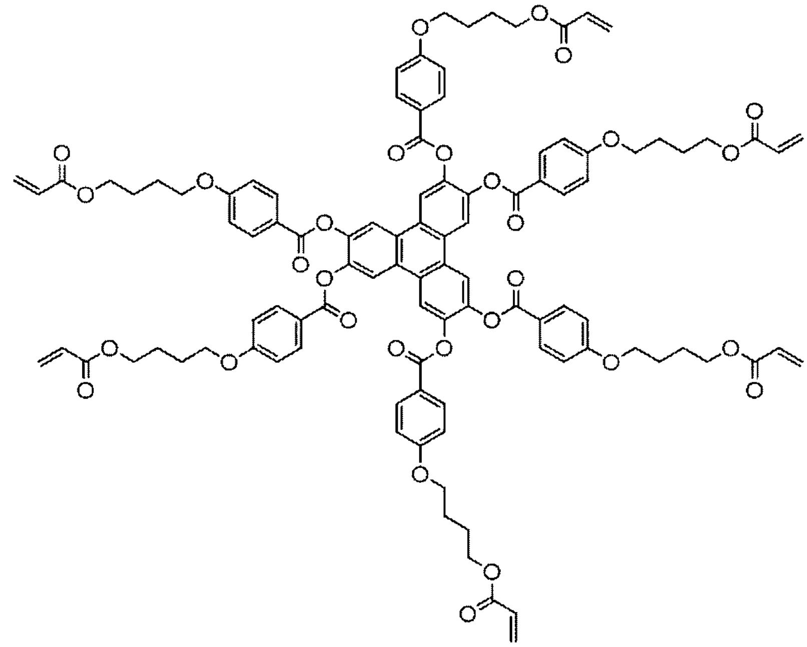

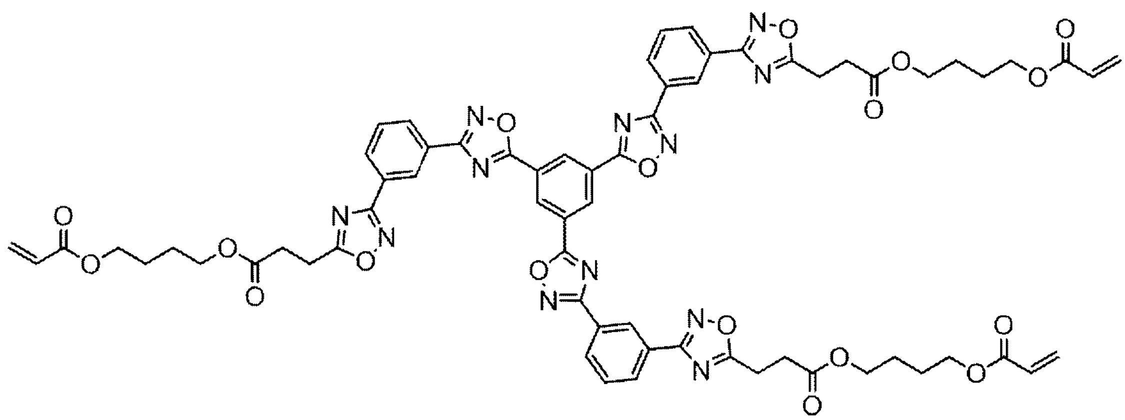

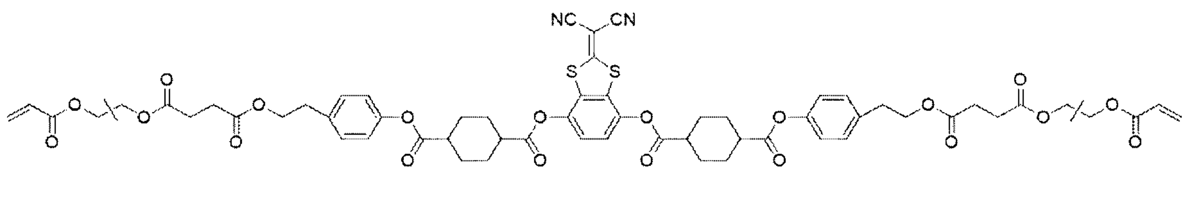

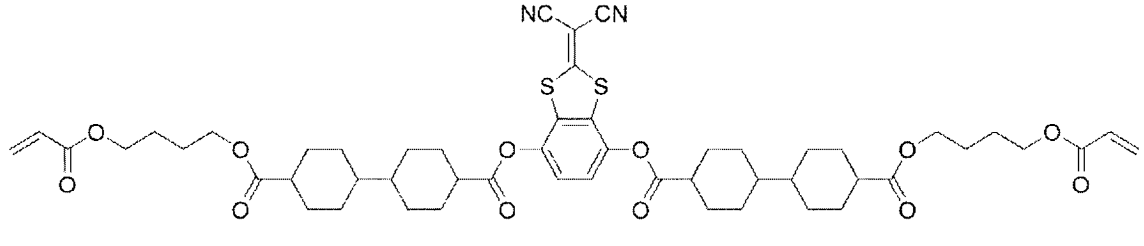

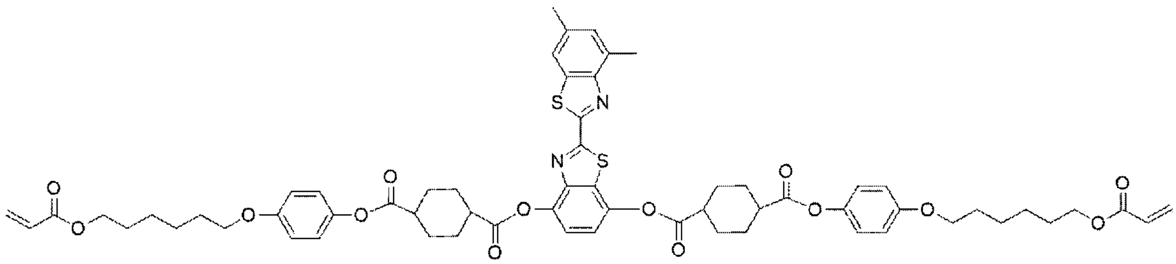

In addition, preferred examples of the polymerizable liquid crystal compound also include compounds represented by Formulae (1) to (22) (among these, those exhibiting smectic properties). K (side chain structure) in Formulae (1) to (22) corresponds to any of Table K1 to Table K3 described below.

In Tables K1 to K3, "*" shown in the side chain structure of K represents a bonding position to an aromatic ring specified in Formulae (1) to (22).

In addition, in the side chain structures shown as 2-2 in Table K2 and 3-2 in Table 3, a group adjacent to each of the acryloyloxy group and the methacryloyl group represents a propylene group (a group in which a methyl group is replaced with an ethylene group), and represents a mixture of regioisomers in which the position of the methyl group is different.

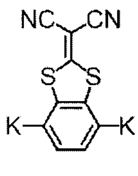
(1)

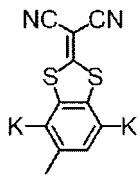
(2)

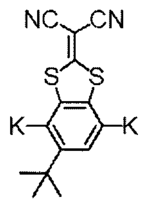
(3)

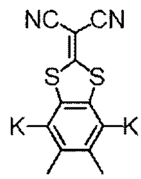
(4)

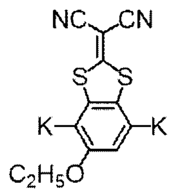
(5)

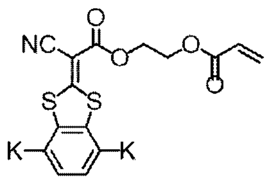
(6)

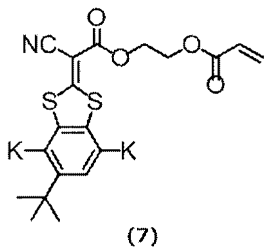
(7)

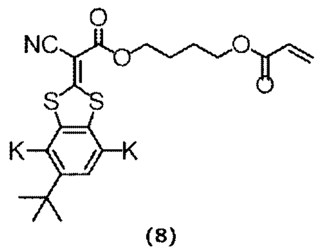
(8)

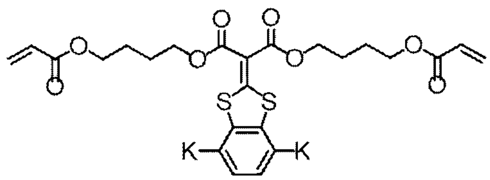
(9)

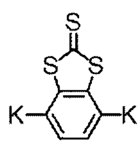
(10)

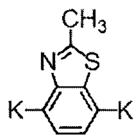
(11)

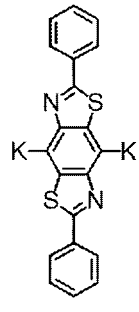
(12)

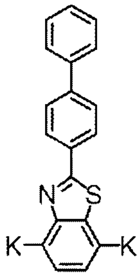
(13)

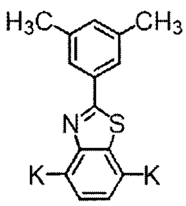
(14)

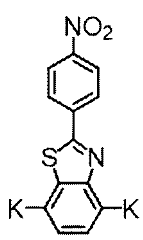
(15)

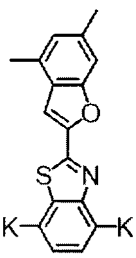
(16)

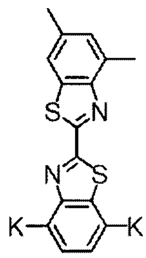
(17)

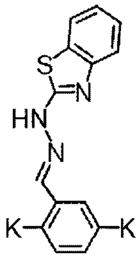

(18)

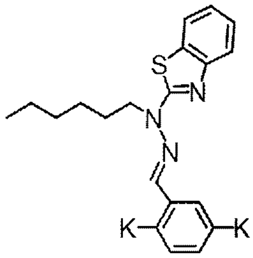

(19)

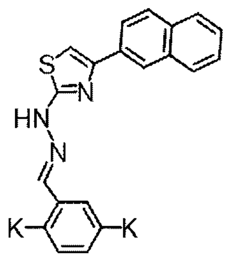

(20)

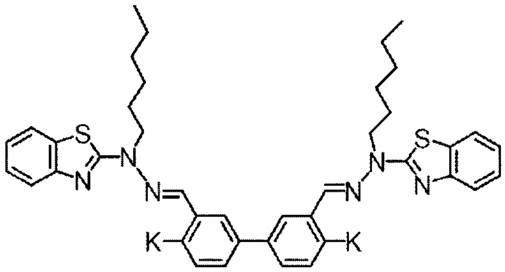

(21)

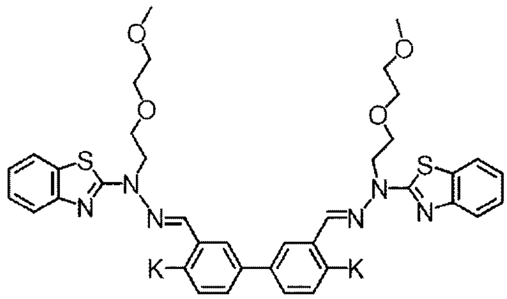

(22)

[Table 13]

| Table K-1 | K (side chain structure) |
| --- | --- |
| 1-1 | 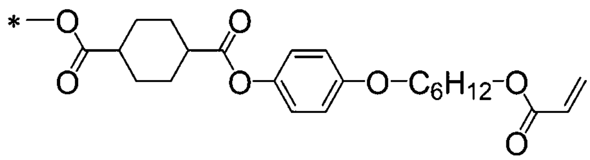 |
| 1-2 | 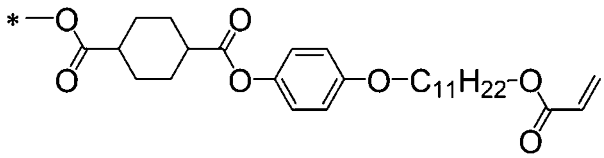 |
| 1-3 | 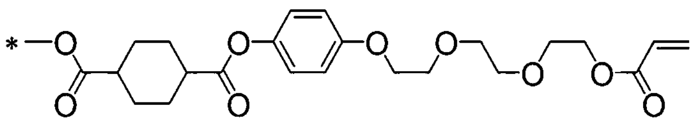 |
| 1-4 | 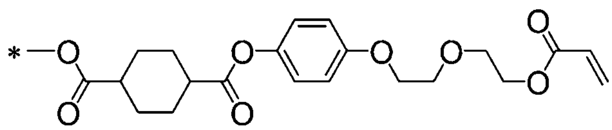 |
| 1-5 | 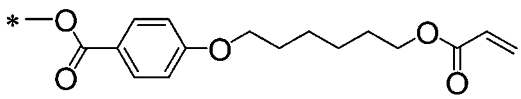 |
| 1-6 | 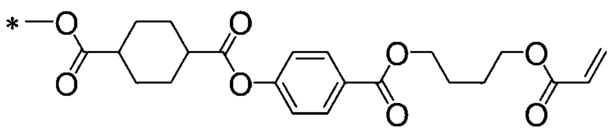 |

[Table 14]

| Table K-2 | K (side chain structure) |
|---|---|
| 2-1 | 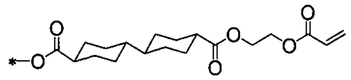 |
| 2-2 | 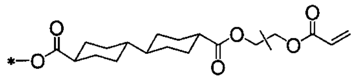 |
| 2-3 | 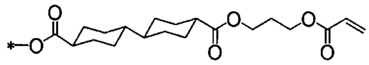 |
| 2-4 | 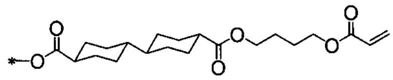 |
| 2-5 | 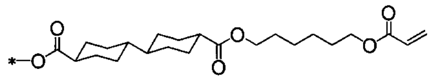 |
| 2-6 | 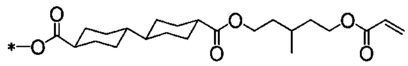 |
| 2-7 | 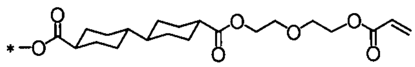 |
| 2-8 | 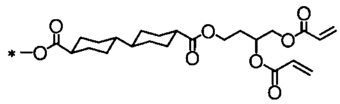 |
| 2-9 | 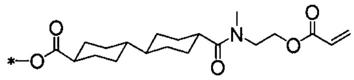 |
| 2-10 | 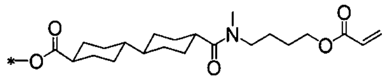 |
| 2-11 | 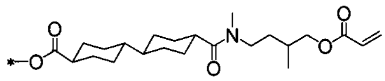 |
| 2-12 | 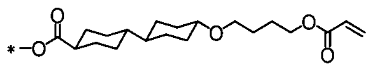 |
| 2-13 | 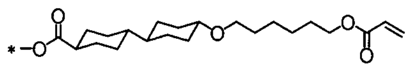 |
| 2-14 | 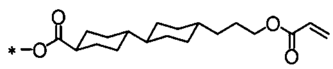 |

[Table 15]

| Table K-3 | K (side chain structure) |
|---|---|
| 3-1 | 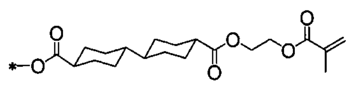 |
| 3-2 | 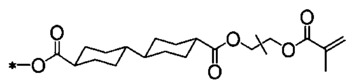 |

(continued)

| Table K-3 | K (side chain structure) |
|---|---|
| 3-3 | 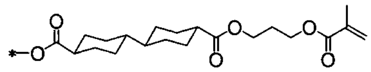 |
| 3-4 | 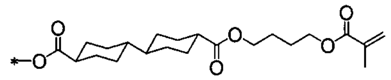 |
| 3-5 | 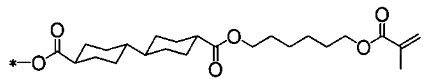 |
| 3-6 | 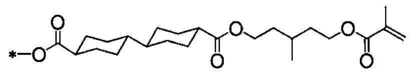 |
| 3-7 | 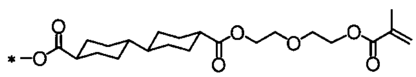 |
| 3-8 | 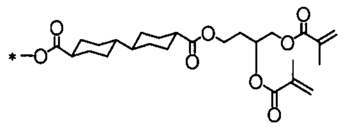 |
| 3-9 | 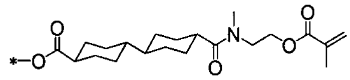 |
| 3-10 | 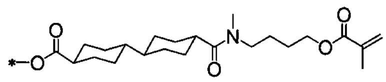 |
| 3-11 | 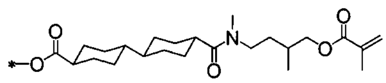 |
| 3-12 | 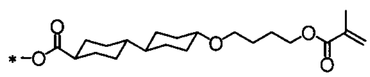 |
| 3-13 | 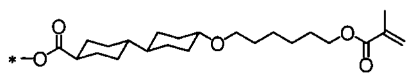 |
| 3-14 | 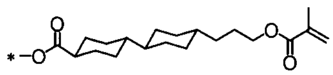 |

[Polymerization initiator]

The composition may contain a polymerization initiator.

Examples of the polymerization initiator include a photopolymerization initiator and a thermal polymerization initiator; and among these, a photopolymerization initiator capable of initiating a polymerization reaction by ultraviolet irradiation is preferable. Examples of the photopolymerization initiator include an alkylphenone compound, an $\alpha$-carbonyl compound, acyloin ether, an $\alpha$-hydrocarbon-substituted aromatic acyloin compound, a polynuclear quinone compound, a phenazine compound, and an oxadiazole compound.

In a case where the composition contains a polymerization initiator, a content of the polymerization initiator in the composition is not particularly limited, but is preferably 0.1% to 20% by mass and more preferably 1% to 8% by mass with respect to the total mass of the liquid crystal compound.

In the composition, the polymerization initiator may be used alone or in combination of two or more kinds thereof. In a case where two or more kinds thereof are used in combination, the total content thereof is preferably within the above-described range.

[Solvent]

The composition may contain a solvent.

The solvent is preferably a solvent capable of dissolving each component blended in the composition, and examples thereof include ketones (for example, acetone, 2-butanone, methyl ethyl ketone, methyl isobutyl ketone, cyclohexanone, cyclopentanone, and the like), ethers (for example, dioxane, tetrahydrofuran, and the like), aliphatic hydrocarbons (for example, hexane and the like), alicyclic hydrocarbons (for example, cyclohexane and the like), aromatic hydrocarbons (for example, toluene, xylene, trimethylbenzene, and the like), halogenated carbons (dichloromethane, dichloroethane, dichlorobenzene, chlorotoluene, and the like), esters (for example, methyl acetate, ethyl acetate, butyl acetate, and the like), water, alcohols (for example, ethanol, isopropanol, butanol, cyclohexanol, and the like), cellosolves (for example, methyl cellosolve, ethyl cellosolve, and the like), cellosolve acetates, sulfoxides (for example, dimethyl sulfoxide and the like), and amides (for example, dimethylformamide, dimethylacetamide, and the like).

In a case where the composition contains a solvent, a content of the solvent in the composition is preferably an amount at which the concentration of solid contents in the composition is 0.5% to 30% by mass, and more preferably an amount at which the concentration of solid contents in the composition is 1% to 20% by mass.

In the composition, the solvent may be used alone or in combination of two or more kinds thereof. In a case where two or more kinds thereof are used in combination, the total content thereof is preferably within the above-described range.

[Chiral agent]

The composition may contain a chiral agent.

The chiral agent (optically active compound) has a function of inducing a helical structure of a cholesteric liquid crystalline phase. The chiral agent may be selected according to the purpose because a helical twisted direction or a helical pitch of the induced helix varies depending on the compound.

The chiral agent is not particularly limited, and for example, a compound described in "Liquid Crystal Device Handbook, Chapter 3, Article 4-3, chiral agent for twisted nematic (TN) or super twisted nematic (STN), p. 199, edited by No. 142 Committee of Japan Society for the Promotion of Science, 1989", isosorbide, an isomannide derivative, and the like can be used.

The chiral agent generally contains an asymmetric carbon atom, but an axially chiral compound or a planar chiral compound, containing no asymmetric carbon atom, can also be used as the chiral agent. Examples of the axially chiral compound or the planar chiral compound include binaphthyl, helicene, paracyclophane, and derivatives thereof.

In addition, the chiral agent may include a polymerizable group. In a case where both the chiral agent and the liquid crystal compound have a polymerizable group, a polymer having a repeating unit induced from the polymerizable liquid crystal compound and a repeating unit induced from the chiral agent can be formed by a polymerization reaction between the polymerizable chiral agent and the polymerizable liquid crystal compound. In this aspect, the polymerizable group in the polymerizable chiral agent is preferably the same group as the polymerizable group in the polymerizable liquid crystal compound.

Furthermore, the chiral agent itself may be a liquid crystal compound.

In a case where the chiral agent has a photoisomerization group, a pattern having a desired reflection wavelength corresponding to a luminescence wavelength can be formed by irradiation with actinic ray or the like through a photo mask after coating and alignment, which is preferable. As the photoisomerization group, an isomerization site of a compound exhibiting photochromic properties, an azo group, an azoxy group, or a cinnamoyl group is preferable. As specific examples of the compound, compounds described in JP2002-080478A, JP2002-080851A, JP2002-179668A, JP2002-179669A, JP2002-179670A, JP2002-179681A, JP2002-179682A, JP2002-338575A, JP2002-338668A, JP2003-313189A, JP2003-313292A, and the like can be used.

In a case where the composition contains a chiral agent, a content of the chiral agent in the composition is not particularly limited, but is preferably 0.01% to 15% by mass and more preferably 1.0% to 10% by mass with respect to the content of the liquid crystal compound.

[Other additives]

The composition may contain a component other than the above-described components.

Examples of other components include a silicon-containing compound other than the specific compound, a non-polymerizable liquid crystal compound, an antioxidant, an ultraviolet absorber, a sensitizer, a stabilizer, a plasticizer, a chain transfer agent, a polymerization inhibitor, a defoamer, a leveling agent, a thickener, a flame retardant, a surfactant, a dispersant, and coloring materials such as a dye and a pigment.

[Production method of composition]

A production method of the composition is not particularly limited and known methods can be adopted; and for example, the composition can be produced by mixing the above-described various components. At the time of mixing, the various components may be mixed at a time or mixed sequentially.

[Applications of composition]

A cured product formed of the composition can be used as an optically anisotropic layer.
Alignment of the liquid crystal compound in the optically anisotropic layer is not particularly limited, and examples thereof include homogeneous alignment, homeotropic alignment, and cholesteric alignment.
Hereinafter, an example of the optically anisotropic layer and a manufacturing method of the optically anisotropic layer will be described.

<<Example of embodiment of optically anisotropic layer>>

An example of an embodiment of the optically anisotropic layer consisting of a cured layer of the above-described composition will be described with reference to the drawings.
FIGS. 1 and 2 are schematic cross-sectional views of an optically anisotropic layer 1. FIG. 1 is a schematic side view showing the optically anisotropic layer 1, and FIG. 2 is a schematic plan view showing a liquid crystal alignment pattern of the optically anisotropic layer 1 shown in FIG. 1. In the drawings, a sheet surface of the sheet-like optically anisotropic layer 1 is defined as an xy plane, and a thickness direction is defined as a z direction.
As shown in FIG. 1, the optically anisotropic layer 1 has a liquid crystal alignment pattern (length A of single period) in which an orientation of an optical axis derived from a liquid crystal compound 30 is changed while continuously rotating in at least one in-plane direction.
In FIGS. 1 to 4, only liquid crystal compounds present on one main surface side of the optically anisotropic layer 1 are shown in order to simplify the drawings and clearly show the configuration of the optically anisotropic layer 1. However, the optically anisotropic layer 1 has a structure in which the aligned liquid crystal compounds 30 are stacked in the same manner as in an optically anisotropic layer which is formed of a composition containing a general liquid crystal compound.
In general, in a case where a value of an in-plane retardation is set as $\lambda/2$, the optically anisotropic layer 1 has a function as a general $\lambda/2$ plate, that is, a function of imparting a phase difference of a half wavelength, that is, 180° to two linearly polarized light components which are included in light incident into the optically anisotropic layer and are perpendicular to each other.
As shown in FIG. 2, in a plane of the optically anisotropic layer 1, the optically anisotropic layer 1 has a liquid crystal alignment pattern in which an orientation of an optical axis 30A derived from the liquid crystal compound 30 (hereinafter, may be also referred to as "optical axis 30A") is changed while continuously rotating in one direction. Here, the one direction in which the optical axis 30A rotates and changes match a direction of an x-axis in the xy plane. Hereinafter, the one direction in which the optical axis 30A is changed while rotating will be described as an x direction.
The optical axis 30A derived from the liquid crystal compound 30 is an axis having the highest refractive index in the liquid crystal compound 30, that is, a so-called slow axis. As shown in FIG. 1, in a case where the liquid crystal compound 30 is a rod-like liquid crystal compound, the optical axis 30A is along a rod-shaped major axis direction.
Specifically, the orientation of the optical axis 30A changes rotationally in the x direction means that an angle between the optical axis 30A of the liquid crystal compound 30, which is arranged along the x direction, and the x direction varies depending on positions in the x direction, and the angle between the optical axis 30A and the x direction sequentially changes from $\theta$ to $\theta$+180° or $\theta$-180° in the x direction. Here, the expression "the angle sequentially changes" means that the angle may change at constant angular intervals, or may change continuously. However, a difference between the angles of the optical axes 30A of the liquid crystal compound 30 adjacent to each other in the x direction is preferably 45° or less, more preferably 15° or less, and still more preferably less than 15°.
On the other hand, regarding the liquid crystal compound 30 forming the optically anisotropic layer 1, the liquid crystal compounds 30 having the same orientation of the optical axes 30A are arranged at regular intervals in a y direction perpendicular to the x direction in a plane, that is, a y direction perpendicular to the one direction (x direction) in which the optical axis 30A continuously rotates. In other words, regarding the liquid crystal compound 30 forming the optically anisotropic layer 1, in the liquid crystal compounds 30 arranged in the y direction, angles between the orientation of the optical axis 30A and the x direction are the same. In such a liquid crystal alignment pattern of the liquid crystal compound 30 in the optically anisotropic layer 1, the length (distance) over which the optical axis 30A of the liquid crystal compound 30 rotates 180° in the x direction in which the orientation of the optical axis 30A changes rotationally in a plane is defined as the length A of the single period in the liquid crystal alignment pattern. In other words, the length of the single period in the liquid crystal alignment pattern is defined as the distance between $\theta$ and $\theta$ + 180° that is a range of the angle between the optical

axis 30A of the liquid crystal compound 30 and the x direction. Specifically, as shown in FIG. 2, a distance of centers in the x direction of two liquid crystal compounds 30 in which the x direction and the direction of the optical axis 30A match each other is defined as the length A of the single period (hereinafter, may be also referred to as "single period A" or "period A"). The liquid crystal alignment pattern of the optically anisotropic layer 1 is a pattern in which the liquid crystal alignment of the single period A is repeated in the x direction.

As described above, regarding the optically anisotropic layer 1, in the liquid crystal compounds 30 arranged in the y direction, the angles between the optical axes 30A thereof and the x direction in which the orientation of the optical axis of the liquid crystal compound 30 rotates are the same. Regions where the liquid crystal compounds 30 in which the angles between the optical axes 30A and the x direction are the same are arranged in the y direction will be referred to as "regions R".

In this case, a value of the in-plane retardation (Re) in each region R is preferably a half wavelength of light (hereinafter, referred to as "target light") to be diffracted by the optically anisotropic layer, that is, in a case where a wavelength of the target light is $\lambda$, the in-plane retardation Re is preferably $\lambda/2$. The in-plane retardation is calculated from the product of a refractive index anisotropy $\Delta n$ of the regions R and the thickness (film thickness) d of the optically anisotropic layer. Here, a difference in refractive index due to the refractive index anisotropy of the regions R in the optically anisotropic layer is defined by a difference between a refractive index of a direction of an in-plane slow axis of the region R and a refractive index of a direction orthogonal to the direction of the slow axis. That is, the difference $\Delta n$ in refractive index due to the refractive index anisotropy of the regions R is the same as a difference between a refractive index of the liquid crystal compound 30 in the direction of the optical axis 30A and a refractive index of the liquid crystal compound 30 in a direction perpendicular to the optical axis 30A in a plane of the region R. That is, the above-described difference $\Delta n$ in refractive index depends on the liquid crystal compound, and the in-plane retardation of each region R is substantially the same. However, as described above, each region R has a different direction of the optical axis 30A.

In the optically anisotropic layer 1, since the orientation of the optical axis 30A rotates in the plane, it is difficult to measure the in-plane retardation as a whole. However, the in-plane retardation of the optically anisotropic layer 1 can be estimated from the period and the diffraction efficiency.

In a case where circularly polarized light is incident into the optically anisotropic layer 1, the light is refracted and a direction of the circularly polarized light is changed.

This action is conceptually shown in FIG. 3 by exemplifying the optically anisotropic layer 1. It is assumed that the in-plane retardation of the optically anisotropic layer 1 is $\lambda/2$.

In this case, as shown in FIG. 3, in a case where an incident ray $L_1$ as levorotatory circularly polarized light $P_L$ is incident into the optically anisotropic layer 1, the incident ray $L_1$ transmits through the optically anisotropic layer 1 to be imparted with a phase difference of 180°, and a transmitted ray $L_2$ is converted into dextrorotatory circularly polarized light $P_R$.

In addition, in a case where the incident ray $L_1$ transmits through the optically anisotropic layer 1, an absolute phase thereof changes depending on the orientation of the optical axis 30A of each liquid crystal compound 30. In this case, since the orientation of the optical axis 30A changes while rotating in the x direction, an amount of change in absolute phase of the incident ray $L_1$ varies depending on the orientation of the optical axis 30A. Furthermore, the liquid crystal alignment pattern formed in the optically anisotropic layer 1 is a pattern which is periodic in the x direction. Therefore, as shown in FIG. 3, the incident ray $L_1$ transmitted through the optically anisotropic layer 1 is imparted with an absolute phase Q1 which is periodic in the x direction corresponding to the orientation of each optical axis 30A. As a result, an equiphase plane E1 which is tilted in a direction opposite to the x direction is formed.

Therefore, the transmitted ray $L_2$ is refracted to be tilted in a direction perpendicular to the equiphase plane E1, and travels in a direction different from a traveling direction of the incident ray $L_1$. In this way, the incident ray $L_1$ of the levorotatory circularly polarized light $P_L$ is converted into the transmitted ray $L_2$ of the dextrorotatory circularly polarized light $P_R$ which is tilted by a predetermined angle in the x direction with respect to an incidence direction.

On the other hand, as conceptually shown in FIG. 4, in a case where an incident ray $L_4$ of dextrorotatory circularly polarized light $P_R$ is incident into the optically anisotropic layer 1 having the same in-plane retardation, the incident ray $L_4$ transmits through the optically anisotropic layer 1 to be imparted with a phase difference of 180°, and the incident ray $L_4$ is converted into a transmitted ray $L_5$ of levorotatory circularly polarized light $P_L$.

In addition, in a case where the incident ray $L_4$ transmits through the optically anisotropic layer 1, an absolute phase thereof changes depending on the orientation of the optical axis 30A of each liquid crystal compound 30. In this case, since the orientation of the optical axis 30A changes while rotating in the x direction, an amount of change in absolute phase of the incident ray $L_4$ varies depending on the orientation of the optical axis 30A. Furthermore, the liquid crystal alignment pattern formed in the optically anisotropic layer 1 is a pattern which is periodic in the x direction. Therefore, as shown in FIG. 4, the incident ray $L_4$ transmitted through the optically anisotropic layer 1 is imparted with an absolute phase Q2 which is periodic in the x direction corresponding to the orientation of each optical axis 30A.

Here, since the incident ray $L_4$ is dextrorotatory circularly polarized light $P_R$, the absolute phase Q2 which is periodic in the x direction corresponding to the orientation of the optical axis 30A is opposite to the incident ray $L_1$ as the

levorotatory circularly polarized light $P_L$. As a result, in the incident ray $L_4$, an equiphase plane E2 which is tilted in the x direction opposite to that of the incident ray $L_1$ is formed.

Therefore, the incident ray $L_4$ is refracted to be tilted in a direction perpendicular to the equiphase plane E2, and travels in a direction different from a traveling direction of the incident ray $L_4$. In this way, the incident ray $L_4$ is converted into the transmitted ray $L_5$ of the levorotatory circularly polarized light, which is tilted by a predetermined angle in the x direction with respect to a direction opposite to the incidence direction.

As described above, in the optically anisotropic layer 1, the value of the in-plane retardation is preferably half the wavelength of the target light. This is because that, as the value of the in-plane retardation is closer to the half wavelength of the target light, high diffraction efficiency can be obtained in the diffraction of the target light. The in-plane retardation Re(λ) = $\Delta n_\lambda \times$ d of the optically anisotropic layer with respect to incidence light having a wavelength in the x direction of λ nm is preferably within a range defined by the following expression and can be appropriately set.

$$0.7 \times (\lambda/2)\ \text{nm} \leq \Delta n_\lambda \times d \leq 1.3 \times (\lambda/2)\ \text{nm}$$

Here, by changing the single period Λ of the liquid crystal alignment pattern formed in the optically anisotropic layer 1, refraction angles of the transmitted rays $L_2$ and $L_5$ can be adjusted. Specifically, as the single period Λ of the liquid crystal alignment pattern decreases, light transmitted through the liquid crystal compounds 30 adjacent to each other more strongly interfere with each other, so that the transmitted rays $L_2$ and $L_5$ can be more largely refracted. Furthermore, by reversing a rotation direction of the optical axis 30A of the liquid crystal compound 30 which rotates in the x direction, a refraction direction of the transmitted light can be reversed. The period Λ is preferably 50 μm or less, more preferably 25 μm or less, and still more preferably 5 μm or less.

It is sufficient that the film thickness d of the optically anisotropic layer 1 is appropriately set in order to obtain a desired in-plane retardation, but the film thickness d is preferably 1 μm or less, more preferably 0.8 μm or less, and still more preferably 0.5 μm or less. In particular, in a case where the optically anisotropic layer 1 is used as a birefringent mask for forming a photo-alignment pattern, a smaller film thickness d is preferable. As the film thickness d is smaller, a formation accuracy of the photo-alignment pattern can be improved.

The ratio Λ/d of the period Λ to the film thickness d of the optically anisotropic layer is preferably 1 or more.

The period Λ of the liquid crystal alignment pattern in the optically anisotropic layer 1 can be obtained from a period of light and dark by observing a bright and dark periodic pattern of bright portions and dark portions with a polarizing microscope under a condition of crossed nicols. Twice the period of the observed bright and dark period pattern corresponds to the period Λ of the liquid crystal alignment pattern.

In addition, the film thickness d of the optically anisotropic layer 1 can be measured by, for example, observing a cross section of the optically anisotropic layer with a scanning electron microscope.

In the optically anisotropic layer 1, the refractive index anisotropy Δn at a wavelength of 550 nm is preferably 0.21 or more. The upper limit thereof is not particularly limited, but is preferably 0.8 or less.

In addition, it is also preferable that the optically anisotropic layer can be made to have a substantially wide range for the wavelength of incidence light by imparting a torsion component to the composition or by laminating different retardation layers. For example, in the optically anisotropic layer, a method of achieving a λ/2 plate having a wide-range pattern by laminating two liquid crystal layers having different twisted directions is described in, for example, JP2014-089476A, and can be suitably used in the optically anisotropic layer according to the embodiment of the present invention.

<Production method of optically anisotropic layer 1>

Specific examples of a production method of the optically anisotropic layer 1 include an aspect of including a step X of bringing a substrate including an alignment film having a predetermined alignment pattern into contact with the composition to form a composition layer on the alignment film of the substrate; and a step Y of subjecting the composition layer to a heating treatment to align the liquid crystal compound, and then subjecting the composition layer to a curing treatment.

After the production of the optically anisotropic layer 1, the above-described substrate may be removed from the optically anisotropic layer, or may not be removed. In addition, in the same manner, the above-described alignment film may be removed from the optically anisotropic layer after the production of the optically anisotropic layer 1, or may not be removed.

Hereinafter, specific procedures for the step X and the step Y will be described in detail.

(Step X)

· Substrate

In the step X, the type of the substrate to be used is not particularly limited, and examples thereof include known substrates (for example, a resin substrate, a glass substrate, a ceramic substrate, a semiconductor substrate, and a metal substrate).

· Alignment film

The alignment film is disposed on the substrate. In a case where the alignment film is present, the liquid crystal compound 30 is easily aligned in a predetermined liquid crystal alignment pattern in the production of the optically anisotropic layer 1. As derived above, the optically anisotropic layer 1 has the liquid crystal alignment pattern in which the orientation of the optical axis 30A (see FIG. 2) derived from the liquid crystal compound 30 changes while continuously rotating in one in-plane direction (x direction). Therefore, the alignment film is formed such that the optically anisotropic layer can form the liquid crystal alignment pattern.

As the alignment film, various known films can be used. Examples of the alignment film include a rubbed film formed of an organic compound such as a polymer, an obliquely vapor-deposited film formed of an inorganic compound, a film having a microgroove, and a film formed by lamination of Langmuir-Blodgett (LB) films formed with a Langmuir-Blodgett's method using an organic compound such as ω-tricosanoic acid, dioctadecylmethylammonium chloride, and methyl stearate.

The alignment film formed by a rubbing treatment can be formed by rubbing a surface of a polymer layer with paper or fabric in a given direction multiple times.

As a material used for the alignment film, polyimide, polyvinyl alcohol, a polymer having a polymerizable group, described in JP1997-152509A (JP-H9-152509A), and a material used for forming an alignment film described in JP2005-097377A, JP2005-099228A, JP2005-128503A, and the like can be suitably used.

In addition, as the alignment film, a so-called photo-alignment film obtained by irradiating a photo-aligning material with polarized or non-polarized light to form an alignment film can be suitably used. In a case of being irradiated with polarized light to form the alignment film, the alignment film can be formed by irradiating the photo-alignment material with polarized light from a vertical direction or an oblique direction; and in a case of being irradiated with non-polarized light to obtain the alignment film, the alignment film can be formed by irradiating the photo-alignment material with non-polarized light from an oblique direction.

Examples of the photo-alignment material used in the photo-alignment film include: an azo compound described in JP2006-285197A, JP2007-76839A, JP2007-138138A, JP2007-94071A, JP2007-121721A, JP2007-140465A, JP2007-156439A, JP2007-133184A, JP2009-109831A, JP3883848B, and JP4151746B; an aromatic ester compound described in JP2002-229039A; a maleimide- and/or alkenyl-substituted nadiimide compound having a photo-alignable unit described in JP2002-265541A and JP2002-317013A; a photocrosslinking silane derivative described in JP4205195B and JP4205198B, a photocrosslinking polyimide, a photocrosslinking polyamide, or a photocrosslinking ester described in JP2003-520878A, JP2004-529220A, and JP4162850B; and a photodimerizable compound, in particular, a cinnamate compound, a chalcone compound, or a coumarin compound described in JP1997-118717A (JP-H9-118717A), JP1998-506420A (JP-H10-506420A), JP2003-505561A, WO2010/150748A, JP2013-177561A, and JP2014-12823A. Among these, an azo compound, a photocrosslinking polyimide, a photocrosslinking polyamide, a photocrosslinking ester, a cinnamate compound, a chalcone compound, or the like can be suitably used.

A thickness of the alignment film is not particularly limited. The thickness with which a required alignment function can be obtained may be appropriately set depending on the material for forming the alignment film.

The thickness of the alignment film is preferably 0.01 to 5 μm and more preferably 0.05 to 2 μm.

A method of forming the alignment film is not particularly limited, and various known methods can be used according to the material for forming the alignment film.

From the viewpoint that the alignment pattern of the optically anisotropic layer 1 is more easily formed, a photo-alignment film which is obtained by irradiating the photo-aligning material with polarized or non-polarized light to form an alignment film is preferable, and a method described in [0078] to [0080] of WO2020/022496A and a method described in FIG. 7 of JP2022-036995A can be suitably adopted.

· Procedure of step X

A method of bringing the substrate including the alignment film having a predetermined alignment pattern (hereinafter, also referred to as "substrate with an alignment film") into contact with the composition is not particularly limited, and examples thereof include a method of applying the composition onto the alignment film of the substrate and a method of immersing the above-described substrate with an alignment film in the composition. After the substrate with an alignment film is brought into contact with the composition, a drying treatment may be performed as necessary to remove a

solvent from the composition layer disposed on the alignment film of the substrate.

(Step Y)

The step Y is a step in which the composition layer is subjected to a heating treatment to align the liquid crystal compound, and then a curing treatment is performed. By subjecting the composition layer to a heating treatment, the liquid crystal compound is aligned to form a liquid crystal phase. For example, in a case where the composition layer contains a chiral agent, a cholesteric liquid crystalline phase is formed.

Conditions of the heating treatment are not particularly limited, and the optimum conditions are selected depending on the type of the liquid crystal compound.

The method of the curing treatment is not particularly limited, and examples thereof include photo-curing treatment and thermosetting treatment. Among these, a light irradiation treatment is preferable and an ultraviolet irradiation treatment is more preferable.

A light source such as an ultraviolet lamp is used for the ultraviolet irradiation.

The cured product obtained by the above-described treatment corresponds to a layer in which the liquid crystalline phase is immobilized. In particular, in a case where the composition contains the chiral agent, a layer with a fixed cholesteric liquid crystalline phase is formed.

These layers do not need to exhibit liquid crystallinity anymore. More specifically, for example, as a state in which the cholesteric liquid crystalline phase is "fixed", the most typical and preferred aspect is a state in which the alignment of the liquid crystalline compound, which is the cholesteric liquid crystalline phase, is retained. More specifically, it is preferable that, in a temperature range of 0°C to 50°C and under more severe conditions in a temperature range of -30°C to 70°C, a state in which the layer has no fluidity and the immobilized alignment form can be maintained stably without causing a change in alignment form due to an external field or an external force is preferable.

In the manufacturing method of the optically anisotropic layer, in a case where the thickness of the optically anisotropic layer has not reached a desired value, another optically anisotropic layer may be further formed on the surface of the optically anisotropic layer obtained in the step Y. That is, a plurality of optically anisotropic layers may be laminated by repeating the step X and the step Y until the thickness of the optically anisotropic layer reaches a desired thickness. Even in a case where a plurality of optically anisotropic layers are formed, the alignment direction of the alignment film can be propagated from the lower surface to the upper surface of the optically anisotropic layer.

Furthermore, in a case where another optically anisotropic layer (hereinafter, also referred to as "optically anisotropic layer B") is further formed on the surface of the optically anisotropic layer (hereinafter, also referred to as "optically anisotropic layer A") obtained in the step Y, it is preferable to perform a surface treatment on the surface of the optically anisotropic layer A on a side where the optically anisotropic layer B is disposed.

Specific examples of the surface treatment include a treatment of washing and removing the specific compound by rinsing, with a solvent, the surface of the optically anisotropic layer A on the side where the optically anisotropic layer B is disposed, and a treatment of etching and removing the specific compound by performing a corona treatment or the like on the surface of the optically anisotropic layer A on the side where the optically anisotropic layer B is disposed. In a case where the optically anisotropic layer B is formed by a coating method, the above-described operation may be performed or may not be performed as long as the specific compound can be removed from the optically anisotropic layer A by a solvent contained in a coating liquid for forming the optically anisotropic layer B.

<<Modification example of optically anisotropic layer>>

An optically anisotropic layer 2 shown in FIG. 5 is an optically anisotropic layer in which the liquid crystal compound 30 is cholesterically aligned in a thickness direction.

It is known that the cholesteric liquid crystalline phase exhibits selective reflectivity at a specific wavelength. A central wavelength (selective reflection center wavelength) λ of selective reflection depends on a pitch P (=helical period) of a helical structure in the cholesteric liquid crystalline phase and satisfies a relationship of $\lambda = n \times P$ with an average refractive index n of the cholesteric liquid crystalline phase. Therefore, the selective reflection central wavelength can be adjusted by adjusting the pitch of the helical structure.

The cholesteric liquid crystalline phase exhibits selective reflectivity with respect to left-handed or right-handed circular polarization at a specific wavelength. Whether or not the reflected light is dextrorotatory circularly polarized light or levorotatory circularly polarized light is determined depending on a helically twisted direction (sense) of the cholesteric liquid crystalline phase. Regarding the selective reflection of the circular polarization by the cholesteric liquid crystalline phase, in a case where the helically twisted direction of the cholesteric liquid crystalline phase is right, dextrorotatory circularly polarized light is reflected, and in a case where the helically twisted direction of the cholesteric liquid crystalline phase is left, levorotatory circularly polarized light is reflected.

In addition, a half-width Δλ (nm) of a selective reflection range (circular polarization reflection range) where

selective reflection is exhibited depends on Δn of the cholesteric liquid crystalline phase and the helical pitch P and complies with a relationship of $\Delta\lambda = \Delta n \times P$. Therefore, the width of the selective reflection range can be controlled by adjusting Δn.

That is, the optically anisotropic layer 2 exhibits a function of selectively reflecting light in a predetermined wavelength range in specific circularly polarized light (dextrorotatory circularly polarized light or levorotatory circularly polarized light).

On the other hand, since the alignment pattern of the optical axis 30A in the in-plane direction of the optically anisotropic layer 2 is the same as the alignment pattern in the optically anisotropic layer 1 shown in FIG. 1, the same effect as the optically anisotropic layer 1 is exhibited. That is, in the same manner as in the optically anisotropic layer 1 described above, the optically anisotropic layer 2 exhibits an action of bending incidence light to a predetermined direction by changing an absolute phase of the incidence light. Therefore, the optically anisotropic layer 2 has both the action of bending the incidence light to a direction different from the incidence direction and the action of the above-described cholesteric alignment, and reflects light at an angle in a predetermined direction with respect to the reflection direction of specular reflection.

For example, the optically anisotropic layer 2 is designed such that the cholesteric liquid crystalline phase of the optically anisotropic layer 2 reflects dextrorotatory circularly polarized light. In this case, as shown in FIG. 5, in a case where a ray $L_6$ of dextrorotatory circularly polarized light $P_R$ is vertically incident into the main surface of the optically anisotropic layer 2, that is, along the normal line, a reflected ray $L_7$ which travels in a direction having a tilt with respect to the normal direction is generated. That is, the optically anisotropic layer 2 functions as a reflective type diffraction grating.

In the liquid crystal alignment pattern of the optically anisotropic layer shown in FIGS. 1 to 5, the optical axis 30A of the liquid crystal compound 30 continuously rotates only along the x direction in the plane.

However, in the optically anisotropic layer according to the embodiment of the present invention, various configurations can be used as long as the optical axis 30A of the liquid crystal compound 30 continuously rotates along one direction.

FIG. 6 is a schematic plan view of an optically anisotropic layer 3 of a design modified example. In FIG. 6, the liquid crystal alignment pattern is shown by the optical axis 30A of the liquid crystal compound. The optically anisotropic layer 3 has a liquid crystal alignment pattern that regions in which the optical axes 30A have the same alignment are provided concentrically, and that the one direction of the optical axes 30A, which changes rotationally, is provided radially from the center of the optically anisotropic layer 3.

In the optically anisotropic layer 3, the orientations of the optical axes 30A are changed while continuously rotating along a large number of directions from the center of the optically anisotropic layer 3 toward the outside, for example, a direction indicated by an arrow $A_1$, a direction indicated by an arrow $A_2$, a direction indicated by an arrow $A_3$, and the like.

In circularly polarized light incident into the optically anisotropic layer 3 having the above-described liquid crystal alignment pattern, the absolute phase changes depending on individual local regions having different orientations of optical axes of the liquid crystal compound 30. At this time, the amount of change in absolute phase varies depending on the orientations of the optical axes of the liquid crystal compound 30 into which circularly polarized light is incident.

In this way, in the optically anisotropic layer 3 having the concentric circular liquid crystal alignment pattern, that is, the liquid crystal alignment pattern in which the optical axis changes rotationally in a radial shape, transmission of incidence light can be allowed as diverging light or converging light depending on the rotation direction of the optical axis of the liquid crystal compound 30 and the direction of circularly polarized light to be incident.

That is, by setting the liquid crystal alignment pattern of the optically anisotropic layer in a concentric circular shape, the optically anisotropic layer exhibits, for example, a function as a convex lens or a concave lens.

Here, in a case where the liquid crystal alignment pattern of the optically anisotropic layer is concentric circular such that the optically anisotropic layer functions as a convex lens, it is preferable that the length of the single period Λ over which the optical axis rotates 180° in the liquid crystal alignment pattern gradually decreases from the center of the optically anisotropic layer toward the outer direction of the one direction in which the optical axis continuously rotates. The refraction angle of light with respect to an incidence direction increases as the length of the single period Λ in the liquid crystal alignment pattern decreases. Accordingly, the length of the single period Λ in the liquid crystal alignment pattern gradually decreases from the center of the optically anisotropic layer 3 toward the outer direction of the one direction in which the optical axis continuously rotates. As a result, the light gathering power of the optically anisotropic layer 3 can be improved, and the performance as a convex lens can be improved.

In addition, depending on the uses of the laminate such as a concave lens, it is preferable that the length of the single period Λ over which the optical axis rotates 180° in the liquid crystal alignment pattern gradually decreases from the center of the optically anisotropic layer 3 toward the outer direction of the one direction by reversing the direction in which the optical axis continuously rotates. The refraction angle of light with respect to an incidence direction increases as the length of the single period Λ in the liquid crystal alignment pattern decreases. Accordingly, the length of the single period Λ in the liquid crystal alignment pattern gradually decreases from the center of the optically anisotropic layer 3 toward the

outer direction of the one direction in which the optical axis continuously rotates. As a result, the light diverging power of the optically anisotropic layer 3 can be improved, and the performance as a concave lens can be improved.

For example, in a case where the optically anisotropic layer is used as a concave lens, it is also preferable that a turning direction of incident circularly polarized light is reversed.

Conversely, the length of the single period Λ in the concentric circular liquid crystal alignment pattern may gradually increase from the center of the optically anisotropic layer 3 toward the outer direction of the one direction in which the optical axis continuously rotates.

Furthermore, depending on the uses of the optically anisotropic layer such as a case in which it is desired to provide a light amount distribution in the transmitted light, a configuration in which regions having partially different lengths of the single periods Λ in the one direction in which the optical axis continuously rotates are provided can also be used instead of the configuration in which the length of the single period Λ gradually changes in the one direction in which the optical axis continuously rotates.

Furthermore, a light emitting element may include an optically anisotropic layer in which the single period Λ is homogeneous over the entire surface, and an optically anisotropic layer in which regions having different lengths of the single periods Λ are provided.

In this way, the configuration of changing the length of the single period Λ over which the optical axis rotates 180° in the one direction in which the optical axis continuously rotates can also be used in the configuration shown in FIGS. 1 to 4 in which the optical axis 30A of the liquid crystal compound 30 continuously rotates only in the one direction of the x direction.

For example, by gradually decreasing the single period Λ of the liquid crystal alignment pattern in the x direction, an optically anisotropic layer which transmits light so as to be collected can be obtained. In addition, by reversing the direction over which the optical axis in the liquid crystal alignment pattern rotates 180°, an optically anisotropic layer which transmits light so as to be diffused only in the x direction can be obtained. By reversing the turning direction of incident circularly polarized light, an optically anisotropic layer which allows transmission of light to be diffused only in the arrow X direction can be obtained.

Furthermore, depending on the uses of the optically anisotropic layer such as a case in which it is desired to provide a light amount distribution in the transmitted light, a configuration in which regions having partially different lengths of the single periods Λ in the x direction are provided can also be used instead of the configuration in which the length of the single period Λ gradually changes in the x direction.

[Optical element]

An optical element according to the present invention includes the optically anisotropic layer formed of the composition described above.

The application of the optical element is not particularly limited, but the optical element can be used for various uses where transmission of light in a direction different from an incidence direction is allowed, for example, an optical path changing member, a light collecting element, a light diffusing element to a predetermined direction, a diffraction element, or the like in an optical apparatus.

Among these, preferred examples of the application include a light guide element. The light guide element typically includes a light guide plate and a diffraction element which is disposed on the light guide plate (preferably, disposed to be spaced from the light guide plate). The optical element according to the present invention is suitably used as a diffraction element.

Examples

Hereinafter, the present invention will be described in more detail with reference to Examples. The materials, the amounts of materials used, the proportions, the treatment details, the treatment procedure, and the like shown in Examples below may be appropriately modified as long as the modifications do not depart from the spirit of the present invention. Therefore, the scope of the present invention should not be construed as being limited to Examples.

Abbreviations used in the following description are as follows.

DMF: N,N-dimethylformamide
THF: tetrahydrofuran
EDCI: 1-(3-dimethylaminopropyl)-3-ethylcarbodiimide hydrochloride
DMAP: 4-dimethylaminopyridine

[Synthesis Example]

Compounds A1 to A-4 described in Table 1 later were synthesized according to the following procedure.

[Synthesis of compound A1]

The compound A1 was synthesized according to the following procedure.

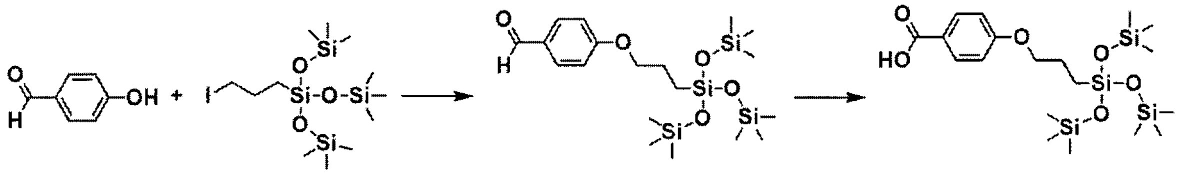

1a 1b 1c

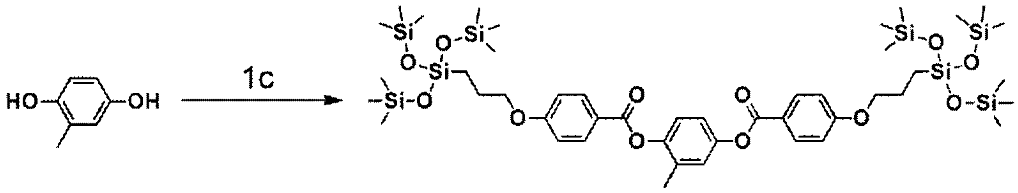


A1

<Synthesis of compound 1b>

A compound 1a (8.6 mmol) was added to a solution obtained by dissolving p-hydroxybenzaldehyde (8.2 mmol) and cesium carbonate (12.3 mmol) in DMF (50 mL), and the mixture was stirred at room temperature for 6 hours. After the stirring, ethyl acetate, a hydrochloric acid solution, and a saline were added to the obtained reaction solution, and the mixture was subjected to a liquid separation treatment, and the solvent was distilled off. The residue was purified by silica gel column chromatography (hexane/ethyl acetate = 20/1) to obtain a compound 1b (yield: 70%).

<Synthesis of compound 1c>

A solution A was prepared by dissolving $NaH_2PO_4$ dihydrate (2.2 mmol) and tetrabutylammonium hydrogen sulfate (0.08 mmol) in water (2.2 mL). Next, a solution B was prepared by dissolving the compound 1b (7.8 mmol) in ethyl acetate (6 mL) and THF (5 mL), and the solution A was added dropwise to the solution B. Hydrogen peroxide (1.3 mmol) was further added to the obtained mixture, a $NaClO_2$ (9.4 mmol) aqueous solution (2.5 mL) was added thereto, and the mixture was stirred at 40°C for 1 hour. After the stirring, the reaction was quenched with a sodium sulfite aqueous solution, ethyl acetate and a hydrochloric acid solution were added thereto, the mixture was subjected to a liquid separation treatment, and the solvent was distilled off to obtain a compound 1c (yield: 95%).

<Synthesis of compound A1>

Methylhydroquinone (1.0 mmol) and the compound 1c (2.2 mmol) were dissolved in dichloromethane (10 mL), and EDCI (3.0 mmol) and DMAP (0.1 mmol) were further added thereto under water cooling. The obtained reaction solution was stirred at room temperature for 4 hours, and then water was added thereto to perform a liquid separation treatment. The reaction solution was purified by silica gel column chromatography (hexane/ethyl acetate = 20/1) to obtain the compound A1 (yield: 80%).

$^1H$ NMR (400 MHz, $CDCl_3$) δppm: 0 (s, 54H), 1.0 (t, 4H), 1.7 (quint, 4H), 2.1 (s, 3H), 3.9 (t, 4H), 6.8 (quart, 4H), 6.9 to 7.1 (m, 3H), 8 (t, 4H)

[Synthesis of compound A2]

The compound A2 was synthesized according to the following procedure.

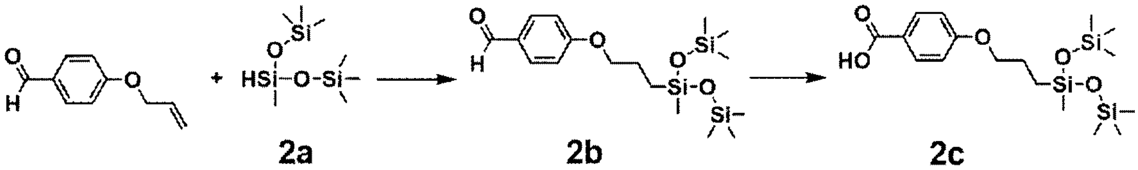

2a 2b 2c

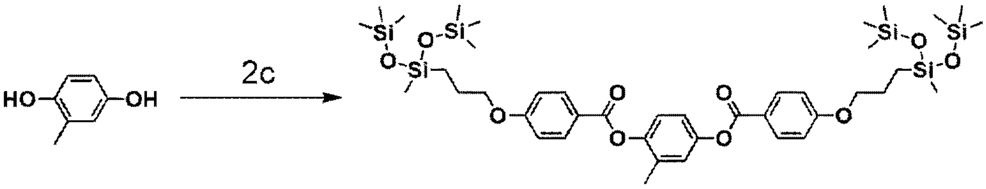


A2

<Synthesis of compound 2b>

p-Allyloxybenzaldehyde (18.5 mmol) and a compound 2a (18.5 mmol) were dissolved in THF (3 mL) under a nitrogen atmosphere, and Karsted's catalyst (Pt 2% xylene solution, 30 μL) was further added thereto under water cooling. The obtained reaction solution was stirred at room temperature for 2 hours, the solvent was distilled off, the residue was purified by silica gel column chromatography (hexane/ethyl acetate = 9/1) to obtain a compound 2b (yield: 70%).

<Synthesis of compound 2c>

A compound 2c was obtained by the same procedure as in <Synthesis of compound 1c> described above.

<Synthesis of compound A2>

The compound A2 was obtained by the same procedure as in <Synthesis of compound A1> described above.
$^1$H NMR (400 MHz, $CDCl_3$) δppm: 0 (s, 6H), 0.1 (s, 36H), 0.6 (quint, 4H), 1.9 (m, 4H) 2.2 (s, 3H), 4.0 (t, 4H), 7.0 (m, 4H), 7.1 to 7.2 (m, 3H), 8.1 (t, 4H)

[Synthesis of compound A3]

The compound A3 was synthesized according to the following procedure.

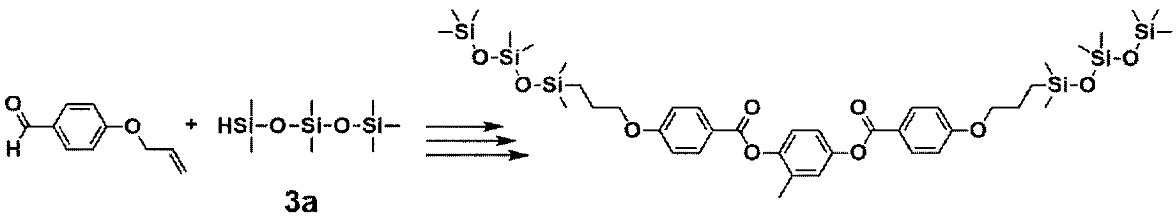

3a

A3

The compound A3 was synthesized by the same procedure as in [Synthesis of compound A2] described above, except that the compound 2a as a raw material component was changed to a compound 3a.
$^1$H NMR (400 MHz, $CDCl_3$) δppm: 0 (s, 12H), 0.1 (s, 18H), 0.1 (s, 12H), 0.7 (t, 4H), 1.9 (quint, 4H) 2.2 (s, 3H), 4.0 (t, 4H), 7.0 (quart, 4H), 7.1 to 7.2 (m, 3H), 8.1 (t, 4H)

[Synthesis of compound A4]

The compound A4 was synthesized according to the following procedure.

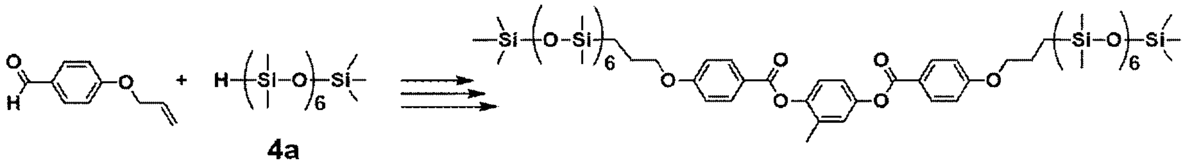

4a

A4

The compound A4 was synthesized by the same procedure as in [Synthesis of compound A2] described above, except that the compound 2a as a raw material component was changed to a compound 4a.

[Synthesis of compound A40]

A compound A40 was synthesized according to the following procedure.

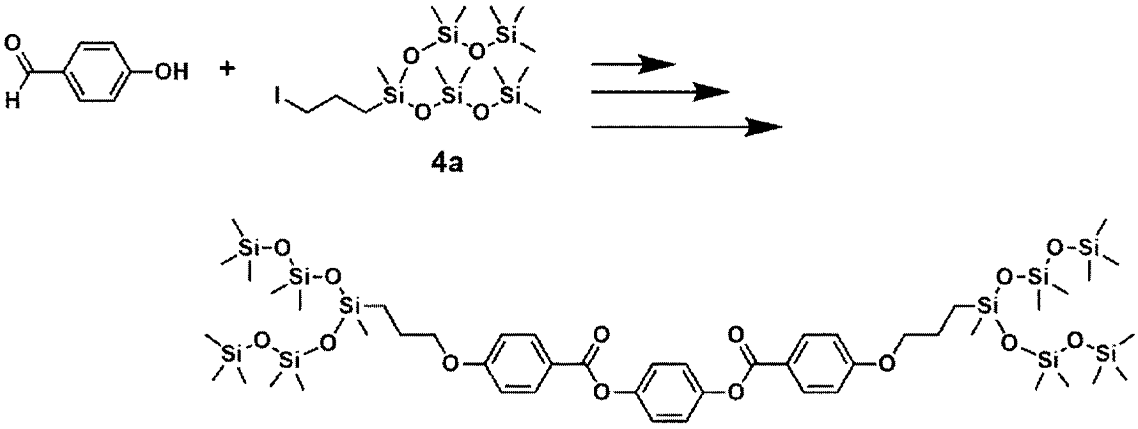

4a

A40

The compound A40 was synthesized by the same procedure as in [Synthesis of compound A1] described above, except that the compound 1a as a raw material component was changed to a compound 4a, and the raw material of the skeleton was changed to hydroquinone.

$^{1}$H NMR (400 MHz, $CDCl_3$) δppm: 0.1 (s, 30H), 0.1 (s, 36H), 0.6 (m, 4H), 1.9 (m, 4H), 4.0 (t, 4H), 7.0 (d, 4H), 8.2 (d, 4H)

[Synthesis of compound A41]

A compound A41 was synthesized according to the following procedure.

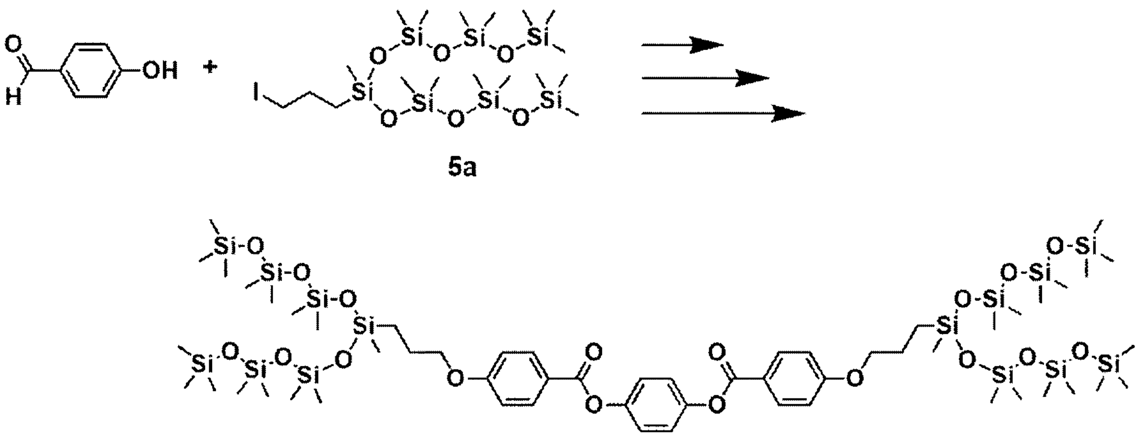

5a

A41

The compound A41 was synthesized by the same procedure as in [Synthesis of compound A1] described above, except that the compound 1a as a raw material component was changed to a compound 5a, and the raw material of the skeleton was changed to hydroquinone.

$^1$H NMR (400 MHz, $CDCl_3$) δppm: 0 to 0.1 (s, 90H), 0.6 (m, 4H), 1.9 (m, 4H), 4.0 (t, 4H), 7.0 (d, 4H), 8.2 (d, 4H)

[Example 1]

[Production of photo-alignment film]

A glass substrate was used as a support. A coating liquid 1 for forming a photo-alignment film was applied to the support using a spin coater at 2,500 rpm for 30 seconds. Next, the support on which the coating liquid 1 for forming a photo-alignment film was applied was dried on a hot plate at 60°C for 60 seconds to form a dried film on the support.

| Coating liquid for forming photo-alignment film | |
|---|---|
| Material for photo alignment shown below | 1.00 part by mass |
| Water | 16.00 parts by mass |
| Butoxyethanol | 42.00 parts by mass |
| Propylene glycol monomethyl ether | 42.00 parts by mass |

-Material for photo alignment-

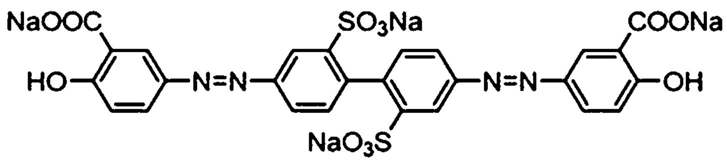

The above-described dried film on the support was irradiated with linearly polarized UV light at 10 mW/cm$^2$ for 30 seconds using a 365 nm LED-UV irradiation device through a wire grid polarizing plate to form a photo-alignment film.

[Production and evaluation of optically anisotropic layer]

<Preparation of coating liquid 1 for forming optically anisotropic layer (coating liquid 1)>

A coating liquid 1 for forming an optically anisotropic layer, having the following formulation, was prepared.

| Coating liquid 1 for forming optically anisotropic layer | |
|---|---|
| Polymerizable liquid crystal compound LC1 shown below | 80.00 parts by mass |
| Polymerizable liquid crystal compound LC2 shown below | 20.00 parts by mass |
| Aligning agent (compound A1) described in Table 1 | 0.40 parts by mass |
| Polymerization initiator (Omnirad 819 (manufactured by IGM Resins B.V.)) | 3.00 parts by mass |
| Cyclohexanone | amount at which concentrationof solute was 11% by mass |

-Polymerizable liquid crystal compound LC1-

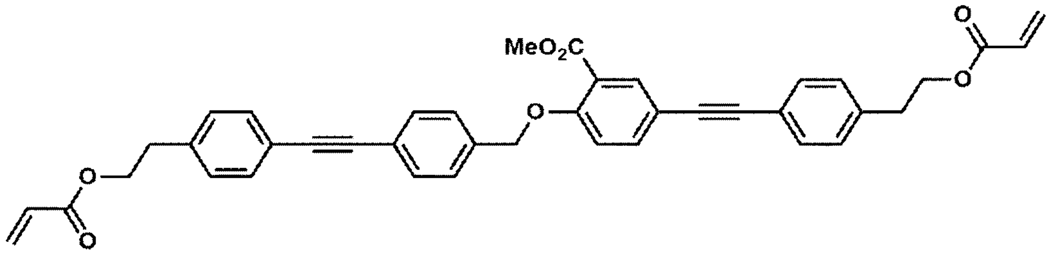

-Polymerizable liquid crystal compound LC2-

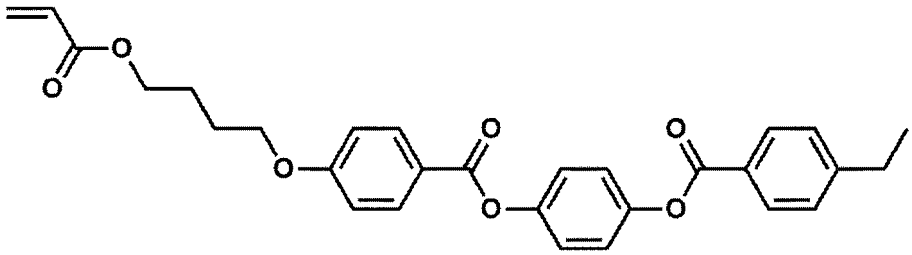

<Production and evaluation of optically anisotropic layer 1A>

Subsequently, 50 μL of the coating liquid 1 for forming an optically anisotropic layer was weighed using a micropipette, and the coating liquid was added dropwise onto the photo-alignment film and spin-coated at a rotation speed of 1,500 rpm. Next, the obtained coating film was heated at 100°C for 1 minute, and irradiated with UV light at 10 mW/$cm^2$ for 30 seconds using a 365 nm LED-UV irradiation device in a nitrogen atmosphere to form an optically anisotropic layer 1A.

The obtained optically anisotropic layer 1A was observed with an optical microscope, and aligning properties were evaluated according to the following standard. The results are shown in Table 1.

(Evaluation standard)

"A": no alignment defect
"B": slightly alignment defect
"C": many alignment defects

<Production and evaluation of optically anisotropic layer 1B>

Next, 200 μL of cyclohexanone was weighed using a micropipette, and the cyclohexanone was added dropwise onto the optically anisotropic layer 1A and spin-coated at a rotation speed of 1,500 rpm (solvent washing treatment with cyclohexanone).

Subsequently, 50 μL of the coating liquid 1 for forming an optically anisotropic layer was weighed using a micropipette, and the coating liquid was added dropwise onto the optically anisotropic layer 1A and spin-coated at a rotation speed of 1,500 rpm. Next, the obtained coating film was heated at 80°C for 1 minute, and irradiated with UV light at 10 mW/$cm^2$ for 30 seconds using a 365 nm LED-UV irradiation device in a nitrogen atmosphere to form an optically anisotropic layer 1B.

By the above-described procedure, a laminate including the support, the photo-alignment film, the optically anisotropic layer 1A, and the optically anisotropic layer 1B in this order was obtained.

Aligning properties of the optically anisotropic layer 1B in the obtained laminate were observed with an optical microscope, the presence or absence of cissing was visually observed, and the evaluation was performed according to the following standard.

The presence of cissing means a case in which a portion where the optically anisotropic layer 1B was not formed and/or a portion where coating unevenness of the optically anisotropic layer 1B occurred was present.

(Evaluation standard for cissing property)

"A": no cissing
"B": slight cissing
"C": many cissing

(Evaluation standard for alignment defect)

"A": no alignment defect
"B": slight alignment defect
"C": many alignment defects

[Examples 2 to 11 and Comparative Examples 1 and 2]

Coating liquids 2 to 11 and R1 and R2 for forming an optically anisotropic layer (coating liquids 2 to 11, R1, and R2) were prepared with the same formation as the coating liquid 1 for forming an optically anisotropic layer described above, except that the liquid crystal compound and the aligning agent were changed as described in Table 1.
In Comparative Examples 1 and 2, a polyorganosiloxane compound (compound CE1) having a polymerizable group (epoxy group) and having a molecular weight of 9,500 was synthesized by a method described in Synthesis Example CE-1 of paragraph 0069 of JP6617529B, and the compound was used as the aligning agent.

[Production and evaluation of optically anisotropic layers 2A to 11A, R1A, and R2A]

Optically anisotropic layers 2A to 11A, R1A, and R2A were produced by the same procedure as in <Production and evaluation of optically anisotropic layer 1A> described above, except that the coating liquid 1 for forming an optically anisotropic layer was changed to the coating liquids 2 to 11, R1, and R2 for forming an optically anisotropic layer described in Table 1, and aligning properties were evaluated as described above. The results are shown in Table 1.

[Production and evaluation of optically anisotropic layers 2B to 11B, R1B, and R2B]

Optically anisotropic layers 2B to 11B, R1B, and R2B were formed on the surfaces of the optically anisotropic layers 2A to 11A, R1A, and R2A by the same procedure as in <Production and evaluation of optically anisotropic layer 1B> described above, except that the coating liquid 1 for forming an optically anisotropic layer was changed to the coating liquids 2 to 11, R1, and R2 for forming an optically anisotropic layer described in Table 1 (that is, for example, in a case of Example 2, the optically anisotropic layer 2B was formed on the surface of the optically anisotropic layer 2A which was formed of the coating liquid 2 for forming an optically anisotropic layer, using the coating liquid 2 for forming an optically anisotropic layer; and in a case of Example 3, the optically anisotropic layer 3B was formed on the surface of the optically anisotropic layer 3A which was formed of the coating liquid 3 for forming an optically anisotropic layer, using the coating liquid 3 for forming an optically anisotropic layer). Next, the evaluation was performed by the same procedure as in <Production and evaluation of optically anisotropic layer 1B> described above using the produced laminate. The results are shown in Table 1.
Liquid crystal compounds used in Table 1 are shown below.

-Polymerizable liquid crystal compound LC3 (mixture)-

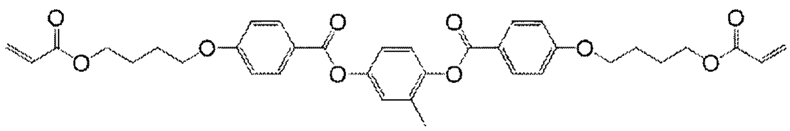

84%

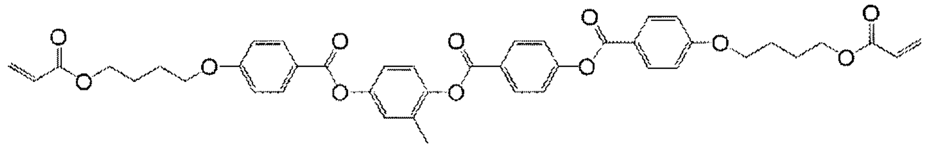

14%

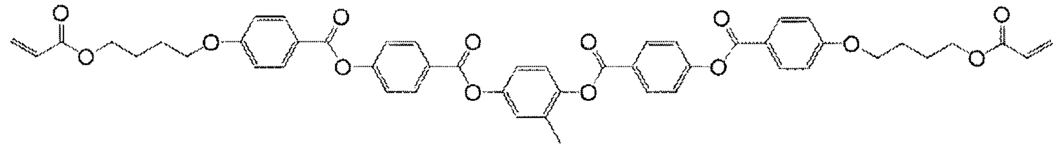

2%

-Polymerizable liquid crystal compound LC4-

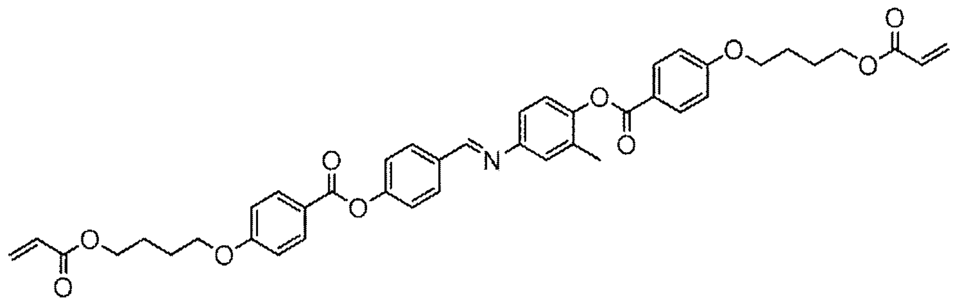

-Polymerizable liquid crystal compound LC5-

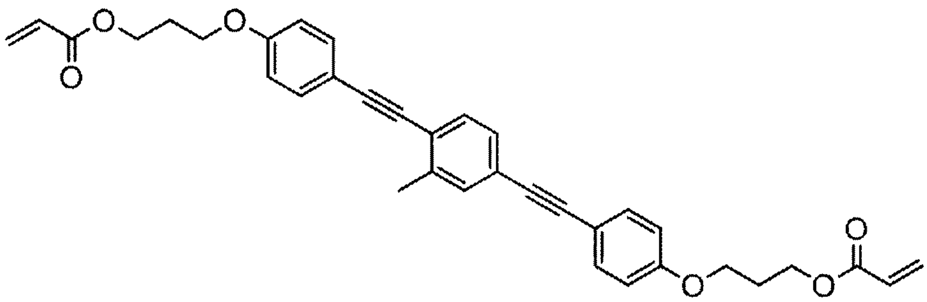

-Polymerizable liquid crystal compound LC6-

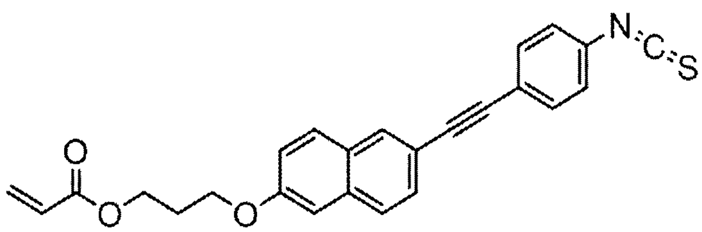

-Polymerizable liquid crystal compound LC7-

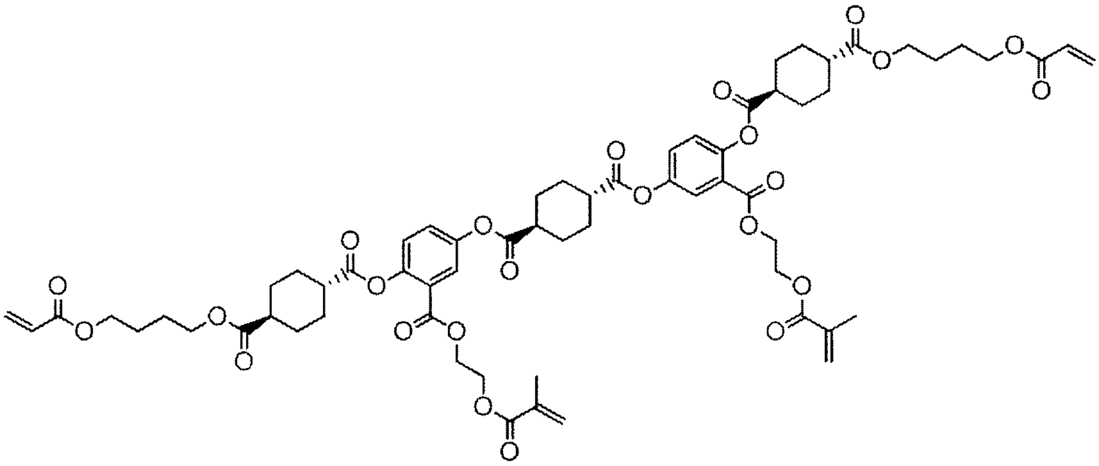

-Polymerizable liquid crystal compound LC8-

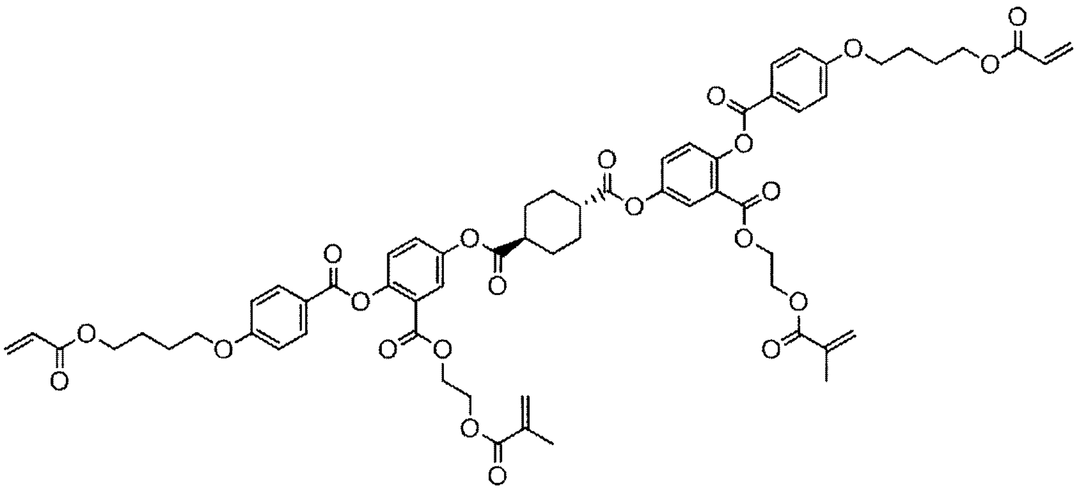

-Polymerizable liquid crystal compound LC9-

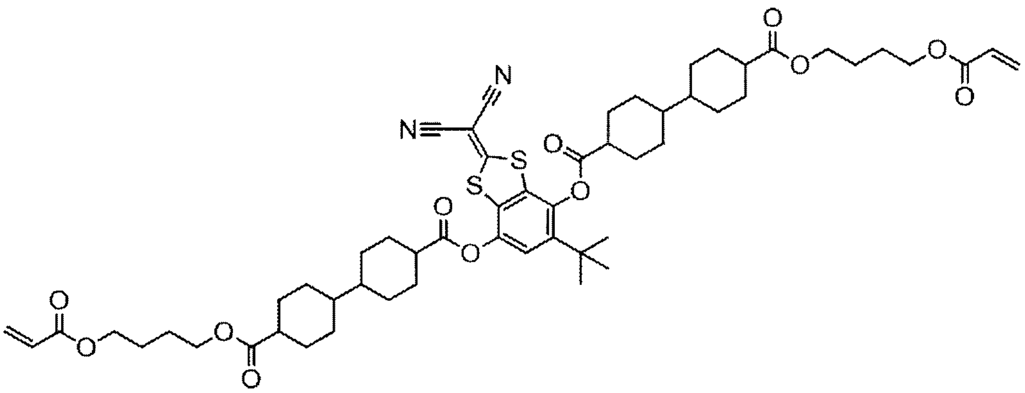

[Example 12]

[Production of photo-alignment film]

<Preparation of composition 2 for forming photo-alignment film>

8.4 parts by mass of the following copolymer C1 and 0.3 parts by mass of the following thermal acid generator D1 were added to a mixed liquid containing 80 parts by mass of butyl acetate and 20 parts by mass of methyl ethyl ketone to prepare a composition 2 for a photo-alignment film.

-Copolymer C1 (weight-average molecular weight: 40,000)-

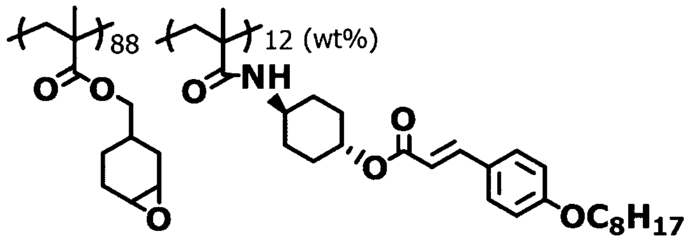

-Thermal acid generator D1-

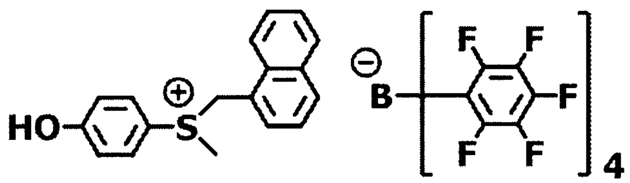

<Production of photo-alignment film>

A glass substrate was used as a support. The composition 2 for a photo-alignment film was applied onto the support with a spin coater. Next, the support on which the composition 2 for a photo-alignment film was applied was dried in a dryer at 120°C for 1 minute to remove the solvent, thereby forming a dried film having a thickness of 0.3 μm. Subsequently, the dried film was irradiated with polarized ultraviolet rays (10 mJ/cm, using an ultra-high pressure mercury lamp) to form a photo-alignment film.

[Production and evaluation of optically anisotropic layer 12A]

<Preparation of coating liquid 12 for forming optically anisotropic layer (coating liquid 12)>

A coating liquid 12 for forming an optically anisotropic layer, having the following formulation, was prepared.

| Coating liquid 12 for forming optically anisotropic layer | |
|---|---|
| · Polymerizable liquid crystal compound LC10 shown below | 100.00 parts by mass |
| · Polymerization initiator S1 shown below | 0.50 parts by mass |
| · Aligning agent (compound A1) described in Table 1 | 0.09 parts by mass |
| · Cyclopentanone | 179.67 parts by mass |
| · Methyl ethyl ketone | 53.67 parts by mass |

-Polymerizable liquid crystal compound LC10- [Δn(450)/Δn(550): 0.83]

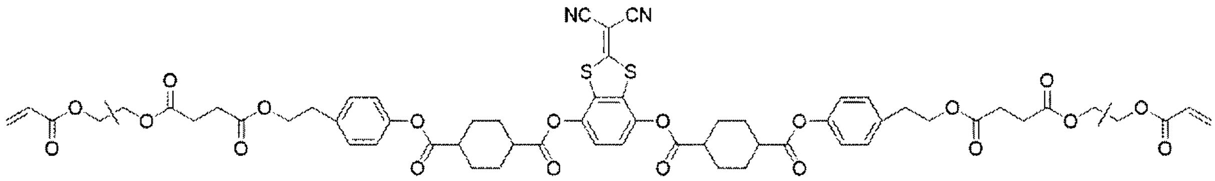

-Polymerization initiator S1-

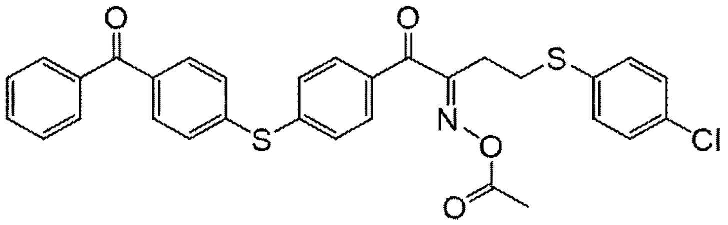

<Production and evaluation of optically anisotropic layer 12A>

In a coating room at a temperature of 23°C, the coating liquid 12 for forming an optically anisotropic layer described above was applied onto the photo-alignment film with a spin coater. Next, the obtained support with a coating film was placed in a dryer at 120°C, left until the surface temperature of the coating film reached 120°C, and then taken out of the dryer and cooled until the surface temperature of the coating film reached 60°C. Thereafter, the alignment was fixed by irradiating with ultraviolet light (300 mJ/$cm^2$, using an ultra-high pressure mercury lamp) in a nitrogen atmosphere (oxygen concentration: 100 ppm by volume) while maintaining the above-described temperature, thereby producing an optically anisotropic layer 12A having a thickness of 2.1 μm.

In a case where the obtained optically anisotropic layer 12A was peeled off from the support and a phase difference of the optically anisotropic layer 12A was measured, an in-plane retardation Re1(550) was 145 nm, and Re1(450)/Re1(550) was 0.83.

Aligning properties of the obtained optically anisotropic layer 12A were evaluated by the same procedure as in Example 1. The results are shown in Table 1.

<Production and evaluation of optically anisotropic layer 12B>

(Preparation of coating liquid 12' for forming optically anisotropic layer (coating liquid 12')>

A coating liquid 12' for forming an optically anisotropic layer, having the following formulation, was prepared.

| Coating liquid 12' for forming optically anisotropic layer | |
|---|---|
| · Polymerizable liquid crystal compound RA shown below | 24.5 parts by mass |
| · Polymerizable liquid crystal compound RB shown below | 24.5 parts by mass |
| · Polymerizable liquid crystal compound RC shown below | 10.0 parts by mass |
| · Polymerizable liquid crystal compound RD shown below | 20.5 parts by mass |
| · Polymerizable liquid crystal compound RE shown below | 20.5 parts by mass |
| · Polymerizable liquid crystal compound RF shown below | 15.0 parts by mass |
| · Compound B1 shown below | 3.0 parts by mass |
| · Compound C1 shown below | 8.0 parts by mass |
| · Polymerization initiator S1 shown above | 3.0 parts by mass |
| · Leveling agent Y shown below | 0.6 parts by mass |
| · Cyclopentanone | 232.9 parts by mass |
| · Methyl ethyl ketone | 105.9 parts by mass |
| · Methanol | 19.4 parts by mass |
| · Isopropyl alcohol | 19.41 parts by mass |

-Polymerizable liquid crystal compound RA-[Δn(450)/Δn(550): 0.58]

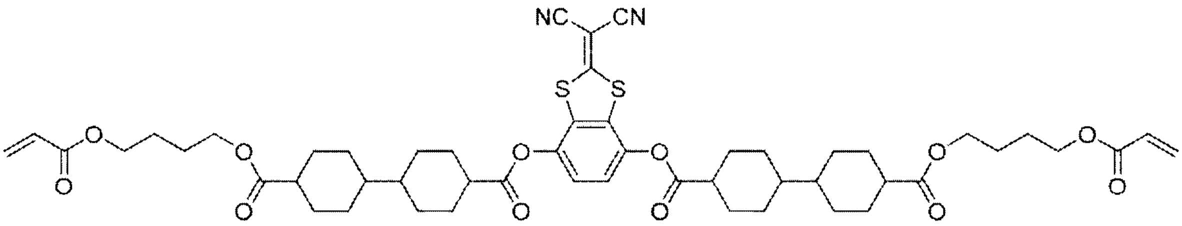

-Polymerizable liquid crystal compound RB-[Δn(450)/Δn(550): 0.68]

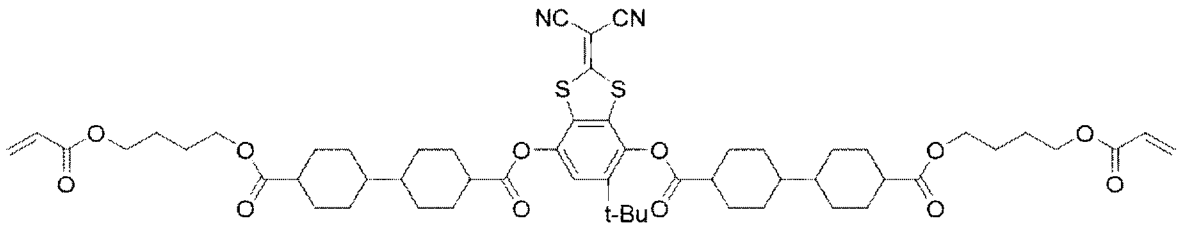

-Polymerizable liquid crystal compound RC-[Δn(450)/Δn(550): 0.80]

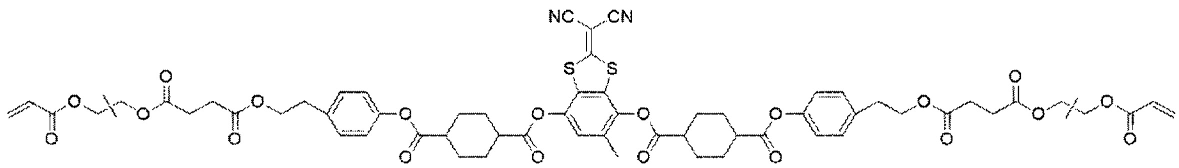

-Polymerizable liquid crystal compound RD-[Δn(450)/Δn(550): 1.03]

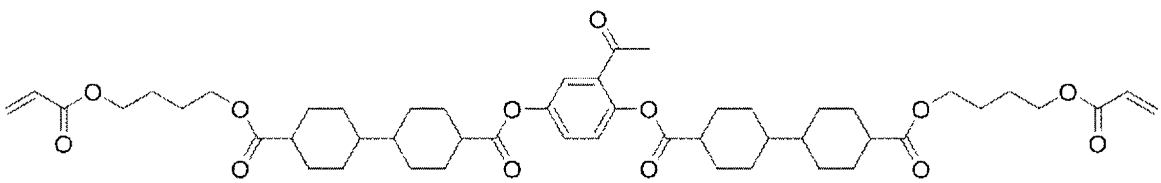

-Polymerizable liquid crystal compound RE-[Δn(450)/Δn(550): 1.02]

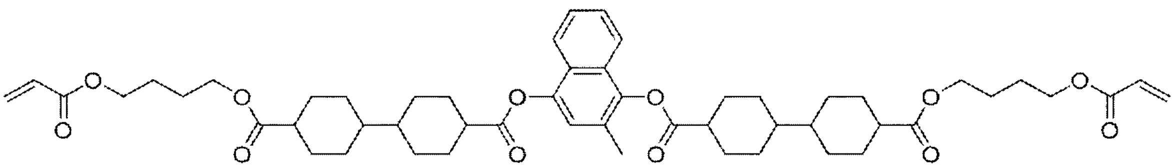

-Polymerizable liquid crystal compound RF-[Δn(450)/Δn(550): 1.03]

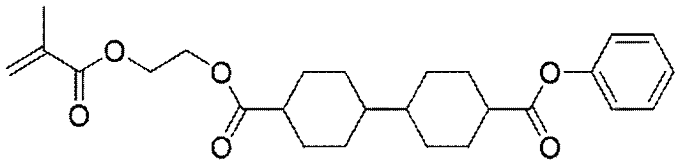

-Compound B1-

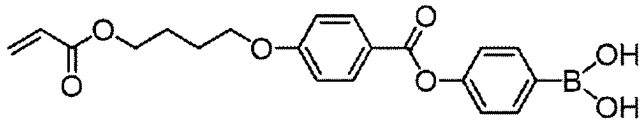

-Compound C1 (mixture of following compounds)-

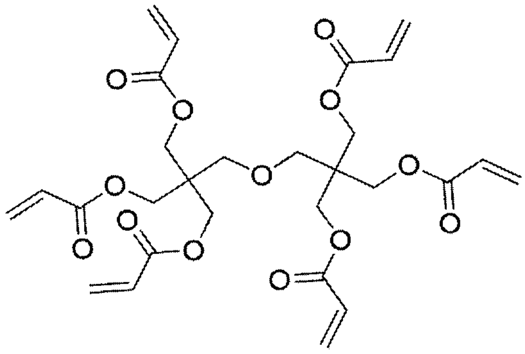

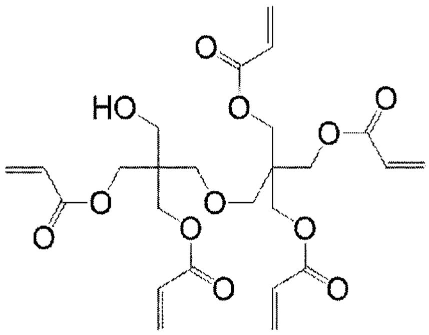

-Leveling agent Y-

(the numerical value added to the repeating unit in the following structural formula is on a basis of % by mass; in addition, a weight-average molecular weight of the leveling agent Y was 15,300)

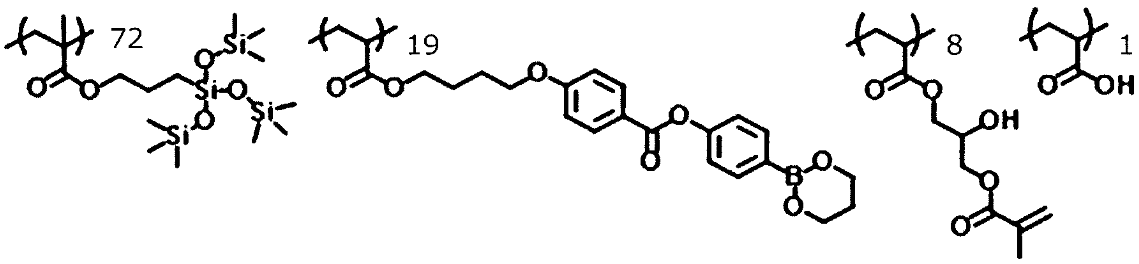

<Production of optically anisotropic layer 12B>

The surface of the optically anisotropic layer 12A opposite to the glass substrate was subjected to a corona treatment at a discharge amount of 150 W·min/$m^2$, and the above-described coating liquid 12' for forming an optically anisotropic layer was applied onto the surface subjected to the corona treatment with a spin coater. Next, the obtained laminate with a coating film was heated with hot air at 85°C for 60 seconds for drying of the solvent of the composition and for aligning and aging the liquid crystal compound. The alignment was fixed by irradiating with ultraviolet light (150 mJ/$cm^2$) at 50°C in a nitrogen purge atmosphere with an oxygen concentration of 100 ppm by volume, thereby producing an optically anisotropic layer 12B having a thickness of 2.0 μm.

By the above-described procedure, a laminate Z1 including the support, the photo-alignment film, the optically anisotropic layer 12A, and the optically anisotropic layer 12B in this order was obtained.

Aligning properties of the optically anisotropic layer 12B in the obtained laminate Z1 and the presence or absence of cissing were evaluated by the same procedure as in Example 1.

In a case where the support and the photo-alignment film were peeled off from the produced laminate, a phase difference of the laminate (optically anisotropic layer 12A/optically anisotropic layer 12B) was measured, and a phase difference of the optically anisotropic layer 12B was calculated by subtracting a phase difference of the optically anisotropic layer 12A measured in advance, it was confirmed that a thickness-direction retardation Rth(550) was -90 nm and the optically anisotropic layer 12B was a positive C-plate.

[Example 13]

<Preparation of coating liquid 13 for forming optically anisotropic layer (coating liquid 13)>

A coating liquid 13 for forming an optically anisotropic layer, having the following formulation, was prepared.

| Coating liquid 13 for forming optically anisotropic layer | |
|---|---|
| · Polymerizable liquid crystal compound LC11 shown below | 100.00 parts by mass |
| · Polymerization initiator S1 shown above | 0.50 parts by mass |
| · Aligning agent (compound A1) described in Table 1 | 0.09 parts by mass |
| · Cyclopentanone | 179.67 parts by mass |
| · Methyl ethyl ketone | 53.67 parts by mass |

-Liquid crystal compound LC11-[Δn(450)/Δn(550): 0.58]

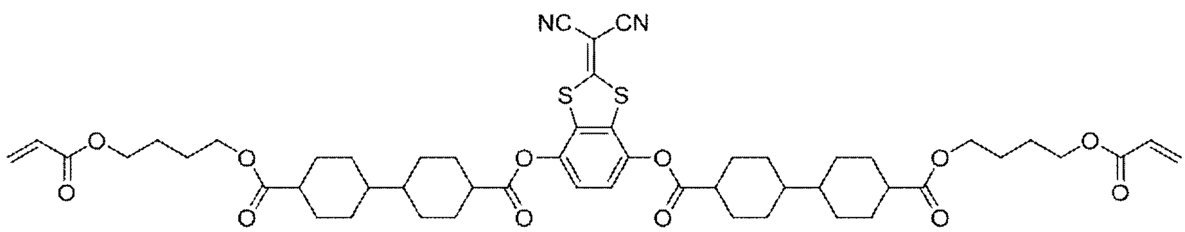

<Production of optically anisotropic layer 13A>

An optically anisotropic layer 13A was produced by the same procedure as in <Production and evaluation of optically anisotropic layer 12A> described above, except that the coating liquid 12 for forming an optically anisotropic layer was changed to the coating liquid 13 for forming an optically anisotropic layer, and aligning properties were evaluated as described above. The results are shown in Table 1.

<Production of optically anisotropic layer 13B>

An optically anisotropic layer 13B was formed on the surface of the optically anisotropic layer 13A by the same procedure as in <Production and evaluation of optically anisotropic layer 12B> described above (that is, the optically anisotropic layer 13B was an optically anisotropic layer formed of the coating liquid 12' for forming an optically anisotropic

layer, as in the optically anisotropic layer 12B). Next, the evaluation was performed by the same procedure as in <Production and evaluation of optically anisotropic layer 12B> described above using the produced laminate. The results are shown in Table 1.

[Example 14]

<Preparation of coating liquid 14 for forming optically anisotropic layer (coating liquid 14)>

A coating liquid 14 for forming an optically anisotropic layer, having the following formulation, was prepared.

| Coating liquid 14 for forming optically anisotropic layer | |
|---|---|
| · Polymerizable liquid crystal compound LC12 shown below | 100.00 parts by mass |
| · Polymerization initiator S1 shown above | 0.50 parts by mass |
| · Aligning agent (compound A1) described in Table 1 | 0.09 parts by mass |
| · Cyclopentanone | 179.67 parts by mass |
| · Methyl ethyl ketone | 53.67 parts by mass |

-Liquid crystal compound LC12-[$\Delta n(450)/\Delta n(550)$: 0.83]

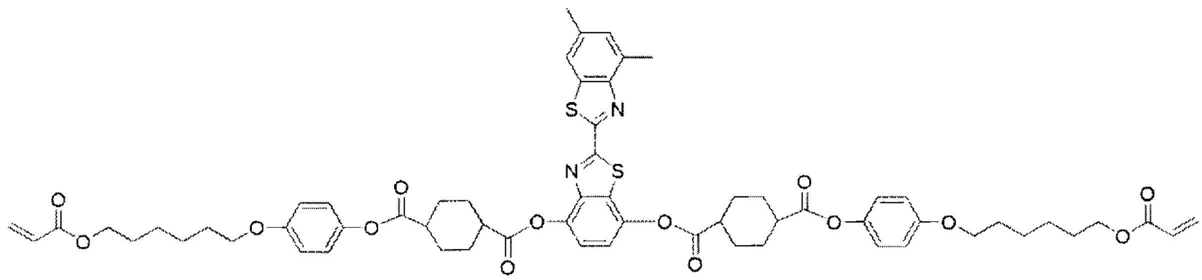

<Production of optically anisotropic layer 14A>

An optically anisotropic layer 14A was produced by the same procedure as in <Production and evaluation of optically anisotropic layer 12A> described above, except that the coating liquid 12 for forming an optically anisotropic layer was changed to the coating liquid 14 for forming an optically anisotropic layer, and aligning properties were evaluated as described above. The results are shown in Table 1.

<Production of optically anisotropic layer 14B>

An optically anisotropic layer 14B was formed on the surface of the optically anisotropic layer 14A by the same procedure as in <Production and evaluation of optically anisotropic layer 12B> described above (that is, the optically anisotropic layer 14B was an optically anisotropic layer formed of the coating liquid 12' for forming an optically anisotropic layer, as in the optically anisotropic layer 12B). Next, the evaluation was performed by the same procedure as in <Production and evaluation of optically anisotropic layer 12B> described above using the produced laminate. The results are shown in Table 1.

[Table 16]

| Table 1 | Main formulation of coating liquid for forming optically anisotropic layer | | | | | | | | | Evaluation | | |
|---|---|---|---|---|---|---|---|---|---|---|---|---|
| | Coating liquid number | Polymerizable liquid crystal compound | | | | Aligning agent | | | Evaluation of aligning properties of composition | Evaluation of laminate | |
| | | Liquid crystal compound 1 | | Liquid crystal compound 2 | | Type | Molecular weight | Part by mass | | Cissing | Alignment defect |
| | | Type | Part by mass | Type | Part by mass | | | | | | |
| Example 1 | 1 | LC1 | 80 | LC2 | 20 | Compound A1 | 1036 | 0.4 | A | A | A |
| Example 2 | 2 | LC1 | 80 | LC2 | 20 | Compound A2 | 890 | 0.4 | B | A | B |
| Example 3 | 3 | LC1 | 80 | LC2 | 20 | Compound A3 | 890 | 0.4 | B | A | B |
| Example 4 | 4 | LC1 | 80 | LC2 | 20 | Compound A4 | 1483 | 0.4 | A | A | A |
| Example 5 | 5 | LC1 | 80 | LC2 | 20 | Compound A40 | 1172 | 0.4 | A | A | A |
| Example 6 | 6 | LC1 | 80 | LC2 | 20 | Compound A41 | 1469 | 0.4 | A | A | A |
| Example 7 | 7 | LC3 | 100 | - | - | Compound A1 | 1036 | 0.4 | A | A | A |
| Example 8 | 8 | LC4 | 100 | - | - | Compound A1 | 1036 | 0.4 | A | A | A |
| Example 9 | 9 | LC5 | 50 | LC6 | 50 | Compound A1 | 1036 | 0.4 | A | A | A |
| Example 10 | 10 | LC7 | 50 | LC8 | 50 | Compound A1 | 1036 | 0.4 | A | A | A |
| Example 11 | 11 | LC2 | 50 | LC9 | 50 | Compound A1 | 1036 | 0.4 | A | A | A |
| Example 12 | 12 | LC10 | 100 | - | - | Compound A1 | 1036 | 0.09 | A | A | A |
| Example 13 | 13 | LC11 | 100 | - | - | Compound A1 | 1036 | 0.09 | A | A | A |
| Example 14 | 14 | LC12 | 100 | - | - | Compound A1 | 1036 | 0.09 | A | A | A |
| Comparative Example 1 | R1 | LC1 | 80 | LC2 | 20 | Compound CE1 | 9500 | 0.4 | C | C | C |
| Comparative Example 2 | R2 | LC3 | 100 | - | - | Compound CE1 | 9500 | 0.4 | C | C | C |

From the results of Table 1, it was found that the composition according to the embodiment of the present invention had excellent aligning properties and laminatability.

In addition, from the comparison of Examples, it was found that, in a case where the molecular weight of the aligning agent was 1,000 or more, more excellent effects were obtained.

[Example 15]

[Production and evaluation of optically anisotropic layer]

A coating liquid 15 for forming an optically anisotropic layer, having the following formulation, was prepared.

| Coating liquid 15 for forming optically anisotropic layer | |
|---|---|
| Polymerizable liquid crystal compound LC3 shown above | 100.00 parts by mass |
| Aligning agent (compound A1 described above) | 0.40 parts by mass |
| Polymerization initiator (Omnirad 819 (manufactured by IGM Resins B.V.)) | 3.00 parts by mass |
| Chiral agent (Paliocolor LC756 (manufactured by BASF)) | 5.70 parts by mass |
| Cyclohexanone | amount at which concentration of solute was 30% by mass |

[Production of photo-alignment film]

A photo-alignment film was formed on a glass substrate by the same procedure as in [Production of photo-alignment film] of Example 1.

Subsequently, 50 μL of the coating liquid 15 for forming an optically anisotropic layer was weighed using a micropipette, and the coating liquid was added dropwise onto the photo-alignment film and spin-coated at a rotation speed of 1,500 rpm. Next, the obtained coating film was heated at 100°C for 1 minute, and irradiated with UV light at an illuminance of 10 $mW/cm^2$ for 30 seconds using a 365 nm LED-UV irradiation device in a nitrogen atmosphere to form an optically anisotropic layer 15A.

The optically anisotropic layer 15A exhibited a central reflection wavelength at 550 nm. As a result of measuring a haze value of the optically anisotropic layer 15A with a haze meter, it was less than 1.0. That is, it was confirmed that the optically anisotropic layer 15A had suppressed alignment defects.

[Comparative Example 3]

An optically anisotropic layer R3A was produced and evaluated by the same method as in Example 15, except that the aligning agent was changed to the compound CE1. The optically anisotropic layer R3A exhibited a central reflection wavelength at approximately 550 nm, but the spectrum was broad due to scattering, and the haze value was 5.0 or more.

[Example 16]

[Production of photo-alignment film]

The dried film of the coating liquid 1 for forming a photo-alignment film, described in Example 1, was exposed as an exposure film using an exposure device of FIG. 7 of JP2022-036995A in an environment of a temperature of 25°C and a relative humidity of 10% to form a photo-alignment film P-1 having an alignment pattern.

In the exposure device, a laser which emits laser beam having a wavelength (325 nm) was used as the laser. An exposure amount of the interference light was set to 3,000 $mJ/cm^2$. An intersecting angle (intersecting angle $\alpha$) between two laser beams was 9.3°.

Subsequently, 50 μL of the coating liquid 1 for forming an optically anisotropic layer was weighed using a micropipette, and the coating liquid was added dropwise onto the photo-alignment film and spin-coated at a rotation speed of 1,500 rpm. The obtained coating film was heated at 80°C for 1 minute, and irradiated with UV light at 10 $mW/cm^2$ for 30 seconds using a 365 nm LED-UV irradiation device in a nitrogen atmosphere to form an optically anisotropic layer 16A.

Furthermore, 200 μL of cyclohexanone was weighed using a micropipette, and the cyclohexanone was added dropwise onto the optically anisotropic layer 16A and spin-coated at a rotation speed of 1,500 rpm (solvent washing

treatment with cyclohexanone).

Aligning properties of the optically anisotropic layer 16A after the solvent washing treatment with cyclohexanone was observed with an optical microscope, and it was confirmed that the stripe pattern was clearly visible. That is, it was confirmed that the optically anisotropic layer 16A had suppressed alignment defects and had favorable aligning properties.

Subsequently, the following lamination step was repeated three times on the optically anisotropic layer 16A after the solvent washing treatment with cyclohexanone described to produce a laminate in which four optically anisotropic layers were laminated.

Lamination step: 50 μL of the coating liquid 1 for forming an optically anisotropic layer was weighed using a micropipette, and the coating liquid was added dropwise onto the optically anisotropic layer and spin-coated at a rotation speed of 1,500 rpm; the obtained coating film was heated at 80°C for 1 minute, and irradiated with UV light at 10 $mW/cm^2$ for 30 seconds using a 365 nm LED-UV irradiation device in a nitrogen atmosphere; subsequently, 200 μL of cyclohexanone was weighed using a micropipette, and added dropwise onto the optically anisotropic layer and spin-coated at a rotation speed of 1,500 rpm.

Aligning properties of the obtained laminate were observed with an optical microscope, and it was confirmed that the stripe pattern was clearly visible. In addition, it was visually confirmed that the laminate did not have cissing.

Furthermore, in a case where the laminate was irradiated with laser light using a 650 nm laser pointer, it was confirmed that +1st and -1st diffracted light were strongly observed, and an excellent diffraction element was obtained.

In addition, as a result of performing a cross-cut test using the laminate, it was found that peeling occurred between the liquid crystal layer and the photo-alignment film layer in all squares, and adhesiveness between the liquid crystal layer and the liquid crystal layer and adhesiveness between the liquid crystal layer and the pressure sensitive adhesive tape were excellent.

[Comparative Example 4]

An optically anisotropic layer R4A and a laminate in which four optically anisotropic layers R4A were laminated were produced by the same method as in Example 16, except that the aligning agent was changed to the compound CE1; and the same evaluation as in Example 16 was performed.

In the optically anisotropic layer R4A and the laminate, the stripe pattern was unclear, and unevenness or alignment defects due to surface unevenness were observed. In addition, the laminate had cissing.

In addition, in a case where the laminate was irradiated with laser light using a 650 nm laser pointer, diffracted light was slightly observed.

Furthermore, as a result of performing a cross-cut test using the laminate, a partially peeled portion occurred between the liquid crystal layer and the liquid crystal layer and between the liquid crystal layer and the pressure sensitive adhesive tape.

Explanation of References

1, 2, 3: optically anisotropic layer
xy plane: sheet surface
z direction: thickness direction
30: liquid crystal compound
A: length of single period
30A: optical axis derived from liquid crystal compound 30
θ: angle
R: region
d: thickness (film thickness) of optically anisotropic layer
$P_L$: levorotatory circularly polarized light
$P_R$: dextrorotatory circularly polarized light
$L_1$, $L_4$, $L_6$: incident ray
$L_2$, $L_5$, $L_7$: transmitted ray
Q1, Q2: absolute phase
E1, E2: equiphase plane
$A_1$, $A_2$, $A_3$: direction

## Claims

1. A composition comprising:

   a polymerizable liquid crystal compound; and
   a silicon-containing compound,
   wherein the silicon-containing compound satisfies all of the following requirements 1 to 4,
   the requirement 1: the silicon-containing compound has no polymerizable group,
   the requirement 2: the silicon-containing compound includes two or more ring structures in a molecule,
   the requirement 3: the silicon-containing compound includes a siloxane bond,
   the requirement 4: the silicon-containing compound has a molecular weight of less than 5,000.

2. The composition according to claim 1,
   wherein the silicon-containing compound has a linking group including the two or more ring structures and a plurality of structural moieties including the siloxane bond, and has a structure in which the plurality of structural moieties are bonded to each other through the linking group.

3. The composition according to claim 1 or 2,

   wherein the silicon-containing compound has a group selected from the group consisting of groups represented by Formula (C-1) to Formula (C-3),

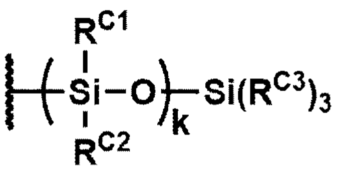

(C-1)

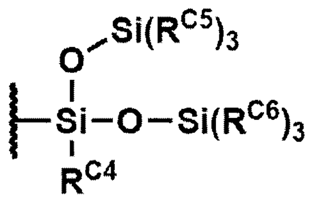

(C-2)

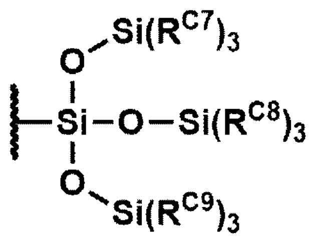

(C-3)

   in Formula (C-1), $R^{C1}$ to $R^{C3}$ each independently represent an alkyl group having 1 to 10 carbon atoms, and k represents an integer of 2 to 20,
   in Formula (C-1), a plurality of $R^{C1}$'s, a plurality of $R^{C2}$'s, and a plurality of $R^{C3}$'s may be the same or different from each other,
   in Formula (C-2), $R^{C4}$ represents an alkyl group having 1 to 10 carbon atoms, and $R^{C5}$ and $R^{C6}$ each independently represent an alkyl group having 1 to 10 carbon atoms or a group represented by Formula (C-1X), in Formula (C-2), a plurality of $R^{C5}$'s and a plurality of $R^{C6}$'s may be the same or different from each other,
   in Formula (C-3), $R^{C7}$ to $R^{C9}$ each independently represent an alkyl group having 1 to 10 carbon atoms or a group represented by Formula (C-1X), in Formula (C-3), a plurality of $R^{C7}$'s, a plurality of $R^{C8}$'s, and a plurality of $R^{C9}$'s may be the same or different from each other,

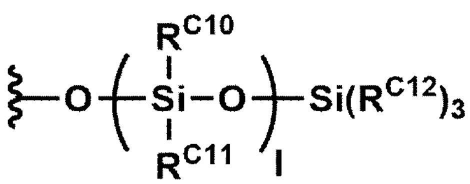

(C-1X)

   in Formula (C-1X), $R^{C10}$ to $R^{C12}$ each independently represent an alkyl group having 1 to 10 carbon atoms, and l represents an integer of 0 to 20, in Formula (C-1X), a plurality of $R^{C10}$'s, a plurality of $R^{C11}$'s, and a plurality of $R^{C12}$'s may be the same or different from each other.

**4.** The composition according to claim 1 or 2,

wherein the silicon-containing compound is a compound represented by Formula (1),

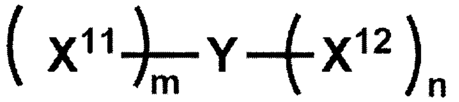

**(1)**

in the formula, $X^{11}$ and $X^{12}$ each independently represent a chain-like structure including a siloxane bond, Y represents an (m+n)-valent linking group including two or more ring structures, and m and n each independently represent an integer of 1 or more, provided that the compound represented by Formula (1) has no polymerizable group and has a molecular weight of less than 5,000.

**5.** The composition according to claim 1 or 2,

wherein the silicon-containing compound is a compound represented by Formula (2),

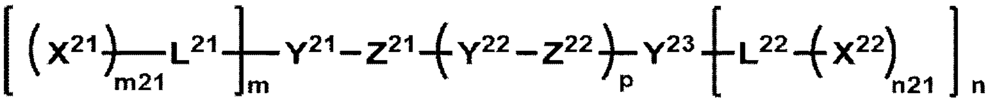

**(2)**

in the formula, $X^{21}$ and $X^{22}$ each independently represent a group selected from the group consisting of groups represented by Formula (C-1) to Formula (C-3),

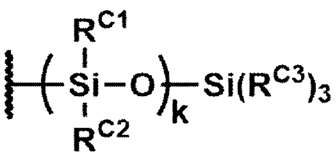

**(C-1)**

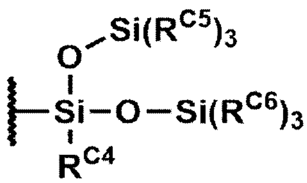

**(C-2)**

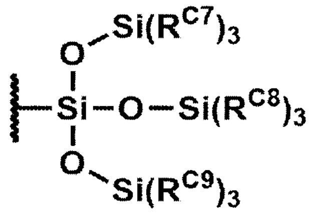

**(C-3)**

in Formula (C-1), $R^{C1}$ to $R^{C3}$ each independently represent an alkyl group having 1 to 10 carbon atoms, and k represents an integer of 2 to 20,
in Formula (C-1), a plurality of $R^{C1}$'s, a plurality of $R^{C2}$'s, and a plurality of $R^{C3}$'s may be the same or different from each other,
in Formula (C-2), $R^{C4}$ represents an alkyl group having 1 to 10 carbon atoms, and $R^{C5}$ and $R^{C6}$ each independently represent an alkyl group having 1 to 10 carbon atoms or a group represented by Formula (C-1X),
in Formula (C-2), a plurality of $R^{C5}$'s and a plurality of $R^{C6}$'s may be the same or different from each other,
in Formula (C-3), $R^{C7}$ to $R^{C9}$ each independently represent an alkyl group having 1 to 10 carbon atoms or a group represented by Formula (C-1X),
in Formula (C-3), a plurality of $R^{C7}$'s, a plurality of $R^{C8}$'s, and a plurality of $R^{C9}$'s may be the same or different from each other,

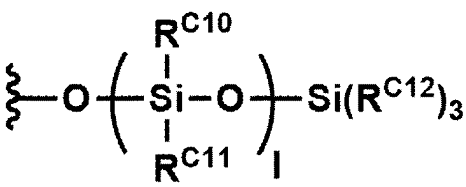

**(C-1X)**

in Formula (C-1X), $R^{C10}$ to $R^{C12}$ each independently represent an alkyl group having 1 to 10 carbon atoms, and l

represents an integer of 0 to 20,
in Formula (C-1X), a plurality of $R^{C10}$'s, a plurality of $R^{C11}$'s, and a plurality of $R^{C12}$'s may be the same or different from each other,
m21, m, p, n21, and n each independently represent an integer of 1 to 10,
$L^{21}$ represents a single bond or a chain-like (m21+1)-valent hydrocarbon group, where in the hydrocarbon group, at least one $-CH_2-$ may be replaced with -NH-, -O-, -S-, -CO-, -CS-, -SO-, or $-SO_2-$, at least one $-CH_2CH_2-$ may be replaced with -N=N-, -CH=N-, -CF=CF-, or -C=C-, at least one -CH< may be replaced with -N< or -SiH<, and at least one >C< may be replaced with >Si<,
$L^{22}$ represents a single bond or a chain-like (n21+1)-valent hydrocarbon group, where in the hydrocarbon group, at least one $-CH_2-$ may be replaced with -NH-, -O-, -S-, -CO-, -CS-, -SO-, or $-SO_2-$, at least one $-CH_2CH_2-$ may be replaced with -N=N-, -CH=N-, -CF=CF-, or -C=C-, at least one -CH< may be replaced with -N< or -SiH<, and at least one >C< may be replaced with >Si<,
$Z^{21}$ and $Z^{22}$ each independently represent a single bond or a divalent linking group,
$Y^{21}$ represents an (m+1)-valent aromatic ring group or an (m+1)-valent alicyclic ring group, which may have a substituent,
$Y^{22}$ represents a divalent aromatic ring group or a divalent alicyclic ring group, which may have a substituent,
$Y^{23}$ represents an (n+1)-valent aromatic ring group or an (n+1)-valent alicyclic ring group, which may have a substituent,
in a case where a plurality of $X^{21}$'s are present in the formula, the plurality of $X^{21}$'s may be the same or different from each other, in a case where a plurality of $L^{21}$'s are present in the formula, the plurality of $L^{21}$'s may be the same or different from each other, in a case where a plurality of $Y^{22}$'s are present in the formula, the plurality of $Y^{22}$'s may be the same or different from each other, in a case where a plurality of $Z^{22}$'s are present in the formula, the plurality of $Z^{22}$'s may be the same or different from each other, in a case where a plurality of $L^{22}$'s are present in the formula, the plurality of $L^{22}$'s may be the same or different from each other, and in a case where a plurality of $X^{22}$'s are present in the formula, the plurality of $X^{22}$'s may be the same or different from each other,
provided that the compound represented by Formula (2) has no polymerizable group and has a molecular weight of less than 5,000.

**6.** The composition according to claim 5,
wherein the divalent linking groups represented by $Z^{21}$ and $Z^{22}$ each independently represent -O-, -S-, $-OCH_2-$, $-CH_2CH_2-$, -CO-, -CS-, -COO-, -CSO-, -CSS-, -CO-S-, -O-CO-O-, -CO-CO-, -CO-NH-, $-SCH_2-$, $-CF_2O-$, $-CF_2S-$, $-COO-CH_2CH_2-$, $-OCO-CH_2CH_2-$, $-COO-CH_2-$, $-OCO-CH_2-$, -COO-NH-, -OCO-NH-, -N=N-, -CH=N-N=CH-, -CH=N-, -CF=CF-, -C≡C-, -C=C-C=C-, $-OCH_2CH_2O-$, $-SCH_2CH_2S-$, -O-CO-CO-O-, or $-O-CH_2-O-$.

**7.** The composition according to claim 1 or 2,

wherein the polymerizable liquid crystal compound includes a compound represented by Formula (3),

$$P^{31}-L^{31}\left(A^{31}-Z^{31}\right)_{n31}A^{32}-L^{32}-P^{32} \qquad (3)$$

$P^{31}$ and $P^{32}$ each independently represent a hydrogen atom or a substituent, where at least one of $P^{31}$ or $P^{32}$ represents a polymerizable group,
n31 represents an integer of 1 to 10,
$L^{31}$ and $L^{32}$ each independently represent a single bond or an alkylene group in which at least one $-CH_2-$ may be replaced with -NH-, -O-, -S-, -CO-, -SO-, or $-SO_2-$,
$Z^{31}$ represents a single bond or a divalent linking group,
$A^{31}$ and $A^{32}$ each independently represent a divalent aromatic ring or a divalent aliphatic ring, which may have a substituent,
in a case where a plurality of $A^{31}$'s are present in the formula, the plurality of $A^{31}$'s may be the same or different from each other, and in a case where a plurality of $Z^{31}$'s are present in the formula, the plurality of $Z^{31}$'s may be the same or different from each other.

**8.** The composition according to claim 3,
wherein k in Formula (C-1) represents an integer of 3 to 10.

**9.** The composition according to claim 5,

wherein k in Formula (C-1) represents an integer of 3 to 10.

**10.** An optically anisotropic layer formed of the composition according to claim 1 or 2.

**11.** A cured film formed of the composition according to claim 1 or 2.

**12.** A diffraction element comprising:

an optically anisotropic layer formed of the composition according to claim 1 or 2,
wherein the optically anisotropic layer has a liquid crystal alignment pattern in which an orientation of an optical axis derived from a liquid crystal compound changes while continuously rotating in at least one in-plane direction.

FIG. 1

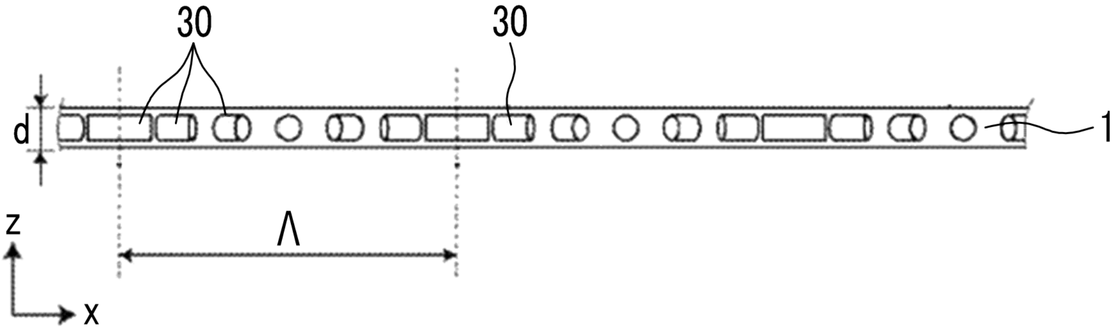


FIG. 2

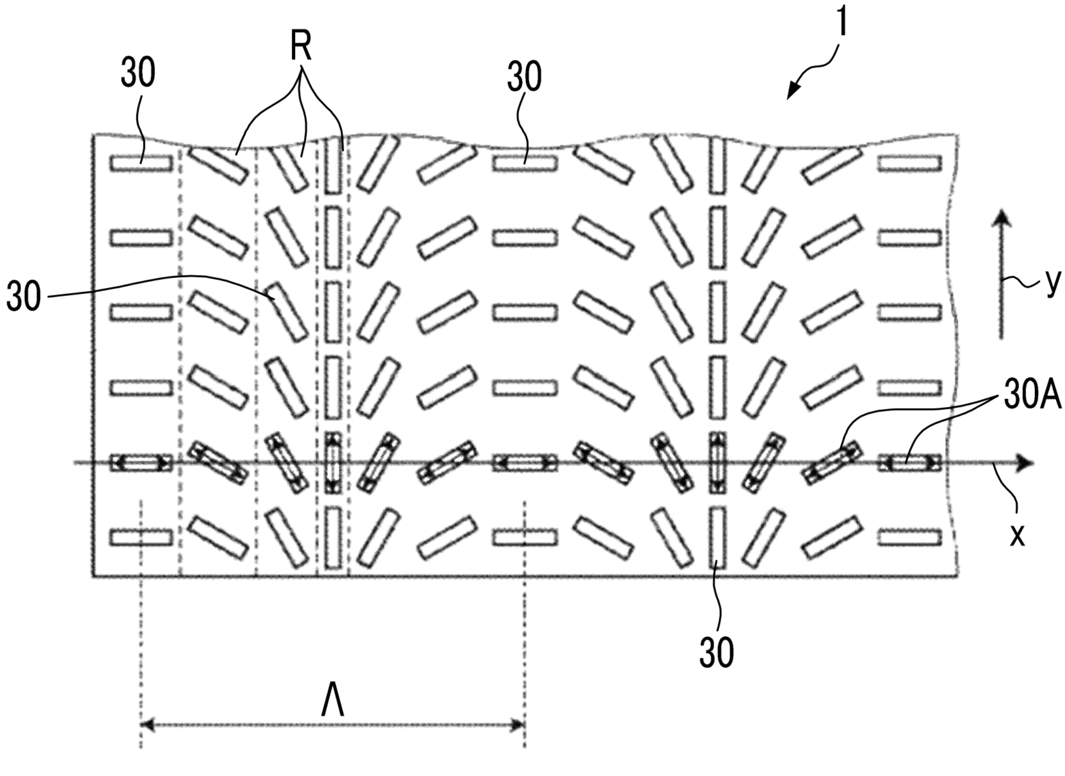

FIG. 3

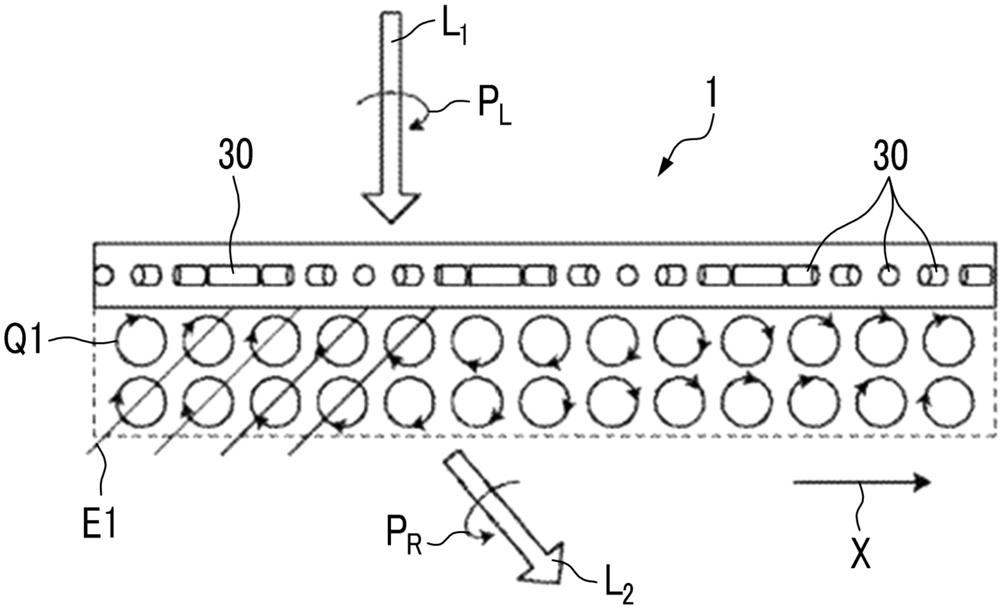


FIG. 4

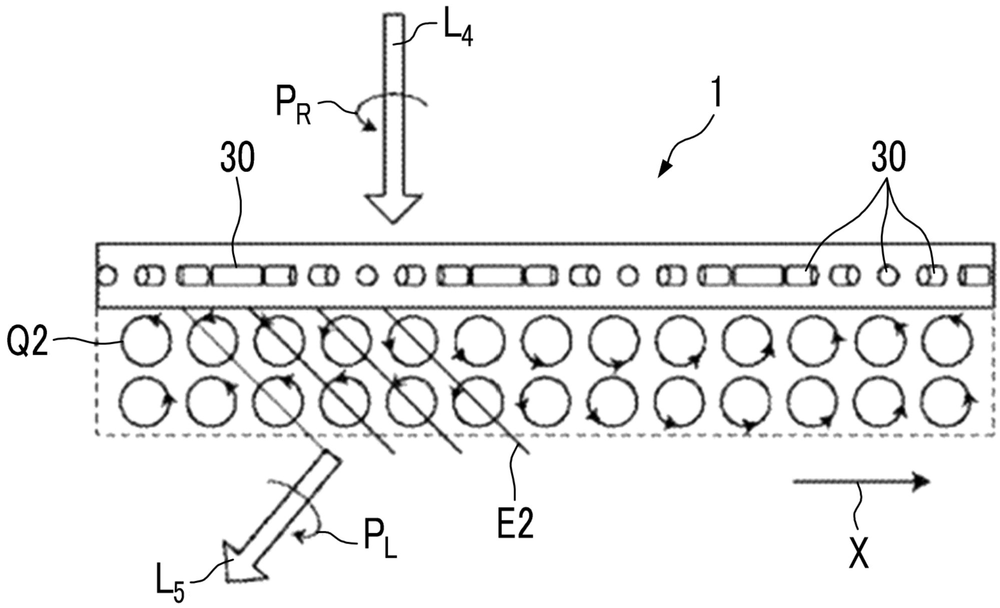

FIG. 5

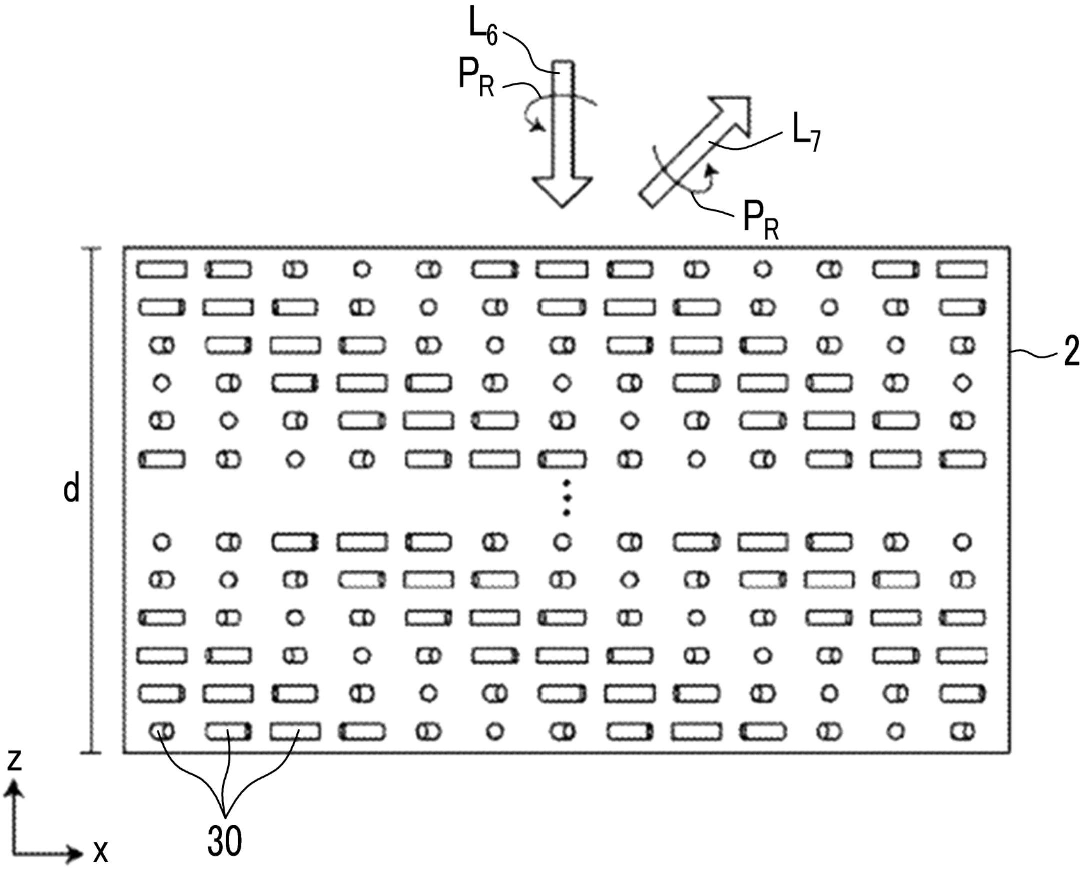


FIG. 6

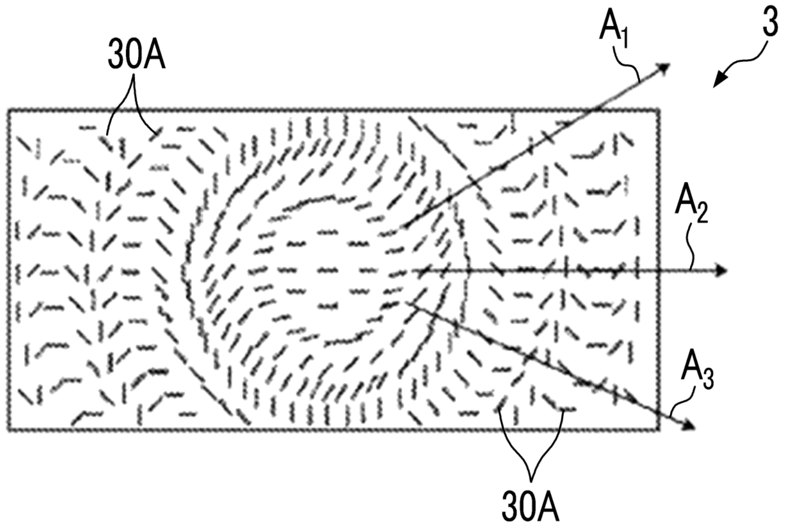

**INTERNATIONAL SEARCH REPORT**

International application No.
**PCT/JP2024/024960**

**A. CLASSIFICATION OF SUBJECT MATTER**

***C08F 2/44***(2006.01)i; ***C08L 101/02***(2006.01)i; ***G02B 5/18***(2006.01)i; ***G02B 5/30***(2006.01)i; ***G02B 5/32***(2006.01)i
FI: C08F2/44 B; C08L101/02; G02B5/18; G02B5/30; G02B5/32

According to International Patent Classification (IPC) or to both national classification and IPC

**B. FIELDS SEARCHED**

Minimum documentation searched (classification system followed by classification symbols)

C08F2/44; C08L101/02; G02B5/18; G02B5/30; G02B5/32

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>A | JP 10-010318 A (SUMITOMO CHEMICAL CO., LTD.) 16 January 1998 (1998-01-16)<br>claims 1, 4-9, paragraphs [0043]-[0051], examples 1-2 | 1, 10-12<br>2-9 |
| X<br>A | US 2020/0181494 A1 (SHENZHEN GUOHUA OPTOELECTRONICS TECH CO., LTD.) 11 June 2020 (2020-06-11)<br>claims 1-10, paragraphs [0001]-[0035], fig. 1A, fig. 3A | 1, 7, 10-12<br>2-6, 8-9 |

☐ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **13 September 2024** | **24 September 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

**INTERNATIONAL SEARCH REPORT**
**Information on patent family members**

International application No.
**PCT/JP2024/024960**

| Patent document cited in search report | Publication date (day/month/year) | Patent family member(s) | Publication date (day/month/year) |
|---|---|---|---|
| JP 10-010318 A | 16 January 1998 | (Family: none) | |
| US 2020/0181494 A1 | 11 June 2020 | CN 110168050 A | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 6617529 B
- WO 2014010325 A
- US 4683327 A
- US 5622648 A
- US 5770107 A
- WO 95022586 A
- WO 95024455 A
- WO 97000600 A
- WO 98023580 A
- WO 98052905 A
- JP 1272551 A
- JP H1272551 A
- JP 6016616 A
- JP H6016616 A
- JP 7110469 A
- JP H7110469 A
- JP 11080081 A
- JP H11080081 A
- JP 2001328973 A
- JP 1999513019 A
- JP H11513019 A
- JP 2007279688 A
- JP 57165480 A
- JP 9133810 A
- JP H9133810 A
- JP 11293252 A
- JP H11293252 A
- JP 2007108732 A
- JP 2010244038 A
- JP 2009102245 A
- JP 4655348 B
- JP 4524827 B
- JP 4720200 B
- JP 2004091380 A
- JP 3972430 B
- JP 4517416 B
- JP 2002128742 A
- JP 4810750 B
- JP 5888544 B
- JP 2014019654 A
- JP 6241654 B
- JP 6372060 B
- JP 6323144 B
- JP 2005015406 A
- JP 2007230968 A
- JP 6761484 B
- JP 6681992 B
- WO 19182129 A
- CN 01134217 A
- KR 101069555 B
- KR 101690767 B
- CN 20120229730 A
- JP 4053782 B
- JP 2009249406 A
- JP 4121075 B
- JP 2005528416 A
- US 6514578 B
- WO 06006819 A
- JP 2011184417 A
- JP 2013095685 A
- JP 2013103897 A
- JP 2002088008 A
- JP 2002226412 A
- JP 2012167214 A
- JP 2012167068 A
- JP 2018084511 A
- JP 2003055317 A
- JP 2001329264 A
- JP 2002030016 A
- JP 2003055664 A
- JP 2018070889 A
- CN 102557896 B
- US 2015369982 A
- JP 2020105264 A
- JP 2014224237 A
- JP 2012051862 A
- JP 2010106274 A
- JP 2005179557 A
- JP 2005035985 A
- JP 2002012579 A
- JP 2002003845 A
- JP 2001233837 A
- JP 2019532167 A
- JP 2016509247 A
- JP 2010503733 A
- JP 2003533557 A
- WO 19098115 A
- WO 18034216 A
- WO 18221236 A
- WO 18123396 A
- WO 18003482 A
- WO 17086143 A
- WO 14192655 A
- WO 13161669 A
- WO 09104468 A
- JP 2002080478 A
- JP 2002080851 A
- JP 2002179668 A

- JP 2002179669 A
- JP 2002179670 A
- JP 2002179681 A
- JP 2002179682 A
- JP 2002338575 A
- JP 2002338668 A
- JP 2003313189 A
- JP 2003313292 A
- JP 2014089476 A
- JP 9152509 A
- JP H9152509 A
- JP 2005097377 A
- JP 2005099228 A
- JP 2005128503 A
- JP 2006285197 A
- JP 2007076839 A
- JP 2007138138 A
- JP 2007094071 A
- JP 2007121721 A
- JP 2007140465 A
- JP 2007156439 A
- JP 2007133184 A
- JP 2009109831 A
- JP 3883848 B
- JP 4151746 B
- JP 2002229039 A
- JP 2002265541 A
- JP 2002317013 A
- JP 4205195 B
- JP 4205198 B
- JP 2003520878 A
- JP 2004529220 A
- JP 4162850 B
- JP 9118717 A
- JP H9118717 A
- JP 10506420 A
- JP H10506420 A
- JP 2003505561 A
- WO 2010150748 A
- JP 2013177561 A
- JP 2014012823 A
- WO 2020022496 A
- JP 2022036995 A

**Non-patent literature cited in the description**

- *Makromol. Chem.*, 1989, vol. 190, 2255
- *Advanced Materials*, 1993, vol. 5, 107